(19) Europäisches Patentamt
European Patent Office
Office européen des brevets

(11) **EP 4 657 283 A1**

(12) **EUROPEAN PATENT APPLICATION**

(43) Date of publication:
03.12.2025 Bulletin 2025/49

(21) Application number: 25179904.5

(22) Date of filing: 30.05.2025

(51) International Patent Classification (IPC):
*G06F 16/9035* (2019.01)

(52) Cooperative Patent Classification (CPC):
G06F 16/9035

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.05.2024 US 202418678748

(71) Applicant: Pinterest, Inc.
San Francisco, CA 94107 (US)

(72) Inventor: Armando, Jesus
Toronto (CA)

(74) Representative: Müller-Boré & Partner
Patentanwälte PartG mbB
Friedenheimer Brücke 21
80639 München (DE)

(54) **RECOMMENDING CONTENT ITEMS BASED ON LONG-TERM OBJECTIVE**

(57) Described are systems and methods for implementing a recommendation system that is configured and/or optimized to determine recommended content items based on a long-term objective. The exemplary recommendation system may be generated based on a mapping between content items and the long-term objective. The mapping between the content items and the long-term objective may be determined based on mappings utilizing various interim metrics, which may be determined using trained models configured to predict a respective target variable based on respective inputs. The mapping may also be generated using alignment scores and/or a large language model.

FIG. 1

EP 4 657 283 A1

**Description**

CROSS-REFERENCE TO PRIOR APPLICATIONS

This application is a continuation-in-part application of and claims benefit to U.S. Patent Application No. 18/499,984, filed on November 1, 2023 and entitled "Identifying Image Based Content Items Using a Large Language Model," which is hereby incorporated by reference herein in its entirety.

BACKGROUND

Search systems and recommender systems are both online services that recommend content to a computer user (or, more simply, a "user") in response to a query. Search systems respond to a query with a focused set of results that are viewed as "answers" to a query. In contrast, recommender systems are not necessarily tasked with responding with "answers," i.e., content that is specifically relating to the query. Instead, recommender systems respond to queries with recommended content, i.e., content calculated to lead a requesting user to discovering new content. Roughly, search systems provide a focused scope to a specific topic while recommender systems provide a broadened scope. For both types of systems, however, it is quite common for the requesting user to submit a text-based query and, in response, expect non-text content items.

There are online hosting services whose primary focus is to maintain non-textual content items for its users/subscribers. These content items are maintained as a corpus of content items and often become quite large. Indeed, at least one existing hosting service maintains a corpus that includes over a billion content items that have been posted to the hosting service by its users/subscribers. However, determining the content items from the billions of content items that should be presented or recommended to a user is often difficult. Further, traditional content items are typically configured to determine and recommend content items to a user/subscriber to encourage immediate interaction, by the user/subscriber, with the recommended content items.

BRIEF DESCRIPTION OF THE DRAWINGS

The foregoing aspects and many of the attendant advantages of the disclosed subject matter will become more readily appreciated as they are better understood by reference to the following description when taken in conjunction with the following drawings, wherein:

FIG. 1 is a block diagram illustrating an exemplary networked environment suitable for implementing aspects of the disclosed subject matter.

FIG. 2 is a block diagram illustrating an exemplary recommendation system, according to exemplary embodiments of the present disclosure.

FIGS. 3A and 3B are a transition diagram illustrating the determination and presentation of a sequence of recommended content items, in accordance with aspects of the disclosed subject matter.

FIGS. 4A and 4B are a transition diagram illustrating the determination and presentation of a plurality of recommended content items, in accordance with aspects of the disclosed subject matter.

FIG. 5 is a block diagram of system components that may be utilized to determine a sequence of recommended content items, in accordance with aspects of the disclosed subject matter.

FIG. 6 is an example recommended content items and sequence process, in accordance with aspects of the disclosed subject matter.

FIG. 7 is a block diagram illustrating the generation of a sequence of recommended content items, in accordance with aspects of the disclosed subject matter.

FIG. 8 is a block diagram of system components that may be utilized to determine a plurality of recommended content items, in accordance with aspects of the disclosed subject matter.

FIG. 9 is an example recommended content item(s) process, in accordance with aspects of the disclosed subject matter.

FIG. 10 is an example session caption process, in accordance with aspects of the disclosed subject matter.

FIG. 11 is a block diagram illustrating the generation of a plurality of recommended content items, in accordance with aspects of the disclosed subject matter.

FIG. 12 is a block diagram of a Large Language Model input, generated in accordance with aspects of the disclosed subject matter.

FIG. 13 is a block diagram of an example Large Language Model output that may be generated in accordance with aspects of the disclosed subject matter.

FIG. 14 is an illustration of a presentation of a plurality of recommended content items, in accordance with aspects of the disclosed subject matter.

FIG. 15A is an illustration of exemplary mappings, according to exemplary embodiments of the present disclosure.

FIGS. 15B and 15C are illustrations of determining attributions for a subscriber across multiple subscriber sessions, according to exemplary embodiments of the present disclosure.

FIG. 16 is an illustration of exemplary subscriber states, according to exemplary embodiments of the present disclosure.

FIG. 17 is a block diagram illustrating an exemplary recommendation system, according to exemplary embodiments of the present disclosure.

FIGS. 18A and 18B are block diagrams illustrating determination of alignment scores, according to exemplary embodiments of the present disclosure.

FIG. 19 is a flow diagram of an exemplary content item recommendation process, according to exemplary embodiments of the present disclosure.

FIG. 20A is a flow diagram of an exemplary attribution determination process, according to exemplary embodiments of the present disclosure.

FIG. 20B is a flow diagram of an exemplary attribution determination process, according to exemplary embodiments of the present disclosure.

FIG. 21 is a pictorial diagram illustrating the mapping of text embedding vectors into a text content embedding space and the mapping of image embedding vectors into an image content embedding space, in accordance with aspects of the disclosed subject matter.

FIG. 22 is a pictorial diagram illustrating the mapping of both text embedding vectors and image embedding vectors into a single embedding space, in accordance with aspects of the disclosed subject matter.

FIG. 23 is a flow diagram illustrating an exemplary process for returning one or more content items to a subscriber in response to a text-based request, in accordance with aspects of the disclosed subject matter.

FIG. 24 is a block diagram illustrating an exemplary content item graph of content items from a corpus of content items, configured according to aspects of the disclosed subject matter.

FIG. 25 is a flow diagram illustrating an exemplary process for determining a set of content items for a representative embedding vector, in accordance with aspects of the disclosed subject matter.

FIG. 26 is a flow diagram illustrating an exemplary process for training a machine learning model to generate embedding vectors into a content item embedding space for a text-based request, in accordance with aspects of the disclosed subject matter.

FIGS. 27A and 27B demonstrate flow diagrams illustrating various exemplary processes for generating training data for training a machine learning model to generate an embedding vector into a content item space for a text-based request, in accordance with aspects of the disclosed subject matter.

FIG. 28 is a flow diagram illustrating an exemplary, generalized process for training a machine learning model to generate content item embedding vectors for text-based requests, in accordance with aspects of the disclosed subject matter.

FIG. 29 is a block diagram illustrating an exemplary computer-readable medium encoded with instructions for responding to a subscriber's request for content items from a corpus of content items, formed in accordance with aspects of the disclosed subject matter.

FIG. 30 is a block diagram of a computing system suitably configured to implement aspects of a hosting service, including responding to a subscriber's request for content items from a corpus of content items, in accordance with aspects of the disclosed subject matter.

DETAILED DESCRIPTION

Disclosed are systems and methods that determine recommended non-text content items (e.g., images) based on one or more selected or provided content items, referred to herein as session content items. As discussed further below, the disclosed implementations may generate a content item caption for each session content item and/or generate a session caption that is descriptive of the group of session content items. The caption(s) may then be processed by a Large Language Model ("LLM") which will generate and output an LLM output that includes a narrative description of the session content items. The narrative description may then be used as a text-based request into a query service that identifies and returns one or more recommended content items. Alternatively, the LLM may provide, as an LLM output, a list of content item identifiers that the LLM selects from a set of provided LLM content item identifiers that may also have corresponding captions, as recommended content items that are responsive to the session content items. The recommended content items may then be provided for presentation to a user, utilized to generate a category, vertical, etc.

As discussed further below, in some implementations, the query service, in response to a text-based request, may process the text-based request into a set of word pieces from terms of the received request. In some implementations, at least one term of the received request results in at least two word pieces. Embedding vectors that project source content (in this case word pieces) into a content item embedding space are generated for each word piece of the set of word pieces for the received request, and the embedding vectors are combined into a representative embedding vector for the request. A set of content items of a corpus of content items are identified according to the representative embedding vector as projected into the content item embedding space. At least some of the content items from the set of content items are returned as content items in response to the request from the subscriber.

Further, while the present disclosure describes certain implementations for utilizing and/or determining embedding vectors for content items and/or subscribers of an online service and recommending content items to subscribers of the online service, exemplary embodiments of the present disclosure contemplate utilizing embedding vectors for subscribers of the online service that are generated using other methods, systems, and implementations and recommending content items to subscribers of the online service that employ other methods, systems, and implementations. For example, exemplary embodiments of the present disclosure may recommend content items and/or employ embedding vectors that are generated as described in U.S. Patent Application No. 16/273,939 and/or U.S. Patent Application No. 18/166,415, which are both hereby incorporated by reference in their entireties. Accordingly, the embedding vectors utilized by implementations of the present disclosure may encode visual, semantic, and other features of the content items they represent.

In further implementations of the disclosed subject matter, recommended content items may be determined based on a long-term objective. For example, a long-term objective, such as a cumulative engagement, may be determined and/or defined, and a reverse inference learning technique may be employed to train and/or optimize a recommendation system to determine recommended content items so as to encourage the long-term objective. According to certain aspects, one or more mappings that correlate content items to the long-term objective may be generated, and the mappings may be employed to optimize and/or configure the recommendation system to determine recommended content items in view of the long-term objective. In this regard, one or more interim mappings may be used to map content items to the long-term objective. For example, a first mapping may map parameters associated with an aggregation of sessions to the long-term objective, a second mapping may map features within an individual session to the parameters associated with the aggregation of sessions, and a third mapping may map individual content items to the features within the individual sessions. In certain implementations, the mappings may be based on attributions that are determined in connection with the content items, which may reflect which content items drive subscribers to the long-term objective. For example, alignment scores and/or attention scores may be generated for the content items that represent a relevance and/or influence that each content item may have in driving or motivating subscribers towards the long-term objective.

Further, according to other aspects of the present disclosure, the state of the subscribers within the online service ecosystem may be determined and considered in determining the recommended content items and/or the one or more mappings from the individual content items to the long-term objective. For example, probabilities associated with subscriber state transitions may be determined and the transition probabilities for the various subscriber states may be utilized in determining the recommended content items. The exemplary recommendation system provided according to exemplary embodiments of the present disclosure may further consider the subscriber state, along with the various transition probabilities, in determining the one or more recommended content items based on the long-term objective to return and/or present to the subscriber. Thus, unlike traditional recommendation systems, which are typically configured to determine content recommendations to optimize immediate interactions with the recommended content items, the content items recommended by the exemplary recommendation system are determined based on the long-term objective to encourage the long-term behavior associated with the objective, and not necessarily provoke an immediate interaction with the recommended content items.

By way of definition, and as those skilled in the art will appreciate, an "embedding vector" is an array of values that reflect aspects and features of source/input content. For example, an embedding vector of an image will include an array of values describing aspects and features of that image. An executable model or process, referred to as an embedding vector generator, generates an embedding vector for input content. Indeed, the embedding vector generator generates the same learned features to identify and extract information of each instance of input content. This processing leads to the generation of an embedding vector for an instance of input content. As those skilled in the art will appreciate, embedding vectors generated by the same embedding vector generator based on the expected input content are comparable, such that a greater similarity between two embedding vectors indicates a greater similarity between the source items - at least as determined by the embedding vector generator. By way of illustration and not limitation, an embedding vector may comprise 128 elements, each element represented by a 32-bit or 64-bit floating point value, each value representative of some aspect (or multiple aspects) of the input content. In other implementations, the embedding vector may have additional or fewer elements and each element may have additional or fewer floating-point values, integer values, and/or binary values.

As those skilled in the art will appreciate, embedding vectors are comparable across the same element within the embedding vectors. For example, a first element of a first embedding vector can be compared to a first element of a second embedding vector generated by the same embedding vector generator on distinct input items. This type of comparison is typically viewed as a determination of similarity for that particular element between the two embedding vectors. On the other hand, the first element of a first embedding vector cannot typically be compared to the second element of a second embedding vector because the embedding vector generator generates the values of the different elements based on distinct and usually unique aspects and features of input items.

Regarding embedding vector generators, typically an embedding vector generator accepts input content (e.g., an image, video, or multi-item content), processes the input content through various levels of convolution, and produces an array of values that specifically reflect on the input data, i.e., an embedding vector. Due to the nature of a trained embedding vector generator (i.e., the convolutions that include transformations, aggregations, subtractions, extrapolations, normalizations, etc.), the contents or values of the resulting embedding vectors are often meaningless to personal examination. However, collectively, the elements of an embedding vector can be used to project or map the corresponding input content into an embedding space as defined by the embedding vectors.

As indicated above, two embedding vectors (generated from the same content type by the same embedding vector generator) may be compared for similarity as projected within the corresponding embedding space. The closer that two embedding vectors are located within the embedding space, the more similar the input content from which the embedding vectors were generated.

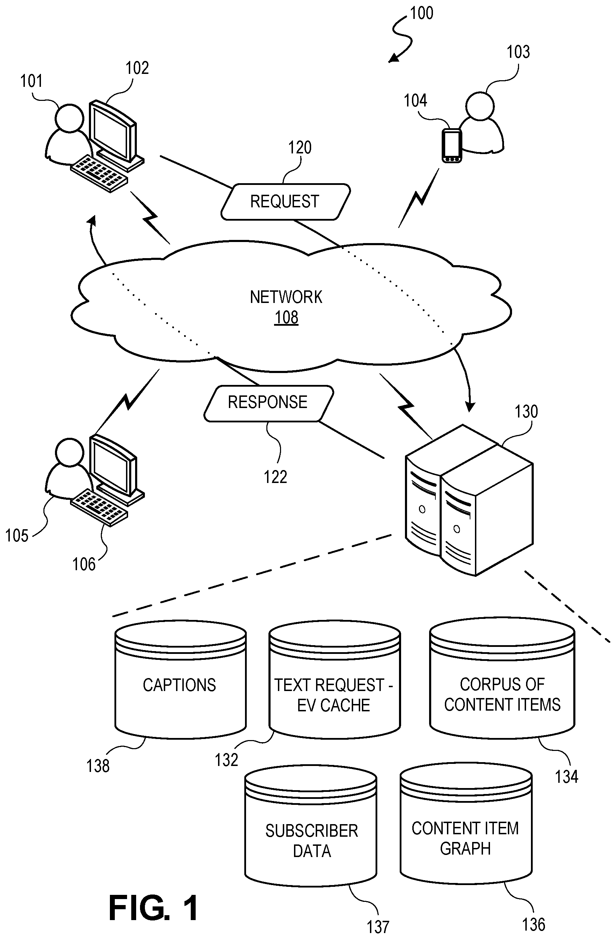

FIG. 1 is a block diagram illustrating an exemplary networked environment 100 suitable for implementing aspects of the disclosed subject matter, particularly in regard to providing response 122 of one or more content items to a subscriber of hosting service 130 to request 120.

Network 108 is a computer network, also commonly referred to as a data network. As those skilled in the art will appreciate, network 108 is fundamentally a telecommunication network over which computers, computing devices, such as computing devices 102, 104, and 106, and other network-enabled devices and/or services can electronically communicate, including exchanging information and data among the computers, devices, and services. In computer networks, networked computing devices are viewed as nodes of the network. Thus, in the exemplary networked environment 100, computing devices 102, 104, and 106, as well as hosting service 130, are nodes of network 108.

In communicating with other devices and/or services over network 108, connections between other devices and/or services are conducted using either cable media (e.g., physical connections that may include electrical and/or optical communication lines), wireless media (e.g., wireless connections such as 802.11x, Bluetooth, and/or infrared connections), or some combination of both. While a well-known computer network is the Internet, the disclosed subject matter is not limited to the Internet. Indeed, elements of the disclosed subject matter may be suitably and satisfactorily implemented on wide area networks, local area networks, enterprise networks, and the like.

As illustrated in exemplary network environment 100 of FIG. 1, a subscriber, such as computer user 101, of hosting service 130 submits request 120 to hosting service 130 in anticipation of hosting service 130 returning one or more content items as response 122 to request 120. According to aspects of the disclosed subject matter, hosting service 130 processes received request 120 and identifies one or more content items from corpus of content items 134 to identify the content items of response 122 that is returned to the subscriber.

As indicated above, hosting service 130 is an online service that, among other things, maintains corpus of content items 134. The content items of this corpus are typically obtained from one or more subscribers and/or other providers (e.g., businesses) through a posting service of the hosting service (also called a hosting system), a recommender service that provides recommended content (content items) to a subscriber, and/or a search service that responds to a request for related/relevant content items to a request. Indeed, hosting service 130 is a network-accessible service that typically provides application programming interfaces (APIs), processes, and functions to its users/subscribers, including those described herein.

According to aspects of the disclosed subject matter, computer users, such as computer users 101, 103, and 105, may be subscribers of the various services of hosting service 130, i.e., making use of one or more features/functions/-services of hosting service 130. Indeed, according to aspects of the disclosed subject matter, a subscriber is a computer user that takes advantage of services available for an online service, such as hosting service 130. In exemplary networked environment 100 of FIG. 1, computer user 101 is a subscriber of hosting service 130.

In accordance with aspects of the disclosed subject matter, a subscriber requesting content from hosting service 130, such as computer user 101, submits request 120 to hosting service 130. Request 120 may be a text-based request, such as a text-based search query, a selection of multiple content items from corpus of content items 134 that are submitted as the request, one or more content items uploaded or provided by the user to hosting service 130 as request 120, etc. Request 120 may be an explicit request, such as a text-based search request or a specific search request in which one or more content items are selected or provided by a user. In other examples, the request may be implicit. For example, as a user browses content items of hosting service 130, hosting service 130 may maintain identifiers of the browsed content items and utilize those content items as the basis for a request. As another example, if a user selected to view or close-up a content item from corpus of content items 134, that content item may be utilized as a request to determine other content items that are similar to the viewed content item. According to other aspects, request 120 may be included as part of and/or in connection with a request to access a homepage and/or a home feed, an indication that recommended content items are to be pushed to a subscriber, and the like. Still further, the disclosed implementations may be utilized to determine content items without an explicit or implicit request from a user. For example, the disclosed implementations may be used to determine content items that are like one or more other content items (e.g., have a similar style, fashion, etc.). Accordingly, it will be appreciated that the disclosed implementations are operable with any type or text-based request or content item-based request regardless of whether it is a request from a user (explicit or implicit) or otherwise.

In response to a request 120 for content, hosting service 130 draws from corpus of content items 134, identifying one or more content items that satisfy the request. As will be set forth in greater detail below, and according to aspects of the disclosed subject matter, if request 120 is a text-based request, a set of word pieces is generated for the terms of request 120. If request 120 includes one or more content items, those content item(s) may be processed, as discussed further herein, to generate a caption for the content item(s) (either individually or collectively) and that caption(s) may then be processed to a text-based request from which word pieces are generated for the request. Embedding vectors for the word pieces are determined and combined to form a representative embedding vector for the request. Using the representative embedding vector, content items from the corpus are identified.

Alternatively, or in addition thereto, rather than determining word pieces for content items of request 120, the content item(s) of request 120 and at least some of the content items from corpus of content items 134, referred to herein as a reduced corpus, may be processed to determine captions of those content items, and those captions further processed, for example, by a Large Language Model ("LLM"), to determine content items from the reduced corpus that correspond to the content item(s) of the request. After identifying the content items, hosting service 130 returns the one or more content items to the requesting subscriber as response 122 to request 120 and/or handles them in accordance with the intent of request 120 - e.g., creates a taste preference guide.

According to another implementation of the present disclosure, hosting service 130 may identify content items from corpus of content items 134 based on a long-term objective. As is described in greater detail herein, in determining recommended content items in view of the long-term objective, implementations of the present disclosure seek to determine an attribution in connection with the content items, e.g., a measure of which content items drive the long-term objective. The attribution may be used to generate a mapping between one or more of the content items of corpus of content items 134 and the long-term objective, and the recommended content items may be determined based at least in part on the mapping. In exemplary implementations, the mapping may be generated utilizing one or more interim mappings that correlate the content items to the long-term objective. For example, alignment scores and/or attention scores may be determined for the content items that represent a relevance and/or influence that each content item may have in driving the long-term objective over a defined time period.

As shown in FIG. 1, hosting service 130 includes a data store storing corpus of content items 134, a data store that stores a text request-embedding vector cache 132 that stores a cache of text queries with corresponding embedding vectors, a data store that stores subscriber data, such as subscriber history information, subscriber engagements/interactions with content items, subscriber activity over multiple sessions, subscriber demographic information, subscriber taste information, subscriber interest/likes/dislikes information, etc., and a data store that stores information of content item graph 136 of the content items of corpus of content items 134, each of which may be used in identifying content items as response 122 to request 120 from subscriber/computer user 101. In some implementations, hosting service 130 may also include a data store that stores captions 138 for each content item of the corpus of content items 134, as may be determined in accordance with the disclosed implementations. Hosting service 130 may also include additional data stores that store other information, such as subscriber information, subscriber history information, and the like. Of course, this particular arrangement of hosting service 130 is a logical configuration, not necessarily an actual configuration. Indeed, there may be multiple data stores that collectively store corpus of content items 134, text request-embedding vector cache 132, content item graph 136, subscriber data 137, and/or captions 138. Additionally, and/or alternatively, these data items may be hosted on one or more computing devices accessible to hosting service 130 via network 108. Accordingly, illustrated networked environment 100's arrangement of computers and computing devices, including computers and computing devices 102, 104, and 106, and hosting service 130 with its data store data sources should be viewed as illustrative and not limiting.

As discussed herein, one or more services, whether internal to the hosting service or external and accessed by the hosting service, may process one or more content items to determine captions for each of the one or more content items and/or determine a caption for a plurality of content items. For example, an image encoder and language model, such as BLIP-2, FLAMINGO80B, VQAv2, etc., may be used to generate captions for each of a plurality of content items and/or a group of content items (or the captions for each content item combined to form a single caption for a plurality of content items). A caption, as used herein, is a short descriptive or explanatory text, usually one or two sentences long, that describes or explains a content item or a plurality of content items.

Likewise, as discussed further herein, a caption for a content item for each of a plurality of content items, or a caption for a group of content items, may be processed by an LLM to determine descriptors and/or a text request for the content item or plurality of content items of the request. Alternatively, in some implementations, an LLM input may be generated that includes both captions for one or more content items of a request, captions for one or more content items of a reduced corpus, and instructions that the LLM determine one or more content items as recommended content items based on the captions of the one or more content items of the request.

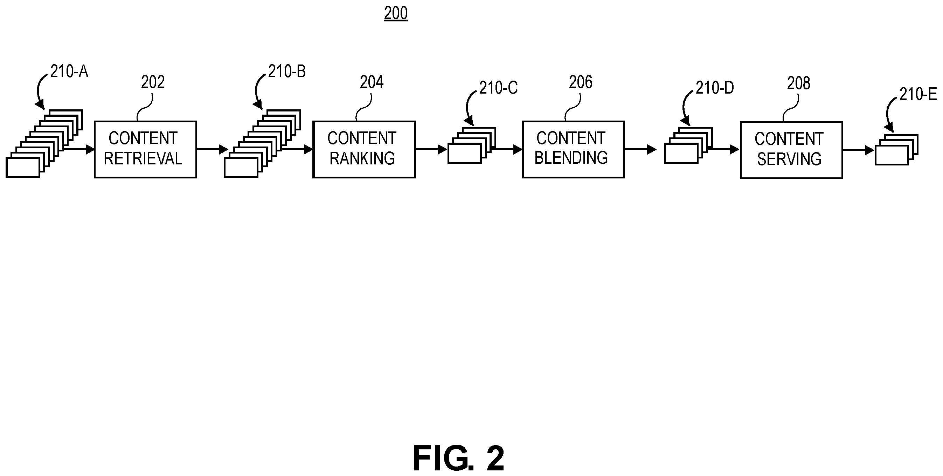

FIG. 2 is a block diagram illustrating an exemplary recommendation system 200, according to exemplary embodiments of the present disclosure.

As shown in FIG. 2, exemplary recommendation system 200 may include a multi-stage recommendation system that is configured to determine recommended content items in connection with a recommendation service implemented in connection with an online service, such as a social networking service, social media platform, online search service, content recommendation services, and the like. Content recommendation system 200 may include a multi-stage recommendation system, which may include one or more machine learning models configured to identify recommended content from a corpus of content items in response to a request for content items. According to aspects of the present disclosure, content recommendation system 200 may determine and return content items in response to a request for content items (e.g., a text-based query, an image query, a request to access a homepage and/or home feed, a request for recommended content items, a determination to push content items to a subscriber, and the like).

Each stage of recommendation system 200 may be configured to successively filter and rank content items obtained from a corpus of content items, so as to reduce and narrow down the number of content items from the corpus of content items in determining one or more content items to return in response to a request for content items. This may improve efficiency in the determination of the one or more content items. **In** the exemplary implementation shown in FIG. 2, recommendation system 200 may include three stages: a first stage may include content retrieval stage 202, a second stage may include content ranking stage 204, a third stage may include content blending stage 206, and a fourth stage may include content serving stage 208. Each stage may include various probabilistic models, rule-based models, machine learning models, and the like to filter and/or rank content at each respective stage. Additionally, although the illustrated implementation shows a multi-stage recommendation system having four stages, in other implementations, recommendation system 200 may include any number of stages (e.g., a single stage, two stages, three stages, five stages, or any other number of stages) in determining and serving recommended content items.

As shown in FIG. 2, corpus of content items 210-A may be obtained and/or provided to content retrieval stage 202 in response to a request for content items. Accordingly, content retrieval stage 202 may determine and/or select a subset of content items 210-B from corpus of content items 210-A and provide content items 210-B to content ranking stage 204. For example, content retrieval stage 202 may employ one or more machine learning models, probabilistic models, rule-based models, and the like to select content items 210-B from corpus of content items 210-A based on certain content criteria. The content criteria may be determined based on a long-term objective, the request for content items, information associated with the subscriber associated with the request for content items, and the like. Accordingly, content items 210-B may be a subset of content items determined from corpus of content items 210-A based on the content criteria and features, parameters, and/or characteristics associated with corpus of content items 210-A.

Content items 210-B may then be provided to content ranking stage 204, which may employ one or more machine learning models to further refine and/or rank the content items in identifying recommended content to provide to a subscriber. According to exemplary implementations of the present disclosure, content ranking stage 204 may process content items 210-B based on the long-term objective, the request for content items, information associated with the subscriber associated with the request for content items, and the like to rank content items 210-B. According to certain aspects of the present disclosure, a relevancy score may also be generated for content items 210-B based on the long-term objective, the request for content items, information associated with the subscriber associated with the request for content items, and the like. Accordingly, the highest ranked content items from content items 210-B and/or content items 210-B having a ranking above a threshold ranking may be identified as content items 210-C, which may be a subset of content items 210-B, and may be returned and provided by content ranking stage 204 to content blending stage 206.

Content items 210-C may then be provided to content blending stage 206, which may employ one or more machine learning models to further refine and/or rank the content items in identifying recommended content to provide to a subscriber. According to exemplary implementations of the present disclosure, content blending stage 206 may apply certain parameters and/or policies to process content items 210-C based on the long-term objective, the request for content items, information associated with the subscriber associated with the request for content items, features of content items 210-C, and the like to determine an order and/or priority for content items 210-C. According to certain aspects of the present disclosure, content blending stage 206 may be learned to predict optimal parameters and/or policies that are optimized for a defined reward. Accordingly, the highest prioritized and/or ordered content items from content items 210-C may be identified as content items 210-D, which may be a subset of content items 210-C, and may be provided by content blending stage 206 to content serving stage 208.

In turn, content items 210-D may then be provided to content serving stage 208. Content serving stage 208 may employ one or more machine learning models, probabilistic models, rule-based models, and the like to make a further determination as to which content items may be provided to the subscriber in response to the request for content items. As shown in FIG. 2, content items 210-E may have been identified, by content serving stage 208, as a subset of content items 210-D to be provided to the user in response to the request for content items. Optionally, content serving stage 208 may also determine display parameters (e.g., position, duration, etc.) associated with the provided content items.

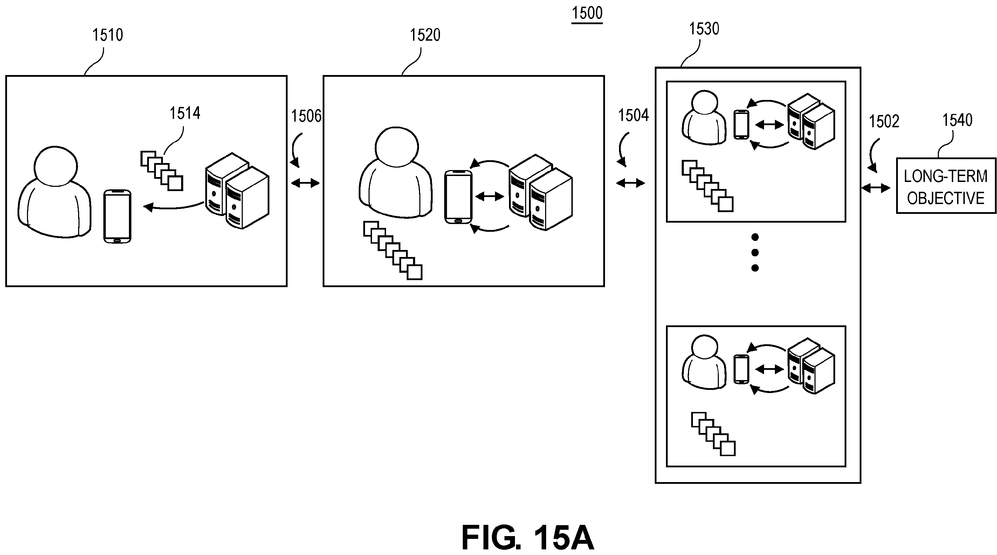

According to certain exemplary implementations, recommendation system 200 may be optimized and/or configured to determine content item recommendations (e.g., content items 210-E) in view of the long-term objective, as described herein in connection with at least FIGS. 15A-20B. For example, one or more stages of recommendation system 200 may be trained and/or fine-tuned in view of the mappings from the content items to the long-term objective such that the content items to be recommended are selected to promote the long-term objective. Accordingly, one or more of content items 210-B, 210-C, 210-D, and/or 210E may be selected in view of the long-term objective, and not necessarily to invoke an immediate interaction with one or more of content items 210-E.

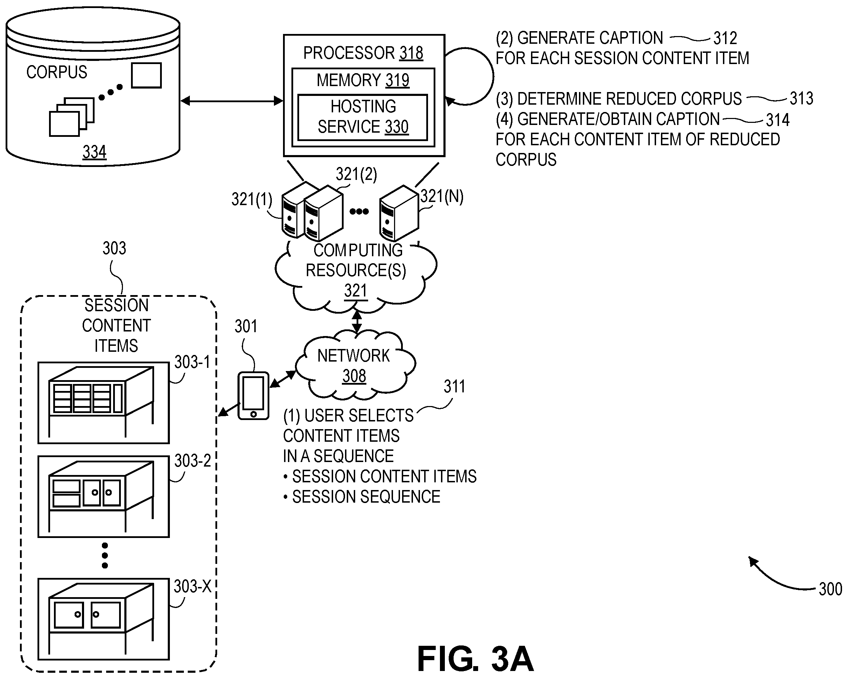

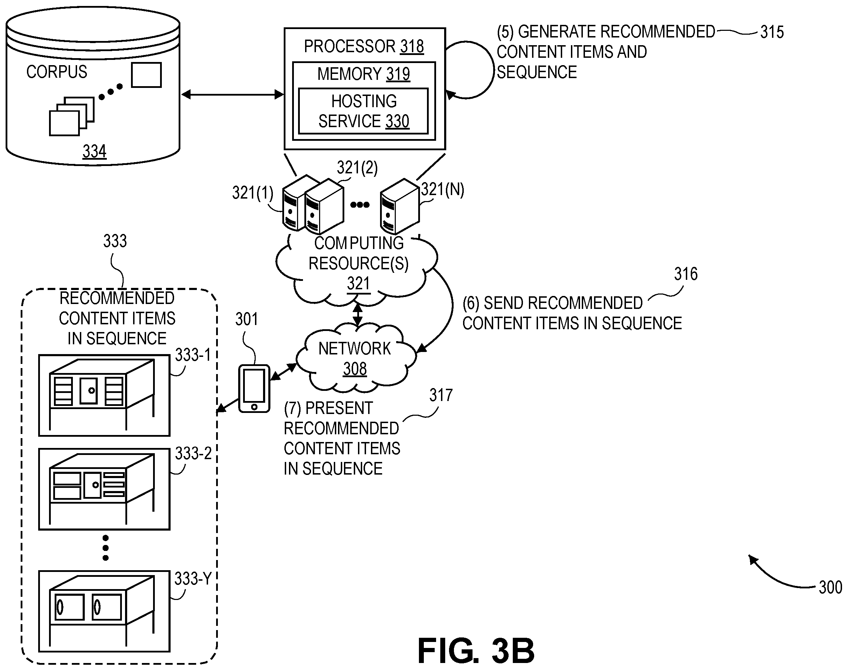

FIGS. 3A and 3B are a transition diagram 300 illustrating the determination and presentation of a sequence of recommended content items, in accordance with aspects of the disclosed subject matter.

In the illustrated example, a user, during a session and through interaction with user device 301, selects or views a plurality of session content items 303-1, 303-2, through 303-X, as in 311. The selection of content items during the session constitutes session content items 303. Any number of content items may be selected during a session and included as session content items 303. In this example, the user is selecting different content items that are images of sideboards. As the content items are selected, the sequence in which each content item is selected may also be maintained or determined. As discussed above, session content items 303 may be selected from corpus of content items 334 that is accessible by user device 301 through hosting service 330. In other examples, some or all of the content items of the session content items may be selected from or provided by user device 301. For example, during the session, the user may take an image of a sideboard, and that image may be provided to hosting service 330 as a content item of the sequence of content items included in the session content items 303.

During or after the session, some or all of session content items 303 are sent, via network 308, from user device 301 to hosting service 330. For example, after the user has viewed five content items, those content items, or content item identifiers corresponding to those content items may be sent to hosting service 330. In other implementations, content item identifiers may be sent or streamed to hosting service 330 as the content items are viewed or selected by the user as part of the session.

Hosting service 330, upon receiving identification of content items viewed by the user, may process the content items to generate captions descriptive of each content item, as in 312. For example, hosting service 330 may include and/or access an image encoder and language model, such as BLIP-2, FLAMINGO80B, VQAv2, etc. and/or internally maintained services, referred to herein generally as a "caption service," and provide each content item to the caption service and receive a caption descriptive of the content item. Each caption may be associated with a content item identifier of the corresponding content item. For example, hosting service 330 may maintain a content item identifier for each content item, which may be unique for each content item. In some examples, captions may be pre-determined for session content items 303 and maintained in corpus of content items 334 accessible to hosting service 330. In such an example, hosting service 330 may obtain the caption for each content item of session content items 303 from the caption data store rather than having to re-process each content item to determine a caption. Likewise, if some of the content items do not have a corresponding caption in the caption data store, those content items may be processed with a caption service to determine a caption for the content item and the caption, with the corresponding content item identifier, may be added to the caption data store.

In addition to determining a caption for each content item of session content items 303, hosting service 330 may also determine, based at least in part on the session content items, a reduced corpus that includes less than all of the content items of corpus of content items 334, as in 313. For example, corpus of content items 334 may be reduced to the reduced corpus by excluding content items of session content items 303 viewed by the user. In still further implementations, the corpus may be further reduced based on existing relationships between content items of session content items 303 and content items of the corpus, to exclude content items that are in different categories or verticals than those of session content items 303, etc. In other examples, the corpus may not be reduced.

The hosting service may then generate or obtain a caption for each content item of the reduced corpus, as in 314. For example, the content items of the reduced corpus may be processed by the same or similar caption service used to process the session content items. In other examples, captions may be pre-determined and stored in a caption data store for each content item of the reduced corpus. In such an example, rather than re-process each content item of the corpus, the hosting service may obtain the caption from the caption data store. In such an example, as new content items are added to the corpus, the content item may be processed with a caption service to determine a caption for the content item, and the caption, with the corresponding content item identifier, may be added to the caption data store.

The system may also include computing resource(s) 321. Computing resource(s) 321 may be remote from user device 301. Likewise, computing resource(s) 321 may be configured to communicate over network 308 with user device 301.

As illustrated, computing resource(s) 321 may be implemented as one or more servers 321(1), 321(2), ..., 321(N) and may, in some instances, form a portion of a network-accessible computing platform implemented as a computing infrastructure of processors, storage, software, data access, and so forth that is maintained and accessible by components/devices of the system via network 308, such as an intranet (e.g., local area network), the Internet, etc. Computing resources 321 may process content items, captions, etc., to generate recommended content items, as discussed herein.

Computing resource(s) 321 does not require end-user knowledge of the physical location and configuration of the system that delivers the services. Common expressions associated for these remote computing resource(s) 321 include "on-demand computing," "software as a service (SaaS)," "platform computing," "network-accessible platform," "cloud services," "data centers," and so forth. Each of servers 321(1)-(N) includes processor 318 and memory 319, which may store or otherwise have access to hosting service 330, as described herein.

Network 308, and each of the other networks discussed herein, may utilize wired technologies (e.g., wires, USB, fiber optic cable, etc.), wireless technologies (e.g., radio frequency, infrared, NFC, cellular, satellite, Bluetooth, etc.), or other connection technologies. Network 308 is representative of any type of communication network, including data and/or voice network, and may be implemented using wired infrastructure (e.g., cable, CAT6, fiberoptic cable, etc.), a wireless infrastructure (e.g., RF, cellular, microwave, satellite, Bluetooth, etc.), and/or other connection technologies.

Turning now to FIG. 3B, using the caption for each of the session content items and the captions for the content items of the reduced corpus, a recommended set of one or more content items and a sequence for those content items may be generated, as in 315. As discussed further below, in some implementations, an LLM input may be defined that includes instructions that the LLM consider the caption and sequence of each content item of the session content items and select a set and sequence of content items from the reduced corpus of content items that should be presented next to the user in the sequence of content items. The instructions may further specify the minimum and/or maximum number of content items that are to be recommended.

Based on the LLM input, the LLM will process each caption of the sequence of content items of the session content items and compare those captions with captions of each content item of the reduced corpus of content items to determine content items from the reduced corpus that are most closely related to the content items of the session of content items. The LLM may also determine, based on the sequence of the content items of the session of content items, the captions of the content items of the session of content items, and the captions of the content items selected from the reduced corpus of content items, a sequence in which the selected content items are to be presented.

Recommended content items 333-1, 333-2, through 333-Y, determined by the hosting service, and the sequence in which those items are to be presented, are then sent, via network 308, to user device 301, as in 316. User device 301, upon receiving the recommended content items and the sequence of presentation of those recommended content items, presents recommended content items 333 in the specified sequence, as in 317. In some implementations, a merchant(s) that offers an item(s) represented in at least one of recommended content items 333 for sale may also be determined and indicated as part of the presentation of recommended content items 333.

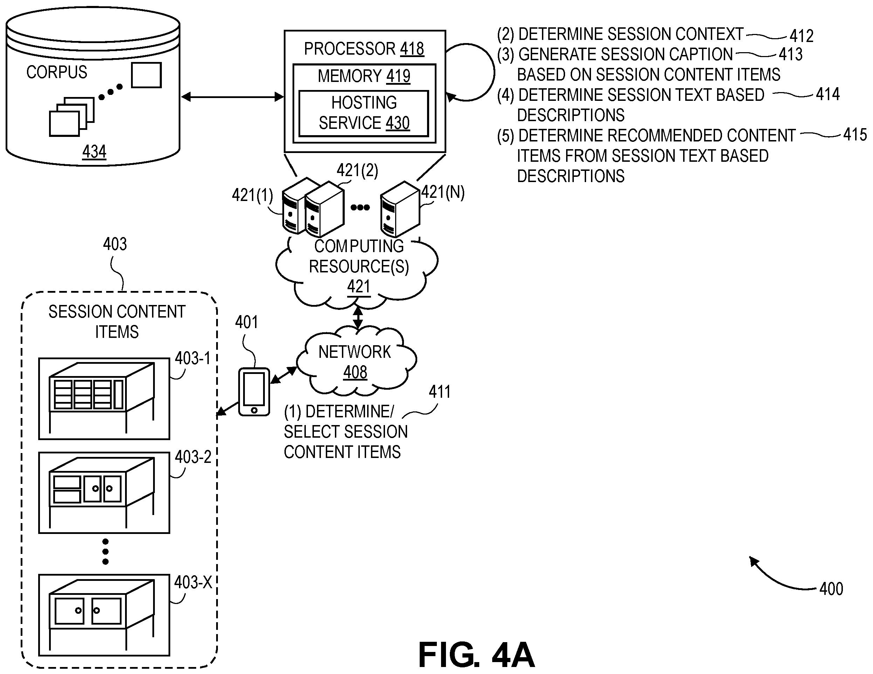

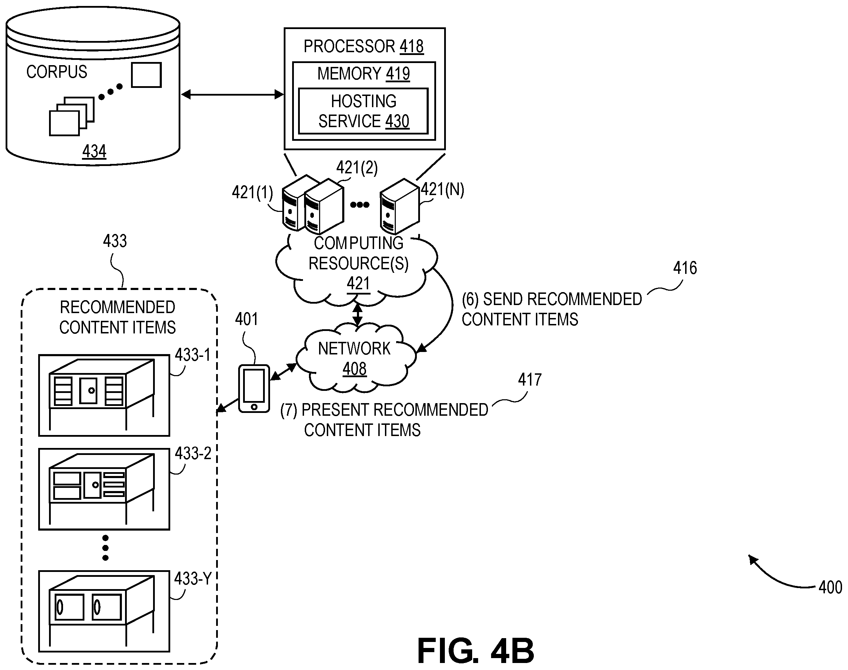

FIGS. 4A and 4B are a transition diagram 400 illustrating the determination and presentation of a sequence of recommended content items, in accordance with aspects of the disclosed subject matter.

In the illustrated example, a user, during a session and through interaction with user device 401, selects or views a plurality of content items 403-1, 403-2, through 403-X, as in 411. The selection of content items during the session constitutes session content items 403. Any number of content items may be selected during a session and included as session content items 403. In this example, the user is selecting different content items that are images of sideboards. As discussed above, the session content items may be selected from a corpus of content items 434 that is accessible by user device 401 through hosting service 430. In other examples, some or all of the content items of session content items 430 may be selected from or provided by user device 401. For example, during the session, the user may take an image of a sideboard, and that image may be provided to hosting service 430 as a content item included in session content items 403.

During or after the session, some or all of session content items 403 are sent, via network 408, from user device 401 to hosting service 430. For example, after the user has viewed five content items, those content items, or identifiers corresponding to those content items, may be sent to the hosting service 430. In other implementations, content item identifiers may be sent or streamed to the hosting service as they are viewed or selected by the user as part of the session.

Hosting service 430, upon receiving identification of content items viewed by the user, in some implementations, may determine a session context for the session, as in 412. For example, if the session content items are included in a named group or list of content items, the name of the group may be determined to be the context. In other examples, metadata (e.g., annotations, keywords, etc.) associated with the content items may be processed to determine a relationship between the content items and used as the session context. For example, annotations or keywords associated with the session content items may include words such as furniture, home decor, bedroom, etc. In such an example, one or more of the keywords/annotations most often associated with the session content items may be determined and used as the session context. In other examples, if the content items are viewed from a particular section or vertical of content items, such as a vertical for "home decor" that is maintained and presented to the user by the hosting service, the vertical may be determined and used as the session context. In still other examples, the session context may not be determined or may be omitted.

In addition to optionally determining a session context for the session, hosting service 430 may also process session content items 403 to generate captions descriptive of each content item, as in 413. For example, hosting service 430 may include and/or access one or more internal and/or external caption services and provide the session content items to the caption service(s) and receive a caption descriptive of the session. In some implementations, the caption service may process all of the content items collectively and generate a single session caption descriptive of the session content items. In other examples, each content item of the session content items may be processed by the caption service(s) and a content item caption determined for each content. Those content item captions may then be combined to generate a session caption for the session. In instances when multiple caption services are used, each caption service may generate a caption for the session content items, referred to herein as a service caption, and those service captions may be combined to generate a session caption for the session.

Using the session context and the session caption, a text-based description may be generated that is descriptive of the session content items, as in 414. As discussed further below, in some implementations, an LLM input may be defined that includes instructions that the LLM consider the session context and the session caption to generate a session text-based description that is descriptive of the session content items, when considering the session context. Based on the LLM input, the LLM will process the session caption, considering the session context, and generate a text-based description of the session.

The text-based description may then be used as a text input to a query system of hosting service 430 (discussed further below) to determine recommended content items to return to user device 401 for presentation, as in 415.

The system may also include computing resource(s) 421. Computing resource(s) 421 may be remote from user device 401. Likewise, computing resource(s) 421 may be configured to communicate over network 408 with user device 401.

As illustrated, computing resource(s) 421 may be implemented as one or more servers 421(1), 421(2), ..., 421(N) and may, in some instances, form a portion of a network-accessible computing platform implemented as a computing infrastructure of processors, storage, software, data access, and so forth that is maintained and accessible by components/devices of the system via network 408, such as an intranet (e.g., local area network), the Internet, etc. Computing resources 421 may process content items, captions, etc., to generate recommended content items, as discussed herein.

Computing system(s) 421 does not require end-user knowledge of the physical location and configuration of the system that delivers the services. Common expressions associated for these remote computing resource(s) 421 include "on-demand computing," "software as a service (SaaS)," "platform computing," "network-accessible platform," "cloud services," "data centers," and so forth. Each of servers 421(1)-(N) includes processor 418 and memory 419, which may store or otherwise have access to hosting service 430, as described herein.

Network 408, and each of the other networks discussed herein, may utilize wired technologies (e.g., wires, USB, fiber optic cable, etc.), wireless technologies (e.g., radio frequency, infrared, NFC, cellular, satellite, Bluetooth, etc.), or other connection technologies. Network 408 is representative of any type of communication network, including data and/or voice network, and may be implemented using wired infrastructure (e.g., cable, CAT6, fiberoptic cable, etc.), a wireless infrastructure (e.g., RF, cellular, microwave, satellite, Bluetooth, etc.), and/or other connection technologies.

Turning now to FIG. 4B, hosting service 430 may then send, via network 408, recommended content items 433-1, 433-2, through 433-Y, as in 416, and user device 401, upon receiving the recommended content items, may present recommended content items 433, as in 417. In some implementations, hosting service 430 may also determine a merchant(s) that offers an item(s) or object represented in at least one of recommended content items 433 for sale. In such an implementation, the merchant may also be identified in the presentation so that the object represented in the one or more content items may be purchased through the merchant.

As noted above, regardless of the implementation used, the content items included in the session content items discussed with respect to FIGS. 3A/3B and/or FIGS. 4A/4B may be explicitly selected by a user, implicitly selected by a user, or selected from another source that is independent of the user, such as for creation of a category or vertical. In implementations in which the user is not providing the session content items, rather than the recommended content items being provided to the user device for presentation, the recommended content items may be provided back to the hosting service and/or other entity for use as intended - e.g., creation of a taste preference guide, vertical, category, etc.

While the example discussed with respect to FIGS. 3A/3B, and as will be discussed elsewhere herein, includes a sequence of the session content items and recommending a sequence for the recommended content items, in other implementations, sequencing may be omitted and recommended content items may be determined from the session content items independent of any sequence. Likewise, while the example discussed with respect to FIGS. 4A/4B do not utilize or determine a sequence for either the session content items and/or the recommended content items, in other implementations, the sequence of the session content items and/or the recommended content items may be determined as part of the implementations discussed herein.

Still further, in some implementations, as discussed further below, user preferences, user location, or content item locations (i.e., the location of a physical item represented by a content item) may also be determined and considered as part of the disclosed implementations when determining recommended content items. For example, referring back to FIG. 4A, in addition to utilizing the text-based descriptors determined from the session content items to determine the recommended content items, the location of the user, the session context, and/or the location of physical items corresponding to content items of the corpus may also be considered in determining the recommended content items. For example, if the session content items relate to an article of clothing (e.g., blouse) and the user is physically located in a shopping district that has a blouse shop and content items included in the corpus of content items correspond to blouses available for purchase from that blouse shop, the disclosed implementations may consider that information and possibly provide one or more content items corresponding to a physical blouse available for purchase from that blouse shop. In such an example, when presented to the user, the recommended content item(s) may also include an indication that the blouse represented in the content item(s) is available for purchase from the blouse shop that is physically near the user, and may include directions or instructions for navigating to the blouse shop from the current location of the user.

As another example, the disclosed implementations may also consider known user preferences, styles, etc., that have been previously determined and/or provided by the user when determining recommended content items.

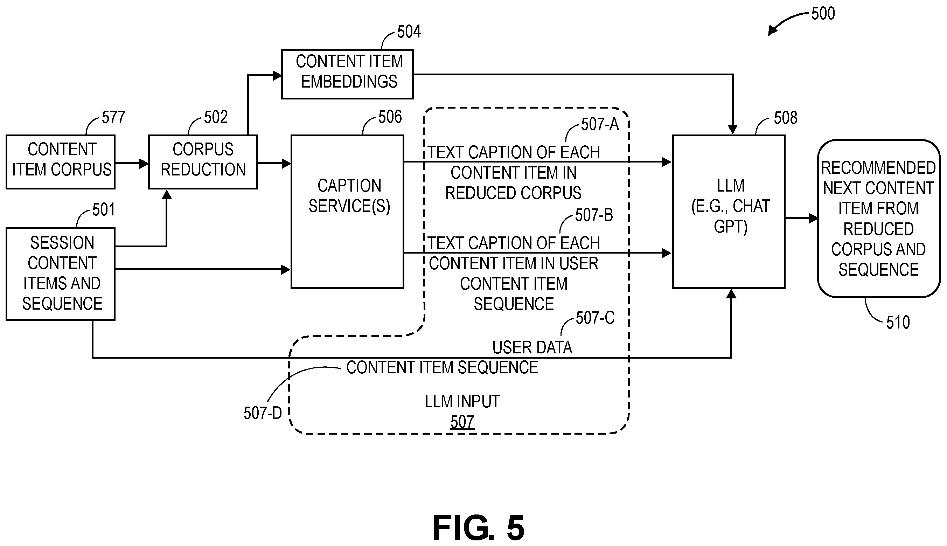

FIG. 5 is a block diagram 500 of system components that may be utilized to determine a sequence of recommended content items, in accordance with aspects of the disclosed subject matter. Block diagram 500 corresponds with the examples discussed herein with respect to FIGS. 3A/3B, 4, 5, and 6.

The system components discussed with respect to FIG. 5 may be entirely included in the hosting service. In other implementations, some of the system components, such as caption service 506 and/or LLM 508 may be separate from, but accessible to the hosting service.

As discussed above, and elsewhere herein, session content items 501 and a sequence in which the session content items were viewed or selected by a user is received by the hosting service and processed by one or more caption services 506 and corpus reduction component 502. For example, caption service(s) 506 may process each content item of the session content items to generate a text content item caption for each content item 507-B. In implementations in which multiple caption services are utilized, the service caption generated by each caption service for a content item may be combined to generate the content item caption for the content item.

Likewise, corpus reduction component 502 may utilize session content items 501 and/or other user information to generate a reduced corpus. For example, corpus reduction component 502 may also process the corpus to remove any duplicates, to remove any content items that the user has previously viewed, or previously viewed within a defined period of time, remove items that are not relevant to the session - for example based on metadata associated with the content items and/or the session content items, etc.

Content items of the reduced corpus may also be provided to caption service(s) 506 and, like session content items 501, a caption may be generated for each content item of reduced corpus 507-A. For example, caption service(s) 506 may process each content item of the reduced corpus of content items to generate a content item caption for each content item. In implementations in which multiple caption services are utilized, the service caption generated by each caption service for a content item of the reduced content item corpus may be combined to generate the content item caption for that content item.

The hosting service may then generate LLM input 507 based on the content item caption of each content item of session content items 507-B, the content item caption of each content item of reduced corpus 507-A, user data 507-C, and content item sequence 507-D. For example, the hosting service may generate LLM input 507 that includes or references the content item caption for each session content item 507-B, that includes or references the content item caption for each content item of the reduced corpus 507-A, and that includes instructions that LLM 508 is to consider the content item caption of each session content item 507-B in the sequence provided and to select one or more content items as recommended content items based on the caption of each content item from reduced content item corpus 507-A. The instructions may further provide a minimum and maximum number of content items that are to be returned as recommended content items, instructions to indicate a sequence in which the recommended content items are to be presented, an LLM output structure that is to be provided by the LLM, etc. Still further, LLM input 507 may also provide additional context or parameters to guide the LLM in selection of recommended content items. For example, additional context or parameters may be specified based on user data 507-C, such as indicating preferred styles, colors, shapes, etc., known about the user that are to be considered in conjunction with the caption of each session content item in determining recommended content items.

LLM 508, upon receiving LLM input 507 generated by the hosting service processes the content item captions of the session content items, the content item captions of the content items of the reduced content item corpus, the sequence, instructions, etc., and determines one or more recommended content items from the reduced content item corpus, along with a sequence in which those content items are to be presented 510.

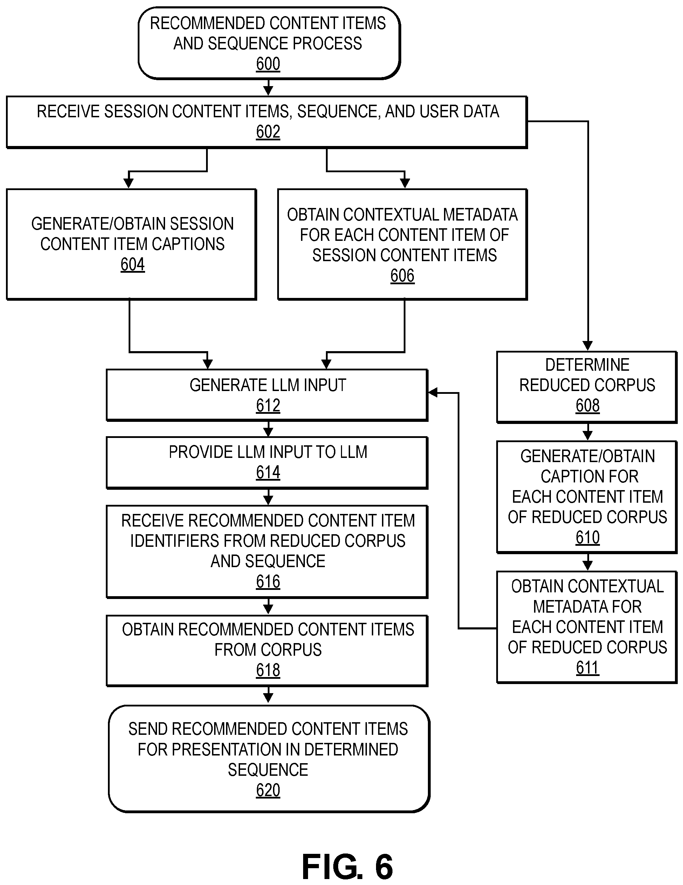

FIG. 6 is an example recommended content items and sequence process 600, in accordance with aspects of the disclosed subject matter. Example process 600 corresponds to the implementations discussed with respect to FIGS. 3A/3B, 5, and 7.

Example process 600 begins upon receipt of session content items, a sequence in which those session content items were viewed or selected by a user, and user data about a user, as in 602. As discussed above, a user may select or view one or more content items during a session or interaction between a user device and the hosting service. Content items viewed during the session are provided or identified to the hosting service as session content items. In some examples, the user device or an application executing on the user device may send indications of content items to the hosting service as those content items are viewed or selected by the user. Likewise, if the user interacts with one or more of the viewed content items, any such interaction may also be provided to the hosting service.

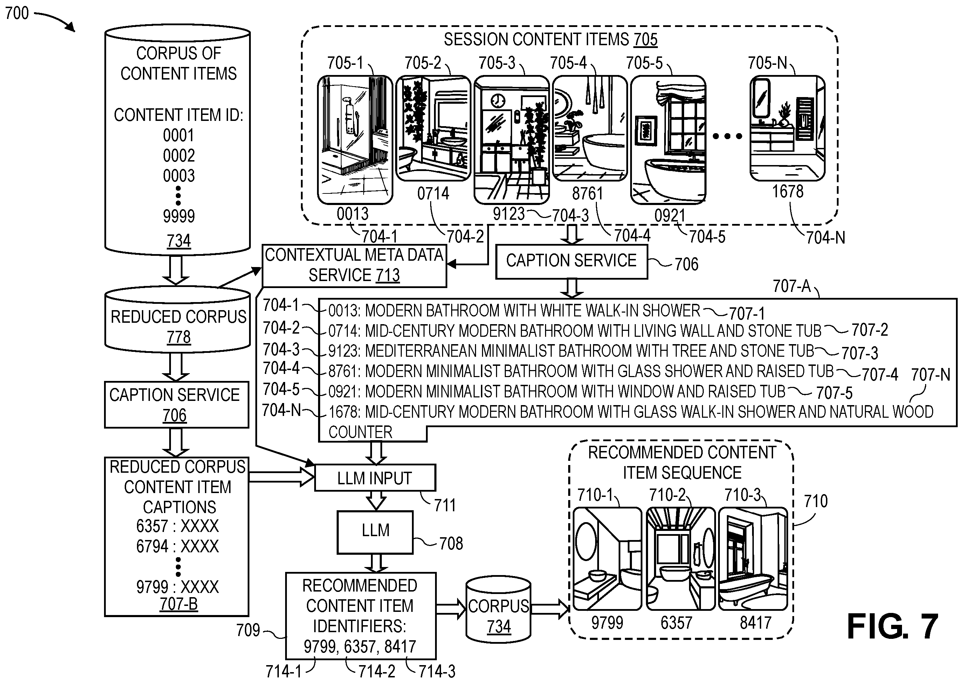

The session content items may then each be processed, for example by one or more caption services, to generate a content item caption descriptive of the session content item, as in 604. The content item caption, once generated, may be associated with a content item identifier for the content item. For example and referring briefly to FIG. 7, which is a block diagram 700 illustrating the generation of a sequence of recommended content items, in accordance with aspects of the disclosed subject matter, each content item 705-1, 705-2, 705-3, 705-4, 705-5, through 705-N of session content items 705 may be processed by caption service 706 and captions 707-1, 707-2, 707-3, 707-4, 707-5, through 707-N may be generated and associated with content item identifier 704-1, 704-2, 704-3, 704-4, 705-5, through 704-N of the respective content item to produce a list of session content item captions 707-A. In the illustrated example, content item 705-1 is processed by caption service 706 and the content item caption "modern bathroom with white walk-in shower" is generated and associated with content item identifier 704-1. Content item 705-2 is processed by caption service 706 and the content item caption "Mid-Century modern bathroom with living wall and stone tub" is generated and associated with content item identifier 704-2. Content item 705-3 is processed by caption service 706 and the content item caption "Mediterranean minimalist bathroom with tree and stone tub" is generated and associated with content item identifier 704-3. Content item 705-4 is processed by caption service 706 and the content item caption "modern minimalist bathroom with glass shower and raised tub" is generated and associated with content item identifier 704-4. Content item 705-5 is processed by caption service 706 and the content item caption "modern minimalist bathroom with window and raised tub" is generated and associated with content item identifier 704-5. Caption generation may be performed for each content item of session content items 705 up through content item 705-N, which, in this example, is processed by caption service 706 and the content item caption "Mid-Century modern bathroom with glass walk-in shower and natural wood counter" is generated and associated with content item identifier 704-N.

Returning to FIG. 6, in addition to generating captions for each content item of the session content items, in some implementations, contextual metadata, such as tokenized word embeddings, for each content item of the session content items may also be obtained, as in 606. For example, contextual metadata service 713 (FIG. 7) may obtain, for each session content items, keywords describing the content item, annotations associated with the content item, descriptions of the content item, popularity information for the content item, trending information for the content item, etc.

The example process 600 may also utilize the session content items and/or contextual metadata determined for the session content items to determine a reduced corpus of content items, as in 608. For example, and returning again to FIG. 7, in some implementations, corpus of content items 734 may be processed to remove some of the content items to produce reduced corpus of content items 778. For example, the content items of session content items 705 may be removed to produce reduced corpus of content items 778. Alternatively, or in addition thereto, information known about the session, user data known about the user, information known about the content items, contextual information determined for session content items, and/or other information may be used to reduce corpus of content items 734 to produce reduced corpus of content items 778. For example, content items that are unrelated to session and/or session content items 705 may be removed as part of producing reduced corpus of content items 778. In other examples, content items of corpus of content items 734 that have been recently viewed by the user or are known to not be preferred by the user may be removed as part of producing reduced corpus of content items 778.

The reduced corpus of content items may then be processed to generate a content item caption for each content item of the reduced corpus, as in 610. For example, caption service 706, which may be the same or different caption service that generated captions for the session content items, may process each content item of reduced corpus of content items 778 to generate a list of reduced corpus content item captions 707-B. Like the session content item captions, the caption generated for each content item of reduced corpus 778 may be associated with the content item identifier and included in reduced corpus content item captions 707-B. Likewise, contextual metadata service 713 may also determine, for each content item of the reduced corpus of content items, contextual metadata, as in step 611.

Returning to FIG. 6, upon generation of the list of reduced corpus content item captions, the list of session content item captions, and contextual metadata for the reduced corpus content items and session content items, example process 600 may generate an LLM input, as in 612. For example, LLM input 711 (FIG. 7) may be created to include or reference the list of session content item captions 707-A, the list of reduced corpus content item captions 707-B, the contextual metadata corresponding to each session content items 705, the contextual metadata corresponding to each reduced corpus content item 778, the sequence in which the session content items were viewed, instructions as to how the LLM is to process the content items, etc. For example, the instructions may instruct the LLM to consider each session content item caption from the list of session content item captions 707-A, the corresponding contextual information for those session content items, and the sequence provided for those session content items and to select one or more reduced corpus content item captions from the list of reduced corpus content item captions 707-B that should be viewed next in the sequence following the session content items described by the sequence of session content item captions included in the list of session content item captions 707-A. The instructions may further provide a minimum and maximum number of reduced corpus content item captions that are to be returned as recommended content items, instructions to indicate a sequence in which the recommended content items are to be presented, etc. Still further, the instructions may instruct the LLM to only return the content item identifier that is selected from the list of reduced corpus content item identifiers that correspond to the recommended content item(s). In some implementations, LLM input 711 may also be defined to include additional context or parameters to guide the LLM in selection of recommended content items. For example, additional context or parameters may be specified based on user data, such as indicating preferred styles, colors, shapes, etc., known about the user that are to be considered in conjunction with each session content item caption and each reduced corpus content item identifier in determining recommended content item identifiers from the list of reduced corpus content item captions.

Example process 600 may then provide the LLM input to an LLM, such as GPT-4, BERT, Galactica, LaMDA, Llama, or an LLM defined and trained by the hosting service, as in 614. The LLM, upon receipt of the LLM input, processes the list of session content item captions and the list of reduced corpus content item captions, in accordance with the instructions, and outputs a sequenced list of recommended content item identifiers that are received by the example process, as in 616 and as illustrated as recommended content item identifiers 709 (FIG. 7). In the example illustrated in FIG. 7, LLM 708 returns content item identifiers 714-1, 714-2, and 714-3, that uniquely identify content items from reduced corpus of content items 778 and likewise included in corpus of content items 734.

The example process 600 may then obtain the recommended content items from the corpus, or the reduced corpus, that are identified by the recommended content item identifiers that are returned by the LLM, as in 618. Finally, the obtained recommended content items may be sent, in accordance with the determined sequence, for presentation, as in 620. Returning again to FIG. 7, the recommended content item identifiers 709 may be used to query the corpus 734 and return the recommended content items 710-1, 710-2, 710-3 corresponding to the recommended content item identifiers 714-1, 714-2, 714-3 that are then sent, in sequence, for presentation 710 as a sequence of recommended content items.

In some implementations, example process 600 may also determine a merchant(s) that offers an item(s) or object represented in at least one of the recommended content items for sale. In such an implementation, the merchant may also be identified in the presentation so that the object represented in the one or more content items may be purchased through the merchant.

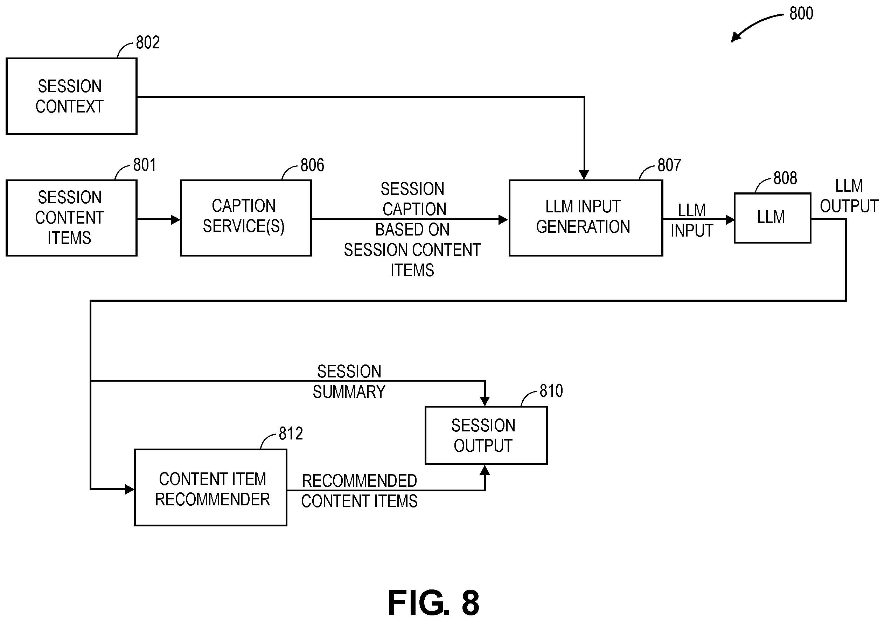

FIG. 8 is a block diagram 800 of system components that may be utilized to determine a plurality of recommended content items, in accordance with aspects of the disclosed subject matter. Block diagram 800 corresponds with the examples discussed above with respect to FIGS. 4A/4B and FIGS. 9-14.

The system components discussed with respect to FIG. 8 may be entirely included in the hosting service. In other implementations, some of the system components, such as caption service(s) 806 and/or LLM 808, may be separate from, but accessible to the hosting service.

As discussed above, and elsewhere herein, session content items 801 viewed or selected by a user, or otherwise provided to the system, are received by the hosting service and processed by one or more caption service(s) 806. For example, caption service(s) 806 may process each content item of the session content items to generate a caption for each content item, and those content item captions may be combined to generate a single session caption for session content items 801. Alternatively, caption service(s) 806 may process all session content items 801 together and generate a session caption descriptive of the session content items. Likewise, as discussed further below, in examples in which multiple caption services 806 are used, each caption service may generate a service caption for the session content items, as determined by that caption service, and each of the service captions may then be combined to generate the session caption for session content items 801.

Likewise, session context 802 may be received and/or determined for the session. The session context may be provided as part of the session content items, may be determined based on the content items, may be determined based on user browser history, user preferences, metadata about or relating to the session content items, etc.

The hosting service may then generate LLM input 807 based on the caption of each session content item 801, session context 802, and the desired output to be received from LLM 808. For example, the hosting service may generate LLM input 807 that includes or references the session caption for session content items 801, that includes session context 802, and that includes instructions that LLM 808 is to consider the session caption, the session context, and output a session description representative of session content items 801 collectively. The instructions may specify a specific structure for the LLM output, a request for a summary of the session content items be provided, that the LLM pick from a set of summary descriptors as a summary for the session content item, etc. Still further, LLM input 807 may also provide additional context, parameters, and/or other instructions to guide the LLM in generation of the LLM output and session description. For example, additional context or parameters may be specified based on user data, such as indicating preferred styles, colors, shapes, etc., known about the user that are to be considered in conjunction with the session caption in determining recommended content items.

LLM 808, upon receiving the LLM input generated by the hosting service, processes the session caption, the session context, etc., in accordance with the instructions of the LLM input, and generates an LLM output that includes the session description and, optionally, a session summary.

The session description may then be provided as a text-based request to a content item recommender 812 and determine one or more content items from a corpus of content items to select as recommended content items. As discussed further below, the content item processes the text-based request and returns one or recommended content items. Example process 800 may then combine the recommended content items, the session summary, and optionally other information as session output 810.

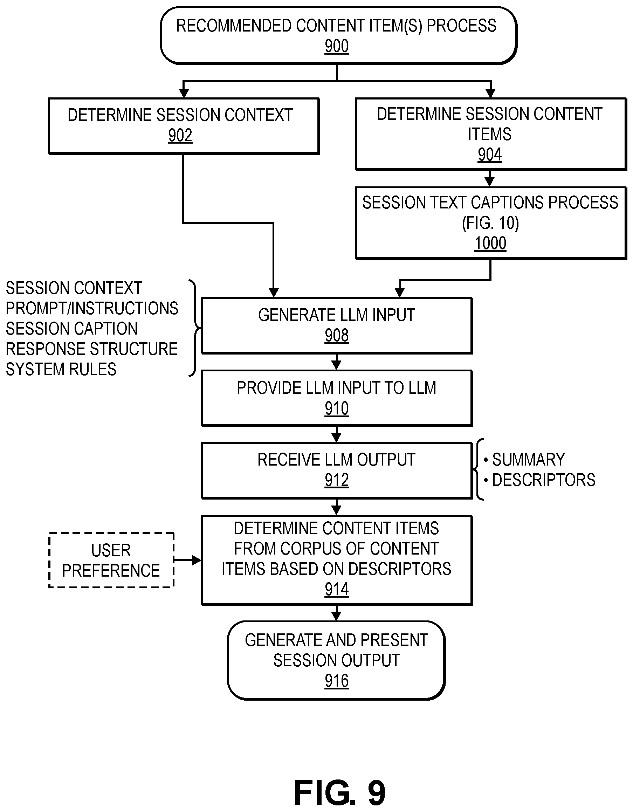

FIG. 9 is an example recommended content item(s) process 900, in accordance with aspects of the disclosed subject matter. The block diagram 900 corresponds with the examples discussed above with respect to FIGS. 4A/4B, 8, and FIGS. 10-14.

Example process 900 begins upon receipt of, or by determining session content items, as in 904. As discussed above, a user may select or view one or more content items during a session or interaction between a user device and the hosting service. Content items viewed during the session are provided or identified to the hosting service as session content items. In some examples, the user device or an application executing on the user device may send indications of content items to the hosting service as those content items are viewed or selected by the user. Likewise, if the user interacts with one or more of the viewed content items, any such interaction may also be provided to the hosting service. In other examples, the session content items may be selected by the hosting service or another entity for use in creating a feed, vertical, category, etc.

In addition to determining or receiving the content items, a session context may be received or determined, as in 902. For example, the session context may be a feed, vertical, category, etc., from or for which the session content items were selected. Alternatively, the content items may be initially processed (e.g., image processing, querying annotations, etc.) to determine the session context and/or the contextual metadata corresponding to the content items may be processed to determine a session context.

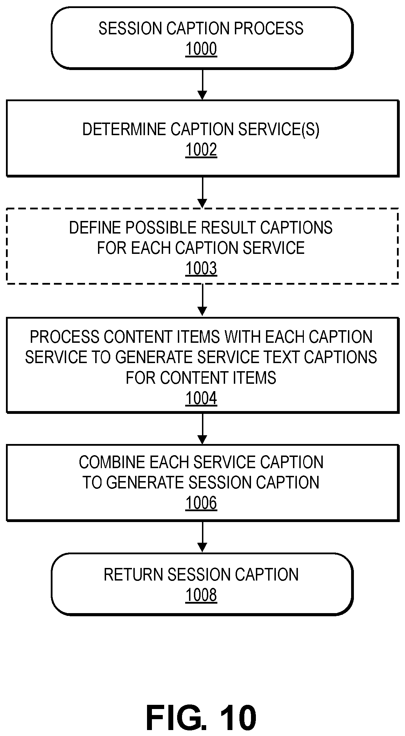

The session content items may then be processed to generate a session caption descriptive of the session content items, as in 1000. The session caption process 1000 is discussed further below with respect to FIG. 10, and elsewhere herein.

Utilizing the session context and the session caption, example process 900 generates an LLM input, as in 908.

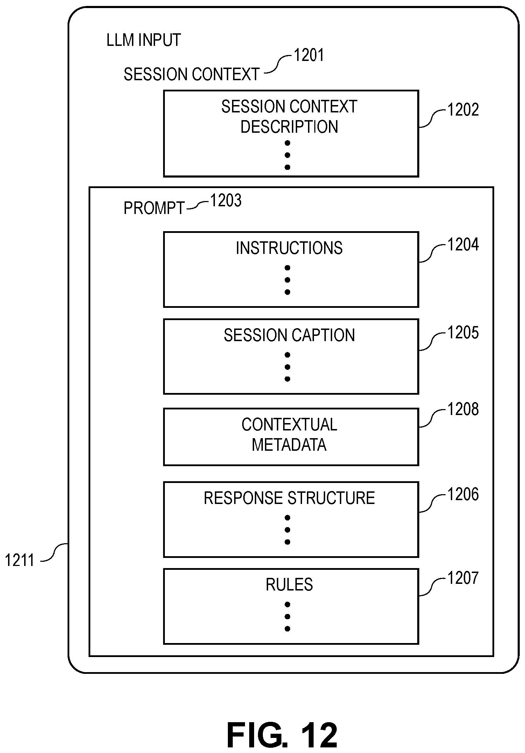

For example and referring briefly to FIG. 12, LLM input 1211 may include session context 1201, which may include one or more session context descriptors 1202 that the LLM may choose from as a summary of the session. For example, if the example process is being used to select content items to represent a bathroom ideas taste preference guide, the list of descriptors that are provided to the LLM may include, as an example, "modern," "mediterranean," "country," "coastal," "mediterranean:spanish," "mediterranean:italian," "mid-century modern," "moroccan," and "traditional." In other examples, other descriptors may be provided. In still other examples, the LLM may not be given a list of descriptors and the LLM input may include instructions that the LLM is to include as part of the LLM output, a one to two word summary of content of the received LLM input.

LLM input 1211 may also include a prompt 1203, which may include one or more of instructions 1204 that the LLM is to follow in executing the LLM input, session caption 1205 determined from the session content items, contextual metadata 1208 determined for the session content items, response structure 1206 which may indicate how the LLM output is to be structured, and/or rules 1207 that are to be followed by the LLM in processing the LLM input. Continuing with the bathroom ideas, instructions 1204 may include, for example:

You are a tasteful and perceptive interior designer for Company A. You are knowledgeable of all the latest trends and brands, with a focus on interesting and not mass-market items and have a principled stance on helping people find their own personal taste preference.

Imagine you have a client who is a company A user and has selected several content items. I am going to provide you with possible captions based on some of the client's selected content items.

The name of the client's collection of selected content items is "bathroom ideas," and here are some possible captions based on some of the most recently saved content items for the client's collection:
In this example, session captions 1205 included in the LLM input may include: "mediterranean, country, coastal, mediterranean:spanish, mediterranean:italian, mid-century modern, moroccan, bathroom design, bathroom interior, bathroom remodel, bathroom inspiration," all of which may have been determined by a caption service, as discussed herein.

In some implementations, LLM input 1211 may also include additional instructions 1204 as to how the LLM output is to be structured, etc. Continuing with the above example, LLM input 1211 may include additional instructions 1204 specifying the structure of the LLM output:
Provide a response to the Company A user summarizing their taste preference and offering suggestions based on their collection of content items. Provide the response in JSON format adhering strictly to the following JSON schema and include all required properties:

```
###
, "title":,
            "subtitle":,
            "descriptions":,
            "description_detail":,
            primary_taste_preference _names":,
             "min|terms": 3,
             "max|terms": 3
            } },
            "query":
        }},
      "required": ["type", "title", "subtitle", "description", "description _detail",
      "primary_taste_preference _names"]
       } },
      "min|terms": 1
      "max|terms": 1
    } }
  } },
 "required": ["response"],
 "additionalProperties": false
 } }
###
```

Rules 1207 for LLM input 1211 may include, for example:

"taste_preference_summary" module: Imagine you're starting a thoughtful taste preference consultation. Provide a "title" that sums up this client's taste preference (e.g. "Relaxed industrial", "Earthy minimalist").
Define taste_preference_names as the 3 taste preferences that best describe this client: ["Modern minimalist", "mid-century modern", "traditional"].
The "description" will be one sentence that best captures this person's taste preference by breaking it down into 3 descriptors derived from taste_preference_names that best reflect the client's tastes.
The "primary_taste_preference_names" is a required field and contains the 3 taste preferences referenced in "description" and must be an exact match for an item in taste_preference_names.

As illustrated in the above example LLM input, any of a variety of captions, instructions, and/or rules may be included in the LLM input to help construct and guide the LLM in creating the LLM output.

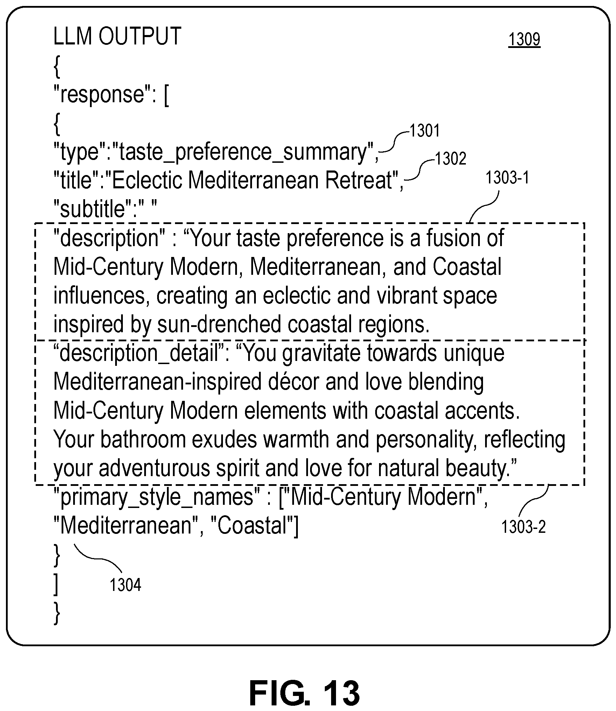

Returning to FIG. 9, upon generation of an LLM input, as discussed above, the LLM input may be provided to the LLM, as in 910, and the LLM may process the LLM input and return an LLM output that includes the requested information, such as a summary and descriptors, as in 912. For example, and referring to FIG. 13, the LLM, in response to receiving the example LLM input discussed above, may generate LLM output 1309 that includes a response, such as type 1301 "taste_preference_summary", title 1302, such as "Eclectic Mediterranean Retreat," and a description 1303-1, such as "Your taste preference is a fusion of Mid-Century Modern, Mediterranean, and Coastal influences, creating an eclectic and vibrant space inspired by sun-drenched coastal regions." The LLM input may also include a description detail 1303-2 such as "You gravitate towards unique Mediterranean-inspired décor and love blending Mid-Century Modern elements with coastal accents. Your bathroom exudes warmth and personality, reflecting your adventurous spirit and love for natural beauty." LLM output 1309 may also include a list of primary taste preference names 1304, such as, "Mid-Century Modern," "Mediterranean," and "Coastal." All of the example LLM outputs are provided in response to the LLM input that included the session context description, instructions, session caption, requested response structure, rules, etc.

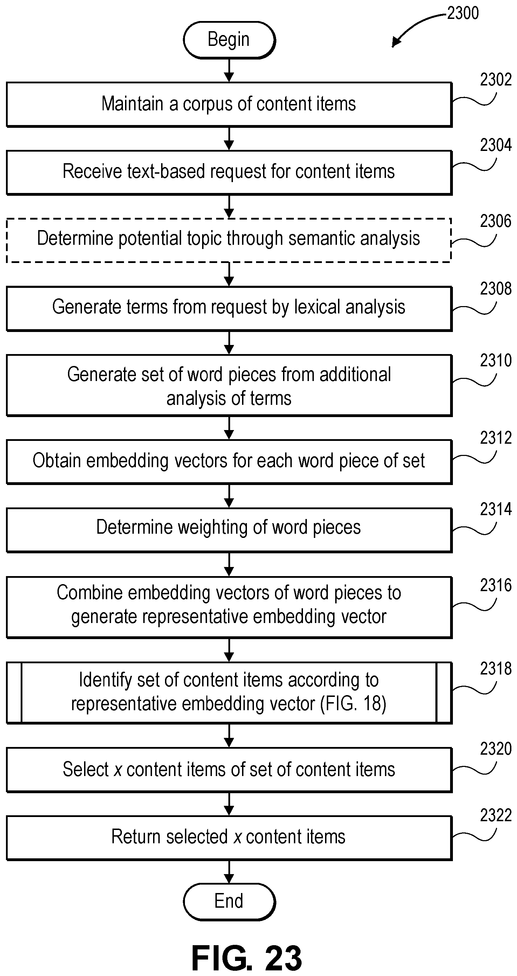

Returning again to FIG. 9, upon receiving the LLM output, example process 900 may utilize some or all of the LLM output to determine content items from a corpus of content items based on the descriptions, as in 914. In some implementations, example process 900 may also consider information known about the user, such as user preference, user history, etc., in determining the content items. As discussed further below, in some examples, the description included in the LLM output may be provided to a search query as a text request for content items. That text request may then be processed, for example as discussed below, to identify and return recommended content items from a corpus of content items as responsive to the text request. Details for processing a text request to determine and return selected content items is discussed further below with respect to FIG. 23.

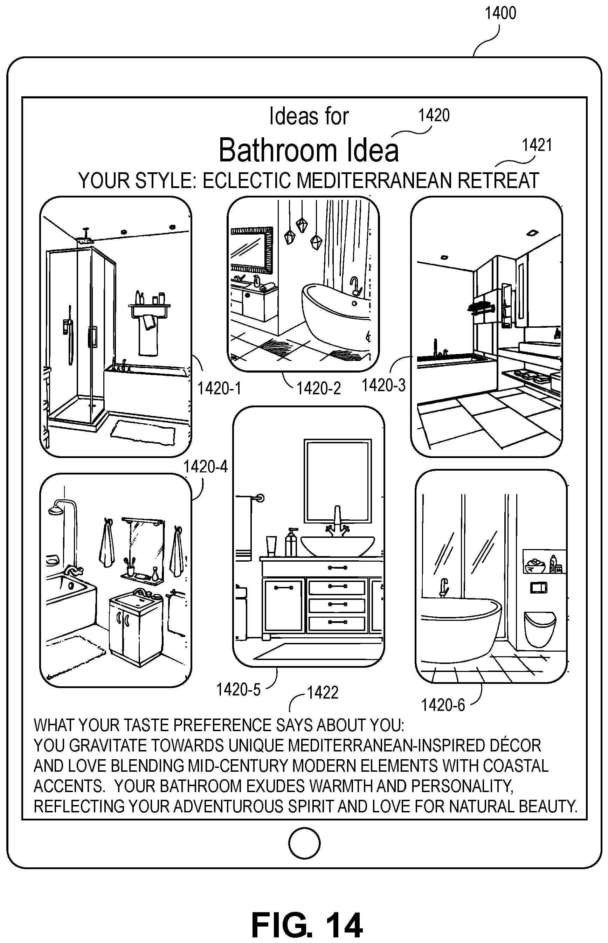

Finally, example process 900 may generate and present a session output, as in 916. The session output may include both information from the LLM output, such as title 1302 (FIG. 13) and the description detail 1303-2, as well as the content items determined from the corpus based on description 1303-1 included in the LLM output. For example, FIG. 14 is an illustration of a session output 1400 generated and presented by example process 900, in accordance with the disclosed implementations. As illustrated in FIG. 14, session output 1400 includes a title 1421 that is obtained from the LLM output, in this example "Eclectic Mediterranean Retreat," description detail 1422 included in the LLM output "You gravitate towards unique Mediterranean-inspired décor and love blending Mid-Century Modern elements with coastal accents. Your bathroom exudes warmth and personality, reflecting your adventurous spirit and love for natural beauty." and a plurality of content items that are selected from a corpus of content items based on description 1303-1 (FIG. 13) included in the LLM output. In this example, six recommend content items 1420-1, 1420-2, 1420-3, 1420-4, 1420-5, and 1420-6 are returned by the example process as representative of the taste preference determined based on the content items originally selected by the user.

In some implementations, example process 900 may also determine a merchant(s) that offers an item(s) or object represented in at least one of the recommended content items for sale. In such an implementation, the merchant may also be identified in the presentation so that the object represented in the one or more content items may be purchased through the merchant.

FIG. 10 is an example session caption process 1000, in accordance with aspects of the disclosed subject matter.

Example process 1000 begins with selection of one or more caption services that are to process the content items and output captions descriptive of those content items, as in 1002. In some implementations, example process 1000 may only select one caption service. In other examples, multiple caption services may be selected. The one or more caption services may be, for example, BLIP-2, FLAMINGO80B, VQAv2, etc. and/or an internally maintained caption service. In some implementations, the caption service(s) may be selected based on the user, the content items selected, the quantity of content items selected, whether a caption is to be created for each content item, whether a caption is to be created as representative of all the content items, etc.

In some implementations, possible result captions that may be provided as outputs by the caption service may also be defined, as in 1003. The content identifiers are then processed to generate session captions representation of the session content identifiers, as in 1004.

If the selected caption service only generates a caption for each content item, the caption service may process each content item and generate a respective content identifier caption for each content item. Those content identifier captions may then be combined as a service caption for the session, as determined for the session content items. In other examples, a selected caption service may process all of the content items of the session content items and generate a service caption that is representative of the content items of the session content items. If more than one caption service is selected for use with the example process 1000, the service caption output by each selected caption service may then be combined to generate the session caption that is representative of the session content items processed by the example process 1000. Combining of individual content item captions to generate a service caption for the session content items and/or combining of service captions output by a plurality of caption services may be done by, for example, adding the terms of each caption together. In other examples, combining of captions may include only selecting terms that appear in two or more of the captions being combined, or only terms appearing in a majority of the captions combined, etc.

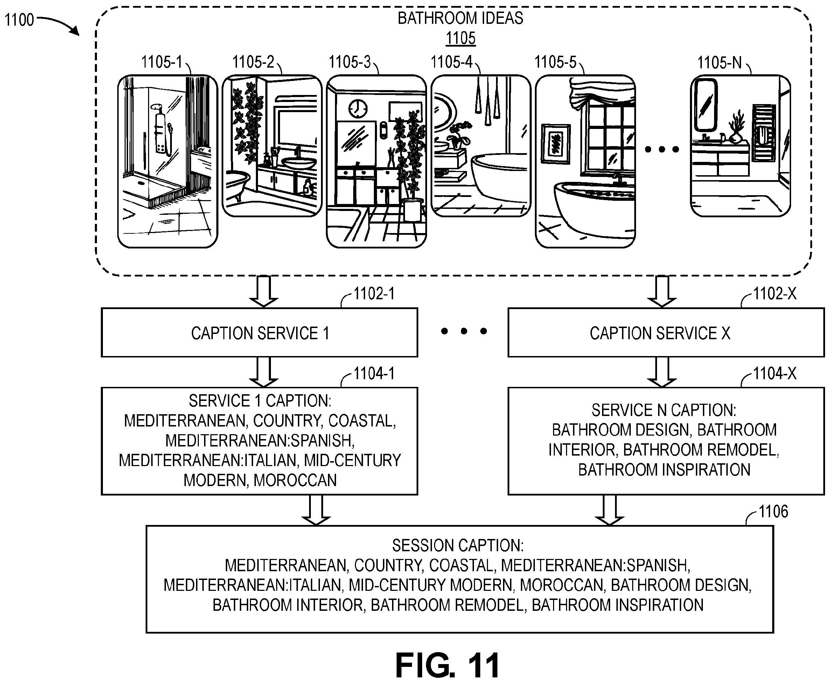

For example, FIG. 11 is an illustration 1100 of generating a session caption from session content items 1105 using a plurality of caption services 1102-1 through 1102-X, in accordance with disclosed implementations. In the example illustration 1100, session content items 1105 include content items 1105-1, 1105-2, 1105-3, 1105-4, 1105-5, though 1105-N. Example process 1000 (FIG. 10) selects X number of caption services 1102-1 through 1102-X and each caption service 1102-1 through 1102-X processes the session content items 1105. In the illustrated example, caption service 1 1102-1 generates service caption 1104-1 that includes the descriptions of "mediterranean, country, coastal, mediterranean:spanish, mediterranean:italian, mid-century modern, moroccan." Likewise, the caption service X 1102-X processes session content items 1105 and outputs service caption 1104-X that includes the descriptors "bathroom design, bathroom interior, bathroom remodel, bathroom inspiration." In this example, session caption 1106 that is descriptive of session content items 1105 is generated by combining service captions 1102-1 through 1102-X to produce, as in 1006 (FIG. 10). In the example illustrated in FIG. 11, session caption 1106 that includes the descriptions of "mediterranean, country, coastal, mediterranean:spanish, mediterranean:italian, mid-century modern, moroccan, bathroom design, bathroom interior, bathroom remodel, bathroom inspiration" is generated by combining service caption 1104-1 through service caption 1104-X.

Returning to FIG. 10, upon generating a session caption, the session caption is returned, as in 1008, and example process 1000 completes.

According to exemplary implementations of the present disclosure, content recommendations may also be determined based on a long-term objective. For example, a long-term objective, such as a cumulative engagement associated with a subscriber of the online service over a certain period of time, may be defined and/or determined, and form the basis for determining recommended content items. In an exemplary implementation, cumulative engagement may be defined as a function of a depth of session and a number of session (e.g., a product of a depth of session and a number of session, etc.) over a defined time period. Accordingly, cumulative engagement may be represented, for the given time period, as:

$$\text{Cumulative Engagement} = \text{depth of session x number of sessions}$$

Consequently, the depth of a session may be defined as a function of a subscriber's time spent accessing the online service (e.g., a number of engaged sessions, a total amount of time spent accessing the online service, and the like) and the actions performed by the subscriber (e.g., the type of actions performed by the subscriber, the number of actions performed by the subscriber, etc.), and the number of sessions can be a function of a frequency with which the subscriber accesses the online service over a defined time period. Accordingly, the depth of session and the number of sessions may be represented as:

$$\text{Depth of Session} = f(\text{time spent, actions performed})$$

$$\text{Number of Sessions} = f(\text{frequency of use})$$

According to other implementations of the present disclosure, other long-term objectives may be determined and/or defined, such as objectives based on shopping/purchase metrics, objectives based on other engagement and/or interaction metrics, objectives based on advertisement engagement and/or interaction metrics, objectives based on query and/or search metrics, and the like.

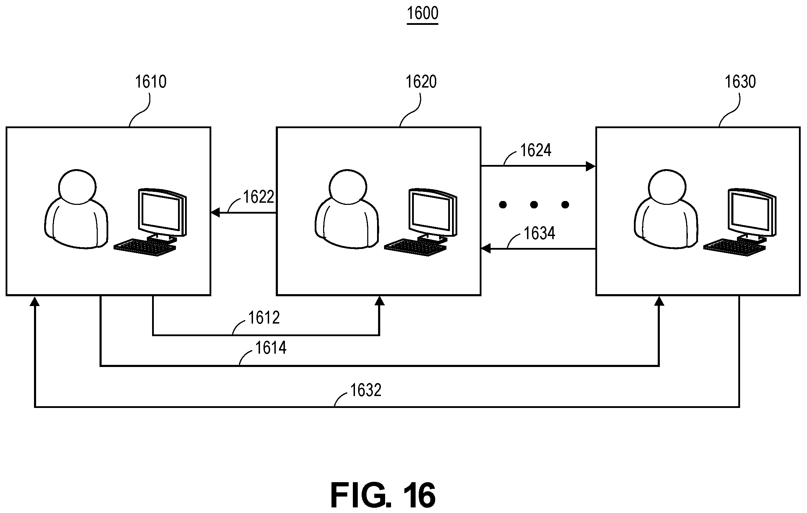

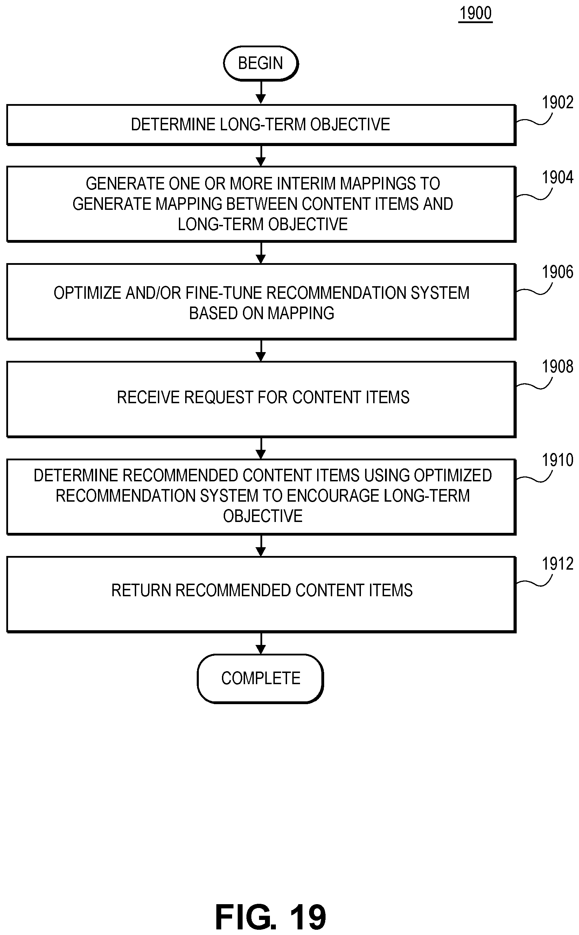

According to exemplary embodiments of the present disclosure, datasets may be generated to learn how subscribers interact with content items across interests, content item formats and/or presentation type (e.g., homepage, search results, shopping, etc.), multiple sessions, and the like. The dataset may also provide insights into subscriber transitions between subscriber states. The dataset may then be used to map content items to the long-term objective. The mappings may be determined by determining alignment scores and/or attention scores that attribute interactions of subscribers with previous interactions with content items. The mapping of the content items to the long-term objective may facilitate optimization and/or generation of a recommendation service to configure the recommendation service to determine content items to recommend and serve to subscribers to encourage the long-term objective. Advantageously, unlike traditional recommendation systems, which are typically configured to recommend content items with the objective to encourage immediate interaction with the recommended content items, exemplary embodiments of the present disclosure can provide a recommendation system configured to recommend content items that are determined to prioritize the long-term objective and identify content items to promote the long-term objective. Additionally, aspects of the present disclosure may also consider the subscriber's state in mapping content items to the long-term objective. For example, the subscriber's actions and behavior in connection with accessing and/or utilizing the online service may be modeled as a state of the subscriber, and the subscriber's state, along with the subscriber's history (e.g., a new user, a casual user, a power user, etc.), may be utilized to determine probabilities associated with transitions in the state of the user in determining the mappings of the content items to the long-term objective. According to aspects of the present disclosure, this may be modeled as a Markov decision process employing Bellman equations to determine values for subscribers in view of multiple objectives. Determination of subscriber states, as well as determination of the probabilities associated with state transitions, is described in further detail herein in connection with at least FIGS. 16 and 19.

FIG. 15A is an illustration of exemplary mappings 1500, according to exemplary embodiments of the present disclosure. Exemplary mappings 1500 may be utilized to map content items to the long-term objective, so that content items may be recommended in view of the long-term objective.

As illustrated in FIG. 15A, the mapping of the content items to the long-term objective may be performed via one or more interim mappings. For example, a first mapping 1502 between features, metrics, and/or parameters associated across an aggregation of subscriber sessions 1530 and long-term objective 1540 may first be determined, a second mapping 1504 between features, metrics, and/or parameters associated with an individual subscriber session 1520 and the features, metrics, and/or parameters associated with the aggregation of subscriber sessions 1530 may then be determined, and a third mapping 1506 between content items 1514 and the features, metrics, and/or parameters associated with the individual subscriber session 1520 may finally be determined. These mappings 1502, 1504, and 1506 can facilitate determination of the content items 1514 that may drive the metrics, and/or parameters associated with individual subscriber sessions 1520, which in turn drive the features, metrics, and/or parameters associated with the aggregation of subscriber sessions 1530, which in turn drive the long-term objective 1540.

In exemplary implementations of the present disclosure, the features, metrics, and/or parameters associated the aggregation of the subscriber sessions 1530 may include, for example, a frequency at which the subscriber initiates sessions with the online service within a defined time period (e.g., 1 day, 3 days, 5 days, 1 week, 2 weeks, 1 month, etc.), a depth of session associated with the sessions (e.g., a number of engaged sessions, a total amount of time spent accessing the online service, a number of content items viewed, and the like), and the like. Similarly, the features, metrics, and/or parameters associated with individual subscriber sessions 1520 may include, for example, a session depth (e.g., a number of engaged sessions, a total amount of time spent accessing the online service, a number of content items viewed, and the like), the actions performed by the subscriber (e.g., the type of actions performed by the subscriber, the number of actions performed by the subscriber, etc.), a session length (e.g., amount of time spent on the session), an entropy and/or diversity associated with the session (e.g., number of interests and/or topics explored, number of different content item types explored, number of different content item formats explored - home page, search, shopping, etc.), and the like. Although FIG. 15A illustrates an exemplary implementation employing three mappings that correlate interim metrics to map content items to the long-term objective, any number of mappings correlating any number of interim metrics may be used to map content items to the long-term objective.

In an exemplary implementation, the mappings may be determined by determining alignment scores that attribute interactions of subscribers with previous interactions with content items. For example, the alignment scores may be determined using query, key, and value vectors to determine alignment scores for candidate content items. A subscriber interaction may represent a query, a sequence of content items with which the subscriber engaged prior to the subscriber interaction may represent the key, and content items that are retrieved from a corpus of content items for each content item in the sequence of content items as the candidate content items from which the recommended content items are determined may represent the values. According to aspects of the present disclosure, the subscriber interaction may correspond to the long-term objective. For example, the subscriber interaction may include the desired subscriber behavior within a desired time period after the sequence of content items preceding the subscriber interaction. Using the subscriber interaction and the sequence of subscriber engagements preceding the subscriber interaction, an alignment score may be determined for each subscriber engagement that preceded the subscriber interaction. The alignment scores for each subscriber engagement that preceded the subscriber interaction may represent a relevance and/or influence of the preceding subscriber engagement in connection with the subscriber interaction. According to an aspect of the present disclosure, as the embedding vectors representing the content items encode features such as visual features, semantic features, and the like, the relevance and/or influence quantified by the alignment scores also include a measure of semantic relevance. The alignment scores may then be utilized to determine a weighted sum of the candidate content items, which may be used to determine one or more recommended content items.

Alternatively and/or in addition, attention scores may be used in place of or in addition to alignment scores. Similar to the determination of alignment scores, a representation of a subscriber interaction (e.g., representation of the content item with which the subscriber interacted that is of interest, etc.) may be modeled as a query vector and the content items in an input sequence of content items (e.g., representations of a sequence of content items with which the subscriber interacted that may be of interest, etc.) may be modeled as the key vector. Accordingly, the dot product of the query and key vectors may provide attention scores for each content item in the input sequence of content items, which may represent a relevance of each content item in the sequence of content items to the subscriber interaction of interest.

Accordingly, the mapping of the content items to the long-term objective may facilitate optimization and/or generation of a recommendation service to configure the recommendation service to determine content items to recommend and serve to subscribers to encourage the long-term objective.

Alternatively and/or in addition, according to certain aspects of the present disclosure, each mapping may be determined using one or more trained models that are configured to predict a respective target variable based on the respective inputs. For example, a first model may be trained in connection with the first mapping 1502 to predict the long-term objective 1540 based on inputs corresponding to features, metrics, and/or parameters associated across the aggregation of subscriber sessions 1530. Similarly, a second model may be trained in connection with the second mapping 1504 to predict the features, metrics, and/or parameters associated across the aggregation of subscriber sessions 1530 based on inputs corresponding to features, metrics, and/or parameters associated with individual subscriber sessions 1520, and a third model may be trained in connection with the third mapping 1506 to predict the features, metrics, and/or parameters associated with individual subscriber sessions 1520 based on inputs corresponding to content items 1514 in a corpus of content items from which recommended content items may be determined. Accordingly, the various mappings may be utilized to optimize and/or configure a recommendation system and/or service to recommend content items to prioritize the long-term objective. For example, a reverse inference learning technique may be employed to train, fine-tune, and/or optimize a recommendation system and/or service to configure the recommendation system and/or service to recommend content items to subscribers to achieve the long-term objective. Although exemplary embodiments of the present disclosure are described as utilizing three interim mappings, any number of interim mappings may be used.

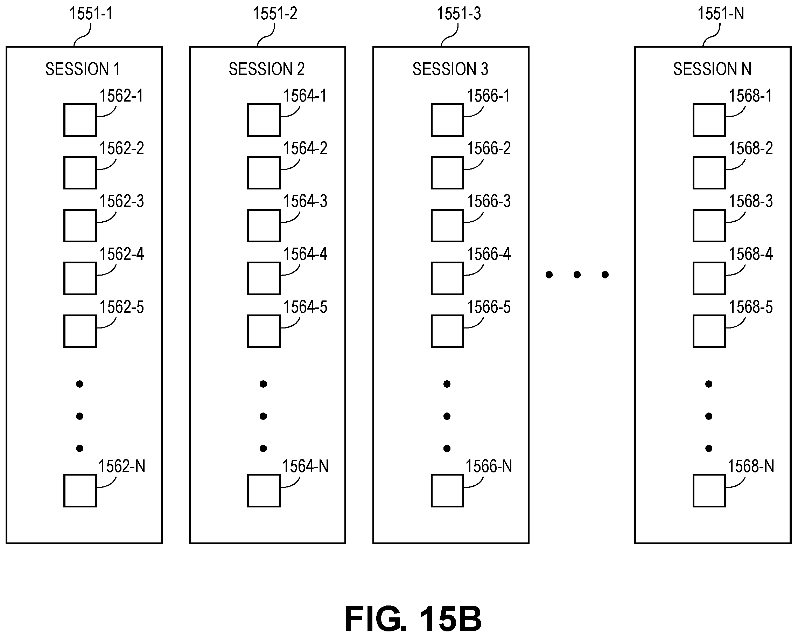

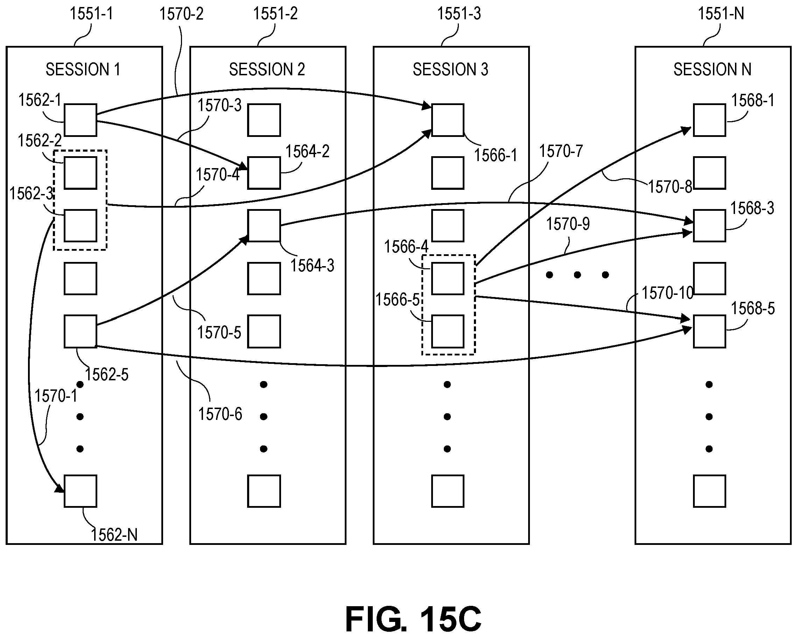

FIGS. 15B and 15C are illustrations of determining attributions for a subscriber across multiple subscriber sessions, according to exemplary embodiments of the present disclosure.

FIGS 15B and 15C represent content items 1562, 1564, 1566, and 1568 with which the subscriber has interacted across sessions 1551. As shown in FIGS. 15B and 15C, the subscriber may have interacted with content items 1562 (e.g., content items 1562-1, 1562-2, 1562-3, 1562-4, 1562-5 through 1562-N) during Session 1 1551-1, content items 1564 (e.g., content items 1564-1, 1564-2, 1564-3, 1564-4, 1564-5 through 1564-N) during Session 2 1551-2, content items 1566 (e.g., content items 1566-1, 1566-2, 1566-3, 1566-4, 1566-5 through 1566-N) during Session 3 1551-3, and content items 1568 (e.g., content items 1568-1, 1568-2, 1568-3, 1568-4, 1568-5 through 1568-N) during Session N 1551-N. Each content item with which the subscriber has interacted may be represented by an embedding vector that encodes various features (e.g., visual features, text features, semantic features, etc.) of each corresponding content item.

According to implementations of the present disclosure, attributions may be determined within and across subscriber sessions, so as to identify content items that may be responsible for, driven, or otherwise influenced the subscriber to interact and/or engage with a subsequent content item. As shown in FIG. 15C, attribution 1570-2 may have been determined for content item 1562-1 in connection with content item 1566-1 (e.g., that content item 1562-1 may have caused, influenced, or been otherwise relevant in the subscriber's interaction with content item 1566-1). Similarly, attribution 1570-1 may have been determined for content items 1562-2 and 1562-3 in connection with content item 1562-N, attribution 1570-3 may have been determined for content item 1562-1 in connection with content item 1564-2, attribution 1570-4 may have been determined for content items 1562-2 and 1562-3 in connection with content item 1566-1, attribution 1570-5 may have been determined for content item 1562-5 in connection with content item 1564-3, attribution 1570-6 may have been determined for content item 1562-5 in connection with content item 1568-5, attribution 1570-7 may have been determined for content item 1564-3 in connection with content item 1568-3, attribution 1570-8 may have been determined for content items 1566-4 and 1566-5 in connection with content item 1568-1, attribution 1570-9 may have been determined for content items 1566-4 and 1566-5 in connection with content item 1568-3, and attribution 1570-10 may have been determined for content items 1566-4 and 1566-5 in connection with content item 1568-5.

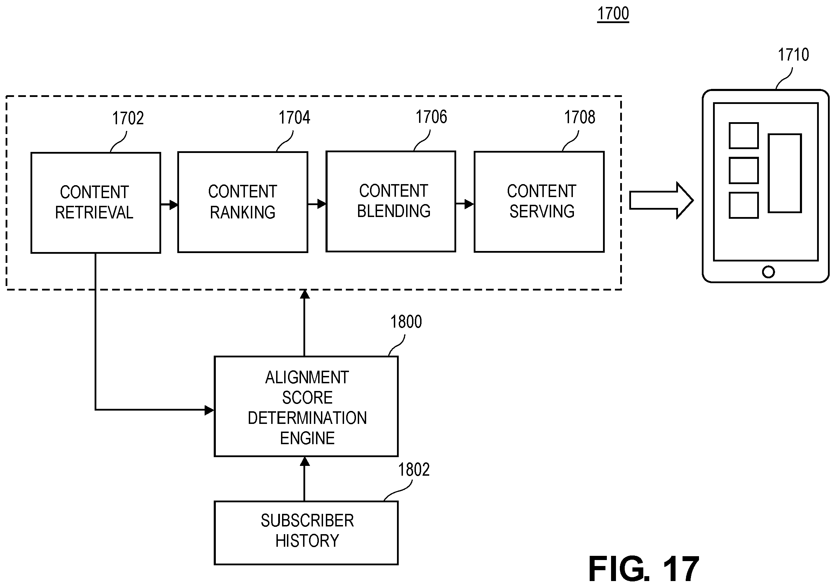

In exemplary implementations of the present disclosure, attributions 1570 may be determined based on alignment scores and/or attention scores. The alignment scores and/or attention scores for each content item may represent a relevance and/or influence of the content item to the subsequent subscriber engagement. According to one aspect of the present disclosure, the alignment score may be determined based on a similarity measure of each preceding content item with the subscriber interaction in question. Alternatively and/or in addition, the alignment score may be determined based on a textual caption that may be generated for each preceding content item. Determination of alignment scores is described in further detail herein in connection with at least FIGS. 17, 18A, 18B, 19, 20A, and 20B.

According to certain aspects of the present disclosure, the subscriber's state, along with the subscriber's current context, may be utilized to determine probabilities associated with transitions in the state of the user in determining the mappings of the content items to the long-term objective. FIG. 16 is an illustration of exemplary subscriber states, according to exemplary embodiments of the present disclosure.

As shown in FIG. 16, a subscriber of an online service may be categorized in various states 1610, 1620, and/or 1630 while accessing and/or engaging with the online service. According to aspects of the present disclosure, states 1610, 1620, and/or 1630 may correspond to a different type of interaction and/or engagement of the subscriber with the online service. For example, state 1610 may correspond to an initial interaction and/or engagement with the online service in connection with a subscriber accessing the online service, state 1620 may correspond to further activity beyond the initial interaction and/or engagement, and state 1630 may correspond to activity typically associated with an end of a subscriber session. Accordingly, state 1610 may correspond to initial activity such as accessing the subscriber's homepage, conducting an initial search and/or query, and the like, state 1620 may correspond to further activity such as refining an initial search, interacting with content served by the online service, adding an item to a cart, and the like, and state 1630 may correspond to concluding activity, such as posting content to the online service, completing the purchase of an item, and the like.

In the illustrated implementation, as a subscriber is interacting and/or engaging with the online service, the subscriber may transition from state 1610 to state 1620 (e.g., transition 1612), from state 1610 to state 1630 (e.g., transition 1614), from state 1620 to state 1610 (e.g., transition 1622), from state 1620 to state 1630 (e.g., transition 1624), from state 1630 to state 1620 (e.g., transition 1634), and/or from state 1630 to state 1610 (e.g., transition 1632). According to exemplary embodiments of the present disclosure, a probability associated with each transition 1612, 1614, 1622, 1624, 1632, and 1634 may be determined. The probabilities associated with each transition 1612, 1614, 1622, 1624, 1632, and 1634 may be determined, for example, based on the behavior of subscribers, history of subscribers, profile information of subscribers, experience level of the subscriber (e.g., a new subscriber, a casual subscriber, a power subscriber, etc.), and the like. For example, it may be determined that an experienced subscriber is more likely to transition from initial state 1610 to state 1620 before transitioning to state 1630, while a new subscriber may include multiple transitions between initial state 1610 and state 1620 before transitioning to state 1630, while a power subscriber may transition directly from state 1610 to state 1630.

In exemplary implementations, this may be modeled as a Markov decision process employing Bellman equations to determine values for subscribers in view of multiple objectives. Accordingly, the probability of transitioning between state $i$ and state $j$ may be represented as stochastic matrix $P_{i,j}$, where the sum of the probabilities from a given state $i$ to all other states is 1, which may be represented as $\sum_{j=1}^{\alpha} P_{i,j} = 1$. Accordingly, the determined probabilities may be applied in determining the mappings between content items and the long-term objective. Further, although FIG. 16 illustrates three states, any number of subscriber states may be utilized and the probabilities of transitions between any of the subscriber states may be determined and utilized in determining the mappings between content items and the long-term objective.

FIG. 17 is a block diagram illustrating an exemplary recommendation system 1700, according to exemplary embodiments of the present disclosure.

As shown in FIG. 17, recommendation system 1700 may include a multi-stage recommendation system that includes content retrieval stage 1702, content ranking stage 1704, content blending stage 1706, and/or content serving stage 1708. In exemplary implementations, content retrieval stage 1702, content ranking stage 1704, content blending stage 1706, and/or content serving stage 1708 of recommendation system 1700 may be substantially similar to recommendation system 200, which is described herein in connection with at least FIG. 2. Accordingly, each of content retrieval stage 1702, content ranking stage 1704, content blending stage 1706, and/or content serving stage 1708 may employ one or more trained machine learning models and may be configured to successively filter, rank, and/or prioritize content items obtained from a corpus of content items, so as to reduce and narrow down the number of content items from the corpus of content items in determining one or more content items to return as recommended content items in response to a request for content items. This may improve efficiency in determining the recommended content items. Consequently, the recommended content items may be served to and presented on client device 1710.

Additionally, recommendation system 1700 may also be further configured to determine recommended content items in view of a long-term objective. As described herein, in connection with determining recommended content items based on the long-term objective, a mapping between content items may be generated and utilized for determining configuring and/or optimizing recommendation system 1700 to recommend content items based on the long-term objective. In an exemplary implementation, and as shown in FIG. 17, the mapping may be generated based on alignment scores and/or attention scores that may be determined for one or more content items. Alignment scores and/or attention scores may represent a relevance and/or influence that content items may have in driving the long-term objective over a defined time period.

As illustrated, alignment scores may be determined by alignment score determination engine 1800 for candidate content items provided by content retrieval stage 1702 based on subscriber history information 1802. For example, subscriber interactions, along with sequences of subscriber engagements that preceded each subscriber interaction, may be identified in subscriber history information 1802. According to aspects of the present disclosure, the subscriber interaction and the sequence of subscriber engagements may be represented by embedding vectors that encode features of the content items with which the subscriber has interacted and/or engaged. The embedding vectors may encode features, such as visual information, textual information, audio information, semantic information, contextual information, and the like. Accordingly, for each identified subscriber interaction, alignment scores and/or attention scores may be determined for the content items forming the sequence of subscriber engagements preceding the subscriber interaction. The alignment scores and/or attention scores for each subscriber engagement that preceded the subscriber interaction may represent a relevance and/or influence of the preceding subscriber engagement in connection with the subscriber interaction. The alignment scores and/or attention scores may then be utilized to determine weights for each of the candidate content items (e.g., as a weighted sum of the candidate content items, etc.), which may be used to determine one or more recommended content items. For example, the alignment scores, attention scores, and/or the weights may be provided to recommendation system 1700 as an input, may be used to modify the utility function associated with one or more stages of recommendation system 1700, be used as rewards in applying a reinforcement learning technique to further train and/or fine-tune recommendation system 1700, and the like.

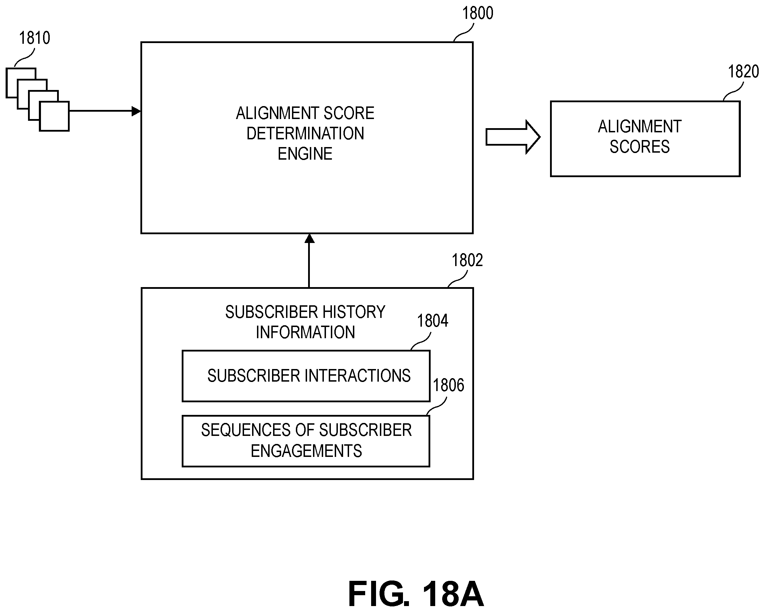

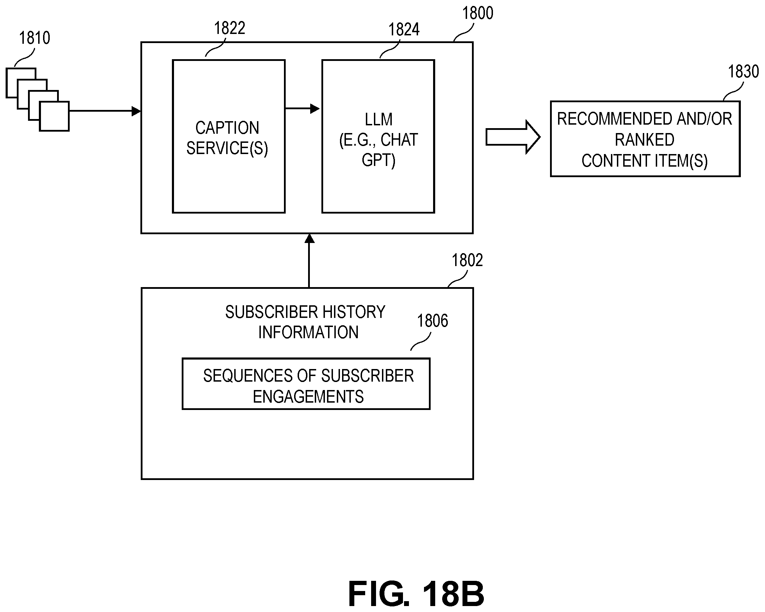

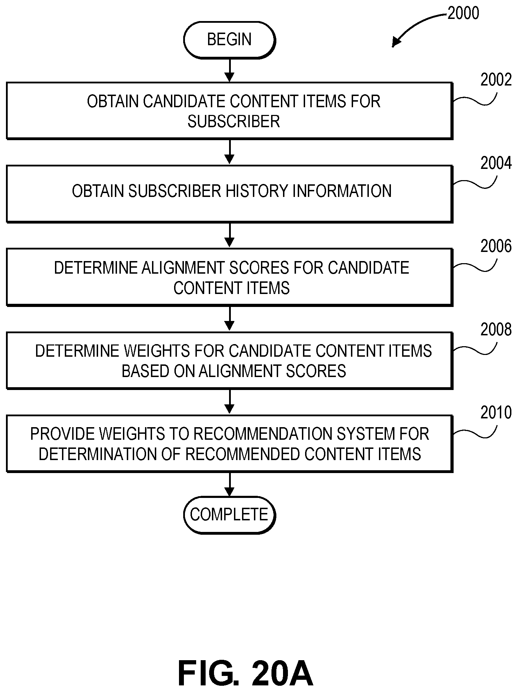

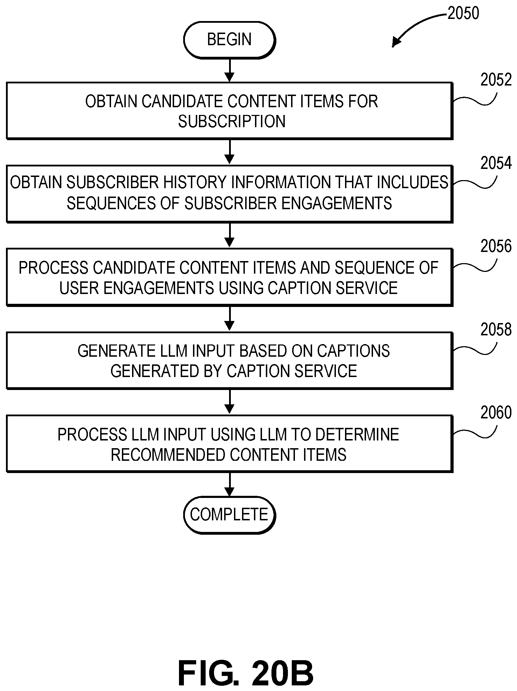

In exemplary implementations of the present disclosure, alignment score determination engine 1800 may determine alignment scores using query, key, and value vectors, a large language model, and the like. Determination of alignment scores is described in further detail herein in connection with at least FIGS. 18A, 18B, 20A, and 20B.

FIGS. 18A and 18B are block diagrams illustrating determination of alignment scores, according to exemplary embodiments of the present disclosure.

FIG. 18A illustrates an implementation where alignment scores 1820 are determined using a similarity measure utilizing a query, key, and value vector technique. As shown in FIG. 18A, alignment score determination engine 1800 may receive candidate content items 1810 and subscriber history information 1802. Subscriber history information 1802 may include one or more subscriber interactions 1804 and sequences of subscriber engagements 1806 that preceded each subscriber interaction. Preferably, the sequences of subscriber engagements 1806 include sequences of subscriber engagements 1806 that were performed within a single subscriber session and across multiple subscriber sessions. Additionally, subscriber candidate content items 1810 may include a corpus of content items, a set of content items that have been determined from a corpus of content items (e.g., by one or more stages of a multi-stage recommendation system, etc.), and the like.

In the implementation employing query, key, and value vectors, each subscriber interaction 1804 may represent a query, a sequence of subscriber engagements 1806 preceding each subscriber interaction 1804 may represent the key, and candidate content items 1810 may represent the values. According to aspects of the present disclosure, the subscriber interactions may correspond to the long-term objective. For example, the subscriber interaction may include the desired subscriber behavior within a desired time period after the sequences of subscriber engagements preceding the subscriber interactions.

In determining alignment scores 1820, for a particular subscriber interaction 1804 (e.g., an interaction with a content item, a like of a content item, a sharing of a content item, a saving of a content item, etc.), a sequence of subscriber engagements 1806 preceding the particular subscriber interaction 1804 may be identified. The sequence of subscriber engagements 1806 may include a sequence of content items with which the subscriber engaged prior to the particular subscriber interaction 1804, and a corresponding candidate content item may be retrieved for each content item in the sequence of subscriber engagements 1806. Accordingly, the particular subscriber interaction 1804 may be a query, the sequence of subscriber engagements 1806 may be the key, and the retrieved candidate content items may be the value. According to aspects of the present disclosure, the particular subscriber interaction may correspond to the long-term objective. For example, the subscriber interaction may include the desired subscriber behavior within a desired time period after the sequence of subscriber engagements preceding the subscriber interaction. Given the query, key, and the value, a similarity measure may be determined between the particular subscriber interaction 1804 and each content item in the sequence of subscriber engagements 1806. For example, a cosine similarity may be determined between an embedding vector representative of the particular subscriber interaction 1804 and an embedding vector representative of each content item included in the sequence of subscriber engagements 1806. Other similarity measures may alternatively be utilized such as, by way of illustration and not limitation, a dot product, the Normalized Hamming Distance measure, a Euclidian distance measure, and the like. The similarity measure between the particular subscriber interaction 1804 and each content item in the sequence of subscriber engagements 1806 may represent the relevance and/or influence that each content item had on the particular subscriber interaction 1804. Further, as the embedding vectors preferably encode non-visual features, such as textual features, semantic features, etc. (in addition to visual features) of the content items, the similarity measure is representative of a comprehensive similarity between the particular subscriber interaction 1804 and each content item in the sequence of subscriber engagements 1806.

The similarity measures between the particular subscriber interaction 1804 and each content item in the sequence of subscriber engagements 1806 may be returned as alignment scores 1820 for the content items included in the sequence of subscriber engagements 1806. Accordingly, alignment scores 1820 may represent the relevance and/or influence of each content item in the sequence of subscriber engagements 1806 on the particular subscriber interaction 1804. Alternatively and/or in addition, the similarity measures/alignment scores may processed (e.g., a softmax function, etc.) to determine a distribution for the candidate content items 1810, as well as a weighted sum of the candidate content items 1810, which can be provided back to the recommendation system. For example, the weighted sum may be used to modify the utility function associated with one or more stages of the recommendation system, be used as rewards in applying a reinforcement learning technique to further train and/or fine-tune the recommendation system, and the like.

FIG. 18B illustrates a further implementation where alignment scores 1820 are determined using a similarity measure utilizing caption service 1822 and large language model 1824. As shown in FIG. 18B, alignment score determination engine 1800 may receive candidate content items 1810 and subscriber history information 1802. Subscriber history information 1802 may include one or more sequences of subscriber engagements 1806. Preferably, the sequences of subscriber engagements 1806 may include sequences of subscriber engagements 1806 that were performed within a single subscriber session and across multiple subscriber sessions. Additionally, subscriber candidate content items 1810 may include a corpus of content items, a set of content items that have been determined from a corpus of content items (e.g., by one or more stages of a multi-stage recommendation system, etc.), and the like.

As illustrated, candidate content items 1810 and the sequences of subscriber interactions may be processed by one or more caption services 1822. For example, the caption service(s) 1822 may process each content item of the sequences of subscriber engagements 1806 to generate a content item caption for each content item. In implementations in which multiple caption services are utilized, the service caption generated by each caption service for a content item may be combined to generate the content item caption for the content item. Similarly, candidate content items 1810 may also be processed by caption service(s) 1822 and, like content items of the sequences of subscriber engagements 1806, a caption may be generated for each content item of candidate content items 1810. For example, caption service(s) 1822 may process each content item of candidate content items 1810 to generate a content item caption for each content item. In implementations in which multiple caption services are utilized, the service caption generated by each caption service for a content item of the reduced content item corpus may be combined to generate the content item caption for that content item.

An LLM input based on the content item caption of each content item of sequences of subscriber engagements 1806 and the content item caption of each content item of candidate content items 1810 may be generated to be provided as an input to LLM 1824. Optionally, additional information, such as additional subscriber history information (e.g., demographic information, likes, dislikes, recent activity, etc.), the long-term objective, and the like may also be used to generate the LLM input. For example, the LLM input may be generated that includes or references the content item caption for each content item of the sequences of subscriber engagements 1806, that includes or references the content item caption for each content item of candidate content items 1810, and that includes instructions that the LLM is to consider the content item caption of each content item of sequences of subscriber engagements 1806, the long-term objective, and the like, and to select one or more content items as recommended and/or ranked content item(s) 1830, determine alignment scores 1820, and the like, based on the caption of each content item from candidate content items 1810. The instructions may further provide a minimum and maximum number of content items that are to be returned as recommended content items, instructions to indicate a sequence in which the recommended content items are to be presented, an LLM output structure that is to be provided by the LLM, etc. Still further, the LLM input may also provide additional context or parameters to guide the LLM in selection of recommended content items. For example, additional context or parameters may be specified based on subscriber history information 1802, such as indicating preferred styles, colors, shapes, etc., information known about the subscriber that are to be considered in conjunction with the caption of each content item in determining recommended content items, and the like.

LLM 1824, upon receiving the generated LLM input, processes the content item captions of sequences of subscriber engagements 1806, the content item captions of candidate content items 1810, subscriber history information 1802, instructions, etc., and determines one or more recommended and/or ranked content item(s) 1830 from candidate content items 1810, along with a sequence in which those content items are to be presented.

FIG. 19 is a flow diagram of an exemplary content item recommendation process 1900, according to exemplary embodiments of the present disclosure.

As shown in FIG. 19, exemplary process 1900 may begin with the determination of a long-term objective, as in step 1902. According to exemplary embodiments of the present disclosure, the long-term objective may include any desired long-term objective associated with subscriber behavior over a period of time. For example, a long-term objective may include a cumulative engagement of subscribers, which may be defined as a function of a depth of session and a number of session (e.g., a product of a depth of session and a number of session, etc.) over a defined time period. Accordingly, cumulative engagement may be represented, for the given time period, as:

$$\text{Cumulative Engagement} = \text{depth of session} \times \text{number of sessions}$$

Consequently, the depth of a session may be defined as a function of a subscriber's time spent accessing the online service (e.g., a number of engaged sessions, a total amount of time spent accessing the online service, and the like) and the actions performed by the subscriber (e.g., the type of actions performed by the subscriber, the number of actions performed by the subscriber, etc.), and the number of sessions can be a function of a frequency with which the subscriber accesses the online service. Accordingly, the depth of session and the number of sessions may be represented as:

$$\text{Depth of Session} = f(\text{time spent, actions performed})$$

$$\text{Number of Sessions} = f(\text{frequency of use})$$

According to other implementations of the present disclosure, other long-term objectives may be determined and/or defined, such as objectives based on shopping/purchase metrics, objectives based on other engagement and/or interaction metrics, objectives based on advertisement engagement and/or interaction metrics, objectives based on query and/or search metrics, and the like.

After the long-term objective is determined, according to exemplary embodiments of the present disclosure, content items that are to be served to subscribers of the online service may be mapped to the determined long-term objective. The mapping of the content items to the long-term objective may facilitate optimization and/or generation of a recommendation service to configure the recommendation service to determine content items to recommend to subscribers to encourage the long-term objective and may be performed as one or more mappings. In exemplary embodiments, each of the one or more mappings may be determined using one or more trained models that are configured to predict a respective target variable based on respective inputs.

As illustrated in FIG. 19, one or more interim mappings may be generated to generate the mapping between content items and the long-term objective, as in step 1904. In an exemplary implementation, three interim mappings may be determined and/or utilized in generating the mapping between the content items and the long-term objective. For example, a first mapping may map parameters associated with an aggregation of sessions to the long-term objective, a second mapping may map features within an individual session to the parameters associated with the aggregation of sessions, and a third mapping may map individual content items to the features within the individual sessions. In certain implementations, the mappings may be based on attributions that are determined in connection with the content items, which may reflect which content items drive subscribers to the long-term objective. For example, alignment scores may be generated for the content items that represent a relevance and/or influence that each content item may have in driving or motivating subscribers towards the long-term objective.

The first mapping may map parameters associated with an aggregation of subscriber sessions to the long-term objective. In exemplary implementations of the present disclosure, the parameters associated with an aggregation of subscriber sessions may include, for example, features, metrics, and/or parameters such as a frequency at which the subscriber initiates sessions with the online service within a defined time period (e.g., 1 day, 3 days, 5 days, 1 week, 2 weeks, 1 month, etc.), a depth of session associated with the sessions (e.g., a number of engaged sessions, a total amount of time spent accessing the online service, a number of content items viewed, and the like), and the like. Accordingly, a first model may be trained to predict a long-term objective based on an input of one or more parameters across an aggregation of subscriber sessions in mapping the long-term objective may be mapped to a plurality of corresponding parameters associated with an aggregation of subscriber sessions. Optionally, the mappings and generation of the first model may be based at least in part on probabilities associated with a state and current context of the subscriber, as described further herein in connection with at least FIG. 16 and 19.

In addition to generation of a first mapping, a second mapping that maps features associated within individual subscriber sessions to parameters of the aggregation of subscriber sessions may be generated. Similar to the parameters associated with the aggregation of subscriber sessions, in exemplary implementations of the present disclosure, the features associated with the individual subscriber sessions may include, for example, features, metrics, and/or parameters such as a session depth (e.g., a number of engaged sessions, a total amount of time spent accessing the online service, a number of content items viewed, and the like), the actions performed by the subscriber (e.g., the type of actions performed by the subscriber, the number of actions performed by the subscriber, etc.), a session length (e.g., amount of time spent on the session), an entropy and/or diversity associated with the session (e.g., number of interests and/or topics explored, number of different content item types explored, number of different content item formats explored - home page, search, shopping, etc.), and the like. Accordingly, a second model may be trained to predict parameters across an aggregation of subscriber sessions based on inputs of one or more features associated with individual subscriber sessions in mapping the features associated with individual subscriber sessions to parameters of the aggregation of subscriber sessions. Optionally, the mappings and generation of the second model may be based at least in part on probabilities associated with a state and current context of the subscriber.

Further, a third mapping that maps content items to the features of the individual subscriber sessions may be generated. In exemplary implementations, a third model may be trained to predict the features of the individual subscriber sessions based on an input of one or more content items. Optionally, the mappings and generation of the third model may be based at least in part on probabilities associated with a state and current context of the subscriber.

Although exemplary embodiments of the present disclosure are described as utilizing three interim mappings (e.g., the parameters associated with an aggregation of subscriber sessions to the long-term objective and the features associated with individual subscriber sessions to the parameters associated with an aggregation of subscriber sessions) and/or metrics, any number of interim mappings and/or metrics may be used. The mappings may then be utilized to optimize, fine-tune, and/or otherwise train a recommendation system and/or service to configure the recommendation system and/or service to recommend content items to subscribers to achieve the long-term objective, as in step 1906. For example, the mapping may be used to modify a utility function associated with one or more stages of the recommendation system, be used as rewards in applying a reinforcement learning technique to further train and/or fine-tune the recommendation system, and the like.

In step 1908, a request for content items may be received. The request may be an explicit request, such as a text-based search request or a specific search request in which one or more content items are selected or provided by a user. In other examples, the request may be implicit. For example, as a user browses content items of the hosting service, the hosting service may maintain identifiers of the browsed content items and utilize those content items as the basis for a request. As another example, if a user selected to view or close-up a content item from the corpus, that content item may be utilized as a request to determine other content items that are similar to the viewed content item. According to other aspects, the request may be included as part of and/or in connection with a request to access a homepage and/or a home feed, an indication that recommended content items are to be pushed to a subscriber, and the like. Still further, the disclosed implementations may be utilized to determine content items without an explicit or implicit request from a user.

In steps 1910 and 1912, recommended content items may be determined using the optimized recommendation system to encourage the long-term objective, and the recommended content items may be returned (e.g., provided to the subscriber, presented on a client device, etc.).

FIG. 20A is a flow diagram of an exemplary attribution determination process, according to exemplary embodiments of the present disclosure.

As shown in FIG. 20A, process 2000 may begin by obtaining candidate content items for a subscriber, as in step 2002, and obtaining subscriber history information, as in step 2004. In step 2006, alignment scores may be determined for the candidate content items. In an exemplary implementation, the alignment scores may be determined using a similarity measure utilizing a query, key, and value vector technique. For example, the subscriber history information may include one or more subscriber interactions and sequences of subscriber engagements that preceded each subscriber interaction. Preferably, the sequences of subscriber engagements may include sequences of subscriber engagements that were performed within a single subscriber session and across multiple subscriber sessions. Additionally, the candidate content items may include a corpus of content items, a set of content items that have been determined from a corpus of content items (e.g., by one or more stages of a multi-stage recommendation system, etc.), and the like. In the described implementation, each subscriber interaction may represent a query, a sequence of subscriber engagements preceding each subscriber interaction may represent the key, and the candidate content items may represent the values. According to aspects of the present disclosure, the particular subscriber interaction may correspond to the long-term objective. For example, the subscriber interaction may include the desired subscriber behavior within a desired time period after the sequence of subscriber engagements preceding the subscriber interaction.

In determining the alignment scores, for a particular subscriber interaction (e.g., an interaction with a content item, a like of a content item, a sharing of a content item, a saving of a content item, etc.), a sequence of subscriber engagements preceding the particular subscriber interaction may be identified. The sequence of subscriber engagements may include a sequence of content items with which the subscriber engaged prior to the particular subscriber interaction, and a corresponding candidate content item may be retrieved for each content item in the sequence of subscriber engagements. Accordingly, the particular subscriber interaction may be a query, the sequence of subscriber engagements may be the key, and the retrieved candidate content items may be the value. Given the query, key, and the value, a similarity measure may be determined between the particular subscriber interaction and each content item in the sequence of subscriber engagements. For example, a cosine similarity may be determined between an embedding vector representative of the particular subscriber interaction and an embedding vector representative of each content item included in the sequence of subscriber engagements. Other similarity measures may alternatively be utilized such as, by way of illustration and not limitation, a dot product, the Normalized Hamming Distance measure, a Euclidian distance measure, and the like. The similarity measure between the particular subscriber interaction and each content item in the sequence of subscriber engagements may represent the relevance and/or influence that each content item had on the particular subscriber interaction. Further, as the embedding vectors preferably encode non-visual features, such as textual features, semantic features, etc. (in addition to visual features) of the content items, the similarity measure is representative of a comprehensive similarity between the particular subscriber interaction and each content item in the sequence of subscriber engagements. The similarity measures between the particular subscriber interaction and each content item in the sequence of subscriber engagements may be returned as alignment scores for the content items included in the sequence of subscriber engagements. Accordingly, the alignment scores may represent the relevance and/or influence of each content item in the sequence of subscriber engagements on the particular subscriber interaction.

Additionally, as shown in FIG. 20A, in step 2008, weights for the candidate content items may be determined based on the alignment scores. For example, the similarity measures/alignment scores may be processed (e.g., a softmax function, etc.) to determine a distribution for the candidate content items, as well as a weighted sum of the candidate content items. The weights and/or weight sum of the candidate content items can be provided back to the recommendation system, as in step 2010. For example, the weighted sum may be used to modify the utility function associated with one or more stages of the recommendation system, be used as rewards in applying a reinforcement learning technique to further train and/or fine-tune the recommendation system, and the like.

Alternatively and/or in addition, attention scores may be used in place of or in addition to alignment scores. Similar to the determination of alignment scores, a representation of a subscriber interaction (e.g., representation of the content item with which the subscriber interacted that is of interest, etc.) may be modeled as a query vector and the content items in an input sequence of content items (e.g., representations of a sequence of content items with which the subscriber interacted that may be of interest, etc.) may be modeled as the key vector. Accordingly, the dot product of the query and key vectors may provide attention scores for each content item in the input sequence of content items, which may represent a relevance of each content item in the sequence of content items to the subscriber interaction of interest.

FIG. 20B is a flow diagram of an exemplary attribution determination process, according to exemplary embodiments of the present disclosure.

As shown in FIG. 20B, process 2050 may begin by obtaining candidate content items for a subscriber, as in step 2052, and obtaining subscriber history information, as in step 2054. Subscriber history information may include one or more sequences of subscriber engagements. Preferably, the sequences of subscriber engagements may include sequences of subscriber engagements that were performed within a single subscriber session and across multiple subscriber sessions. Additionally, subscriber candidate content items may include a corpus of content items, a set of content items that have been determined from a corpus of content items (e.g., by one or more stages of a multi-stage recommendation system, etc.), and the like.

As illustrated, in step 2056, the candidate content items and the sequences of subscriber interactions may be processed by one or more caption services. For example, the caption service may process each content item of the sequences of subscriber engagements to generate a content item caption for each content item. In implementations in which multiple caption services are utilized, the service caption generated by each caption service for a content item may be combined to generate the content item caption for the content item. Similarly, the candidate content items may also be processed by the caption service and, like content items of the sequences of subscriber engagements, a caption may be generated for each content item of the candidate content items. For example, the caption service may process each content item of the candidate content items to generate a content item caption for each content item. In implementations in which multiple caption services are utilized, the service caption generated by each caption service for a content item of the reduced content item corpus may be combined to generate the content item caption for that content item.

In step 2058, an LLM input based on the content item caption of each content item of the sequences of subscriber engagements and the content item caption of each content item of the candidate content items may be generated to be provided as an input to an LLM. Optionally, additional information, such as additional subscriber history information (e.g., demographic information, likes, dislikes, recent activity, etc.), the long-term objective, and the like may also be used to generate the LLM input. For example, the LLM input may be generated that includes or references the content item caption for each content item of the sequences of subscriber engagements, that includes or references the content item caption for each content item of the candidate content items, and that includes instructions that the LLM is to consider the content item caption of each content item of the sequences of subscriber engagements, the long-term objective, and the like, and to select one or more content items as recommended and/or ranked content items, determine alignment scores, and the like, based on the caption of each content item from the candidate content items. The instructions may further provide a minimum and maximum number of content items that are to be returned as recommended content items, instructions to indicate a sequence in which the recommended content items are to be presented, an LLM output structure that is to be provided by the LLM, etc. Still further, the LLM input may also provide additional context or parameters to guide the LLM in selection of recommended content items. For example, additional context or parameters may be specified based on subscriber history information, such as indicating preferred styles, colors, shapes, etc., information known about the subscriber that are to be considered in conjunction with the caption of each content item in determining recommended content items, and the like.

In step 2060, the LLM input is processed using an LLM to determine one or more recommended and/or ranked content items from the candidate content items, along with a sequence in which those content items are to be presented.

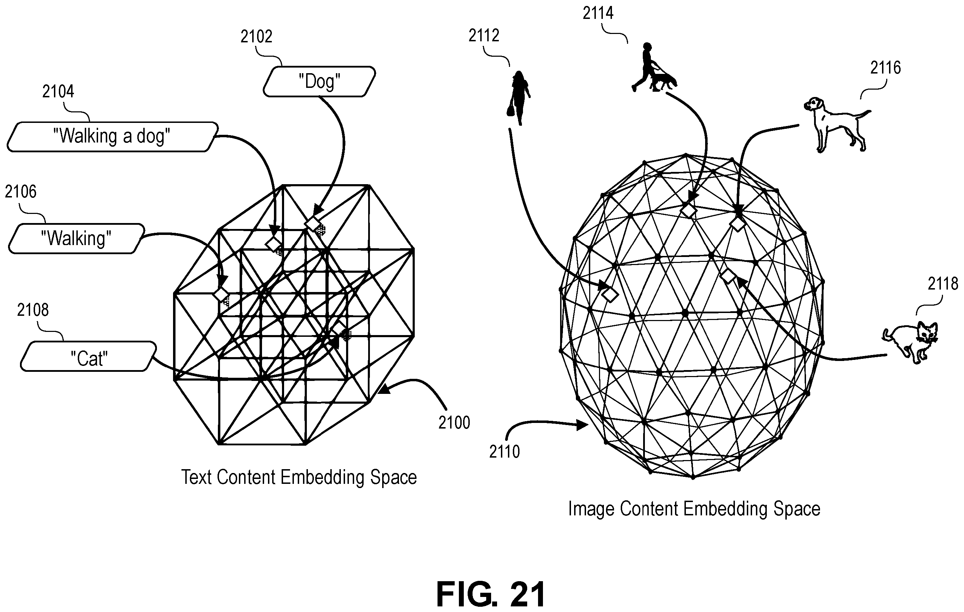

In implementations in which a text request is provided as the request or content items of the request are processed to generate a text request, as suggested above, embedding vector generators can be used to generate embedding vectors from the text request and project the embedding vectors into a suitable content embedding space. Generally speaking, an embedding vector generator trained to generate embedding vectors for text-based input generates embedding vectors that project into a text-based embedding space. Similarly, an embedding vector generator trained to generate embedding vectors for image-based input generates embedding vectors that project into an image-based embedding space. To further illustrate, FIG. 21 is a pictorial diagram illustrating the projection of items (via embedding vectors) into a type-corresponding embedding space. In particular, FIG. 21 illustrates that text-based queries 2102, 2104, 2106, 2108, via associated embedding vectors (i.e., the attached arrows), are projected into a text-based embedding space 2100, and that image-based content items 2112, 2114, 2116, 2118, via associated embedding vectors, are projected into an image-based embedding space 2110. For a networked hosting service that hosts hundreds of millions of images, such as the hosting service discussed, a mapping must be generated and maintained that maps text-based queries to a list of corresponding images. While this can be implemented, it requires substantial storage for the mappings, requires substantial processing bandwidth to periodically generate and maintain these mappings, and generally limits the number of images that can be associated with any given text-based query. Further, and perhaps more importantly, a hosting service often does not have enough information about longer queries and/or queries with typographical errors. For example, in a system that simply maintains mappings of queries to images, the query "dress" will most likely be mapped to a significant number of corresponding images, yet the query, "yellwo dress with orange and blue stripes," will likely not be mapped at all since, perhaps, it has never been received before, and/or because of the misspelling, "yellwo." However, according to aspects of the disclosed subject matter and as discussed herein, through the use of embedding vectors, the hosting service can project the embedding vector of the text-based request into an image-based embedding space to find relevant results.

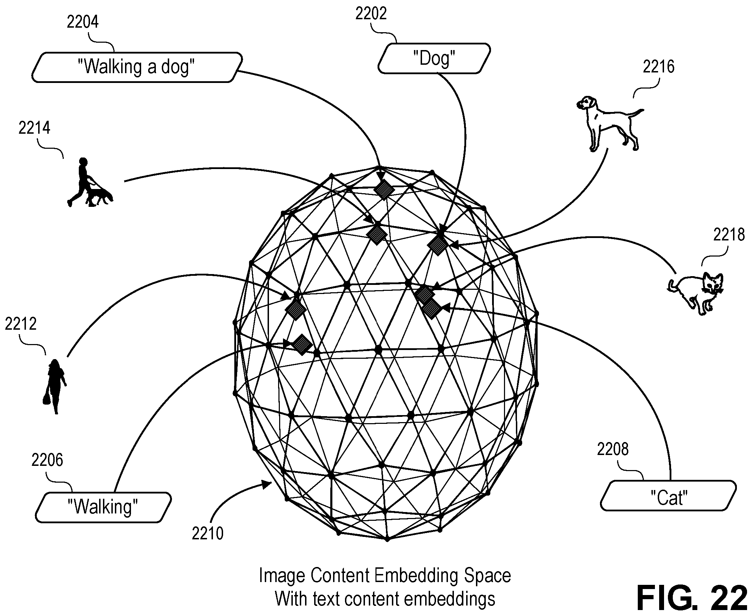

According to aspects of the disclosed subject matter, rather than training embedding vector generators to generate embedding vectors that project into an embedding space according to the input type (e.g., text-based embedding vectors that project into a text-based embedding space and image-based embedding vectors that project into an image-based embedding space), one or more embedding vector generators can be trained to generate embedding vectors for text-based queries that project the text-based queries directly into the image-based embedding space. Indeed, according to aspects of the disclosed subject matter, an embedding vector generator may be trained (either as a single instance or as part of an ongoing training) by query/user interaction logs to generate embedding vectors for text-based queries into a non-text content item embedding space. FIG. 22 is a pictorial diagram illustrating the projection of items, including both images 2212, 2214, 2216, 2218 and text-based queries 2202, 2204, 2206, 2208, via associated embedding vectors, into an image-based embedding space 2210. Advantageously, this alleviates the additional processing requirements of generating mappings between queries and image content items, of limited number of mappings between queries and the corresponding image content items, and in maintaining the mapping tables as the corpus of image content items 134 is continually updated.

Regarding the projection of text-based content (e.g., text-based queries 2202-1508), it should be appreciated that some text-based content will be projected, via an associated embedding vector, to the same location as an image, as is the illustrated case with text-based query 2202 "Dog" and image 2216. In other instances, text-based content may be projected, via an associated embedding vector, to a location that is near an image projected into the embedding space that, at least to a person, appears to be the same subject matter. For example, text-based query 2204 "Walking a dog" is projected near to, but not to the same location as the projection of image 2214. This possibility reflects the "freedom" of the trained embedding vector generator to differentiate on information that may or may not be apparent to a person, a common "feature" of machine learning.

To further illustrate the process of responding to a text-based request with a response containing one or more non-text content items, reference is now made to FIG. 23. FIG. 23 is a flow diagram illustrating an exemplary process 2300 for returning one or more content items, particularly non-text content items, in response to a text-based query/request, in accordance with aspects of the disclosed subject matter. Beginning at block 2302, a hosting service maintains a corpus of content items the service can draw from in response to a request.

In accordance with aspects of the disclosed subject matter, content items of the corpus of content items, such as corpus of content items 134, are non-text content items. By way of illustration and not limitation, non-text content items may comprise images, video content, audio content, data files, and the like. Additionally, and/or alternatively, a content item may be an aggregation of several content types (e.g., images, videos, data, etc.) and textual content - though not an aggregation of only text content. Additionally, while content items are non-text content items, these content items may be associated with related textual content. Typically, though not exclusively, related textual content associated with a content item may be referred to as metadata. This textual metadata may be any number of text-based sources such as, by way of illustration and not limitation, source file names, source URL (uniform resource locator) data, user-supplied comments, titles, annotations, and the like.

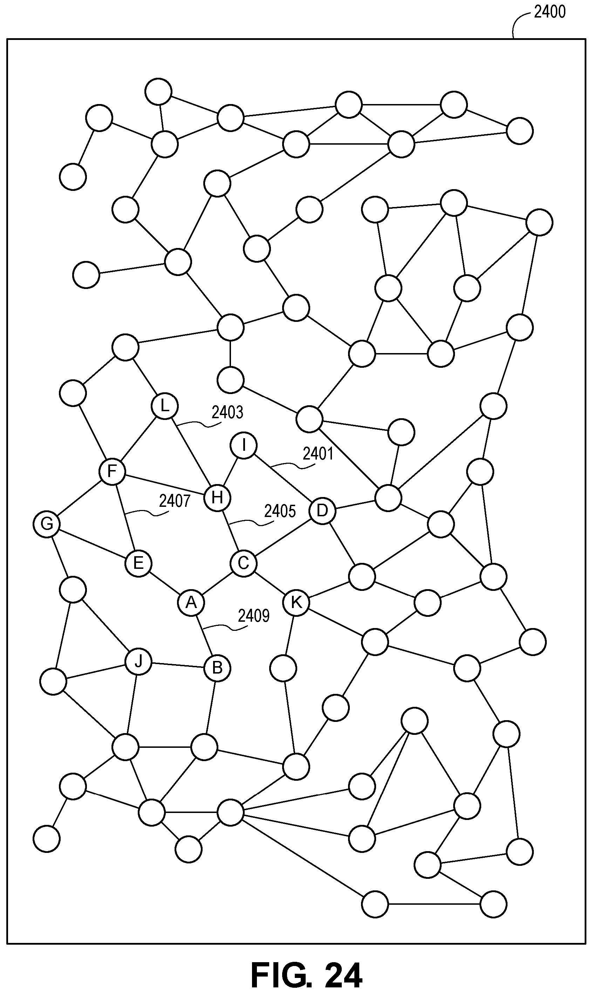

According to aspects of the disclosed subject matter and, in maintaining the corpus of content items, such as the corpus of content items 134 illustrated in FIG. 1, each content item is associated with a corresponding embedding vector, or may be associated with an embedding vector in a just-in-time manner, the embedding vector projecting the corresponding content item into a content item embedding space. Further, and according to various aspects of the disclosed subject matter, each content item of the corpus of content items may be associated with a node in a content item graph. With additional reference to FIG. 24, FIG. 24 is a block diagram illustrating an exemplary content item graph 2400 of content items from a corpus of content items, configured according to aspects of the disclosed subject matter, such as the corpus of content items 134 of FIG. 1.

As will be readily appreciated by those skilled in the art, a content item graph, such as content item graph 2400, includes nodes and edges, where each node corresponds to a content item of the corpus of content items, and an edge represents a relationship between two nodes corresponding to two distinct content items of the content graph. By way of illustration, nodes in content item graph 2400 are represented as circles, including nodes A-L, and relationships are presented as lines between nodes, such as relationships 2401, 2403, 2405, 2407, 2409. There may be multiple bases for relationships between content items which include, by way of illustration and not limitation, co-occurrence within a collection of content items, commonality of ownership of content items, user engagement of content items, similarity between content items, and the like.

In regard to process 2300, at block 2304 the hosting service receives a text-based request for content items, such as a text-based request generated as discussed above. According to aspects of the disclosed subject matter, the text-based request comprises one or more text-based terms that, collectively, provide information to a hosting service, such as hosting service 130 of FIG. 1, to identify content items from its corpus of content items that are viewed as related, relevant, and/or generally responsive to the request.

At block 2306, an optional step may be taken to conduct a semantic analysis of the received request. According to aspects of the disclosed subject matter and by way of definition, this optional semantic analysis processes the terms of the request, including identifying syntactic structures of terms, phrases, clauses, and/or sentences of the request to derive one or more meanings or intents of the subscriber's request. As should be appreciated, one or more semantic meanings or intents of the request may be used to identify a specific set of content items for terms of the search request that may have multiple meanings, interpretations or intents.

At block 2308, the received request is processed to generate a set of terms of the request. Typically, though not exclusively, the terms are processed by a lexical analysis that parses the request according to white space to identify the various terms. In addition to the parsing of the request, spell correction, expansion of abbreviations, and the like may occur in order to generate the set of terms for the received request.

At block 2310, a morphological analysis is conducted to generate a set of word pieces from the set of text-based terms of the request. According to at least some implementations of the disclosed subject matter, at least one term of the text-based request includes at least two word pieces. According to various implementations of the disclosed subject matter, the word pieces are generated according to and comprise the various parts of a word including, but not limited to: e.g., a prefix, a suffix, a prefix of a suffix, a stem, and/or a root (or roots) of a word to term, as well as sub-strings of the same. Indeed, all parts of a term are found in a word piece for that term. Additionally, and according to further aspects of the disclosed subject matter, word pieces that are not the leading characters of a term are identified. To illustrate, for the word/term "concatenation," the word pieces generated would be "conca," "##tena," and "##tion," with the characters, "##," included for designating that the following word piece was not found at the beginning of the term. According to alternative aspects of the disclosed subject matter, each word piece within the set of word pieces is a morpheme of at least one of the terms of the set of text-based terms of the request.

Regarding the word parts, the text term "running" may be broken down into two word pieces: "run" being the root, and "##ing" being a suffix indicative of something actively running. A lexical or etymological analysis may be conducted to identify the various word parts of each term, where each word part is viewed as a "word piece."

Regarding morphemes and by way of definition, a morpheme (or word piece) is the smallest meaningful unit in a language and is a part of a word/term. A morpheme is not identical to a word: a word includes one or more morphemes and a morpheme may also be a complete word. By way of illustration and not limitation, "cat" is a morpheme that is also a word. On the other hand, "concatenation" is a word comprising multiple morphemes: "*con*," "*catenate*" and "*tion*," where "*catenate*" is a completed form of "*catena*," completed as part of generating the word pieces. The identifiers indicating that the word piece does not comprise the leading characters of the term may, or may not be included, as determined according to implementation requirements.

According to various implementations of the disclosed subject matter, the morphological analysis may be conducted by an executable library or service, and/or a third-party service, that examines a given word and provides the morphemes for that given word. In various alternative implementations, a word/morpheme list cache may be utilized to quickly and efficiently return one or more morphemes of a given input word.

In yet a further implementation of the disclosed subject matter, various technologies, such as Byte Pair Encoding (BPE), may be used to generate word pieces for the text-based terms of the text-based request. Generally speaking, these various technologies, including BPE, operate on a set of statistical rules based on some very large corpus text. As those skilled in the art will appreciate, BPE is often used as a form of data compression in which the most common consecutive characters of input data are replaced with a value that does not occur within that data. Of course, in the present instance, the BPE process does not replace the consecutive characters in the term itself, but simply identifies the consecutive characters as a word piece.

At block 2312, embedding vectors for each of the word pieces of the set of word pieces is obtained. According to aspects of the disclosed subject matter, the embedding vectors are content item embedding vectors, meaning that the embedding vectors project the corresponding word piece into the content item embedding space of the content items in the corpus of content items.

According to various implementations of the disclosed subject matter, a content item embedding vector of a given word piece may be generated in a just-in-time manner by a suitably trained embedding vector generator. According to additional and/or alternative implementations, previously generated and cached content item embedding vectors may be retrieved from a cache of the hosting service configured to hold word piece - embedding vector pairs.

At block 2314, weightings for the various word pieces of the set of word pieces are optionally determined. Weightings may be optionally applied to emphasize important word pieces of a request. These weightings may be determined, by way of illustration and not limitation, according to the importance of the word pieces themselves, the determined potential topic of the requesting subscriber (as optionally determined in block 2306), multiple instances of a word piece among the terms of the request, and the like.

At block 2316, the embedding vectors of the word pieces are combined to form a representative embedding vector for the request. According to various implementations of the disclosed subject matter, the various embedding vectors may be averaged together to form the representative embedding vector. Optionally, the weightings determined in block 2312 may be applied in averaging of the various embedding vectors to favor those word pieces of the set of word pieces that are viewed as being more important to the request.

According to implementations of the disclosed subject matter, the text-based request and the representative embedding vectors may be stored in a cache, so that subsequent instances of receiving the same text-based request may be optimized through simple retrieval of the corresponding representative embedding vector. Of course, if there is no entry for a particular request, or if the implementation does not include a text request - embedding vector cache, the representative embedding vector for a text-based request may be generated in a just-in-time manner.

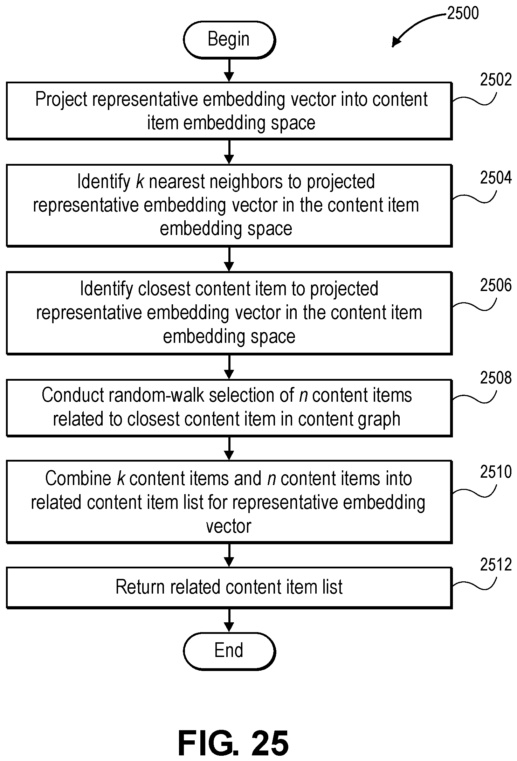

With the representative embedding vector for the request determined from embedding vectors of the word pieces, at block 2318 a set of content items is determined from the corpus of content items. A description of determining a set of content items from the corpus of content items is set forth in more detail in regard to routine 2500 of FIG. 25. Indeed, with reference to that figure, FIG. 25 is a flow diagram illustrating an exemplary routine 2500 for determining a set of content items for a representative embedding vector, in accordance with aspects of the disclosed subject matter.

Beginning at block 2502, the representative embedding vector for the word pieces is projected into the content item embedding space. At block 2504, with the content items of the corpus of content items projected into the content item embedding space, a set of $k$ content items, also commonly referred to as the nearest neighbors to the projected representative embedding vector, are identified. More particularly, this set of $k$ content items whose projection into the content item embedding space are closest, according to the distance measurement, to the projection of the representative embedding vector are selected. In various implementations of the disclosed subject matter, the distance measurement of embedding vectors is a cosine similarity measurement. Of course, other similarity measures may alternatively be utilized such as, by way of illustration and not limitation, the Normalized Hamming Distance measure, a Euclidian distance measure, and the like. In various implementations of the disclosed subject matter, the value of $k$ may correspond to any particular number as may be viewed as a good representation of close content items to the representative embedding vector. In various non-limiting implementations, the value of $k$ may be twenty. Of course, in alternative implementations, the value of $k$ may be higher or lower than twenty.

At block 2506, a closest content item of the corpus of content items to the projected representative embedding vector (often included among the $k$ nearest neighbors) is identified. This closest content item may be used as an "origin" of a random-walk to identify a set of $n$ related content items within the content item graph in which the content items of the corpus of content items are represented.

As described in greater detail in co-pending and commonly assigned U.S. Patent Application No. 16/101,184, filed August 10, 2018, which is incorporated herein by reference, and according to aspects of the disclosed subject matter, a random-walk selection relies upon the frequency and strength of edges between nodes in a content item graph, where each edge corresponds to a relationship between two content items. As mentioned above, a "relationship" between two content items in a content item graph represents a relationship between the two content items, such as, by way of illustration and not limitation, co-occurrence within a collection, common ownership, frequency of access, and the like.

At block 2508 and according to aspects of the disclosed subject matter, a random-walk selection is used to determine a set of $n$ related content items. This random-walk selection utilizes random selection of edge/relationship traversal between nodes (i.e., content items) in a content item graph, such as content item graph 2400, originating at the closest content item to the projected representative embedding vector. By way of illustration and not limitation, and with returned reference to FIG. 24, assume that the closest content item to the projected representative embedding vector corresponds to node A in the content item graph 2400.

According to further aspects of the disclosed subject matter, in a random-walk, a random traversal is performed, starting with an origin, e.g., node A, in a manner that limits the distance/extent of accessed content items reached in a random traversal of the content items of the content item graph 2400 by resetting back to the original content item after several traversals. Strength of relationships (defined by the edges) between nodes is often, though not exclusively, considered during random selection to traverse to a next node. Indeed, a random-walk selection of "related nodes" relies upon frequency and strength of the various edges to ultimately identify the second set of $n$ content items of the content item graph 2400. These "visited" nodes become candidate content items of the $n$ content items that are related to the origin content item. At the end of several iterations of random-walking the content item graph 2400 from the origin (e.g., node A), a number of those nodes (corresponding to content items) that have been most visited become the $n$ content items of the set of related content items. In this manner, content items close to the original content item that have stronger relationships in the content item graph are more likely included in this set of *n* content items. While the value of *n* may correspond to any particular number as may be viewed as a good representation of close content items, in various non-limiting implementations, the value of *n* may be twenty-five. Of course, in alternative implementations, the value for *n* may be higher or lower than twenty-five.

At block 2510, the set of *k* content items and the set of *n* content items (which may share common content items) are combined into a related content item list for the representative embedding vector. According to various aspects of the disclosed subject matter, the combining process may include removing duplicate instances of the same content item in the related content item list.

At block 2512, the related content item list is returned. Thereafter, routine 2500 terminates.

While routine 2500 describes the use of a combination of two techniques for identifying content, i.e., *k* nearest neighbors (often referred to as kNN) and random-walk, it should be appreciated that in any given implementation, either or both techniques may be used when obtaining content for a user's request from a representative embedding vector generated from word pieces of the text-based request. Accordingly, the discussion of using both techniques in routine 2500 should be viewed as illustrative and not limiting upon the disclosed subject matter.

With returned reference to routine 2300, after obtaining the related content item list, at block 2320 a set of x content items from the related content item list are selected as content items to be returned as a response to the request. At block 2322, the selected x content items are returned. Thereafter, routine 2300 terminates.

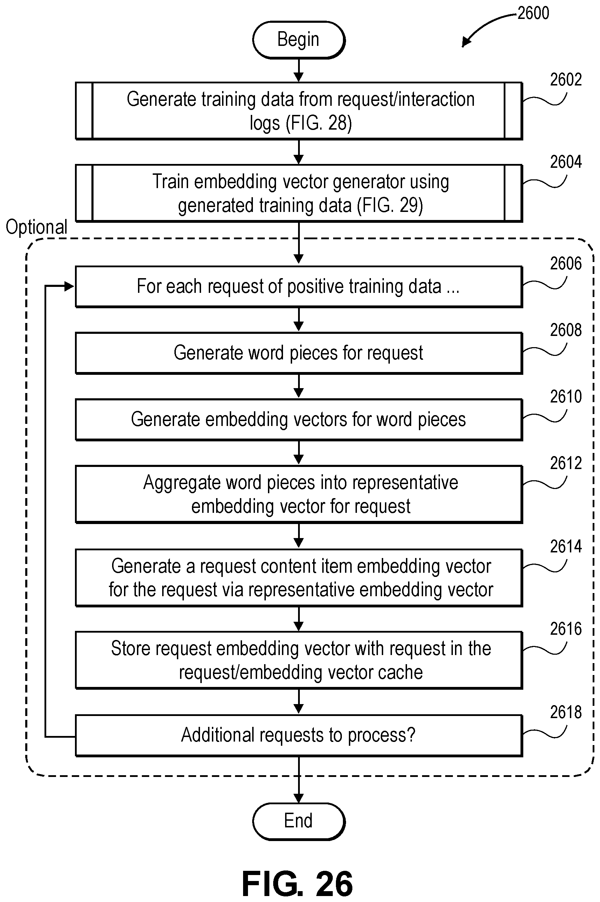

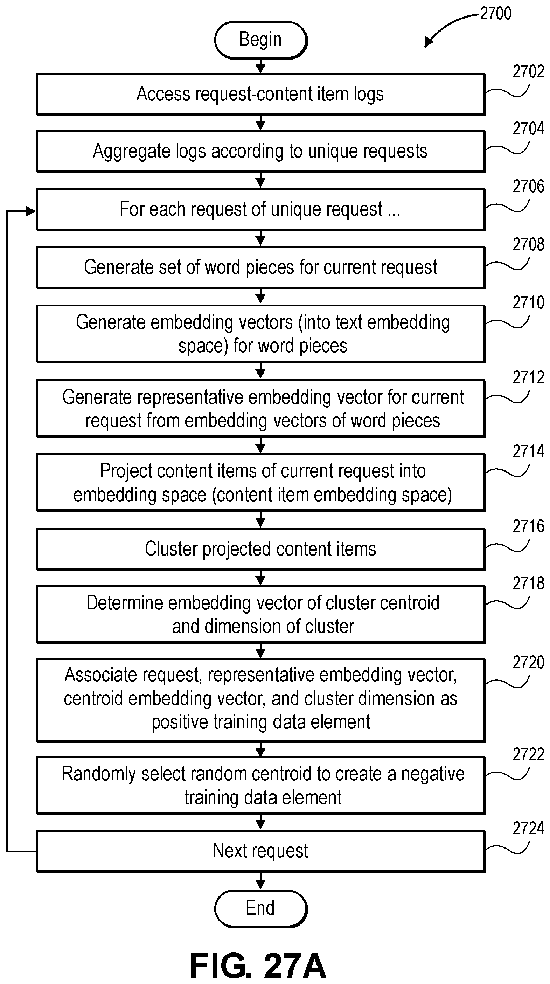

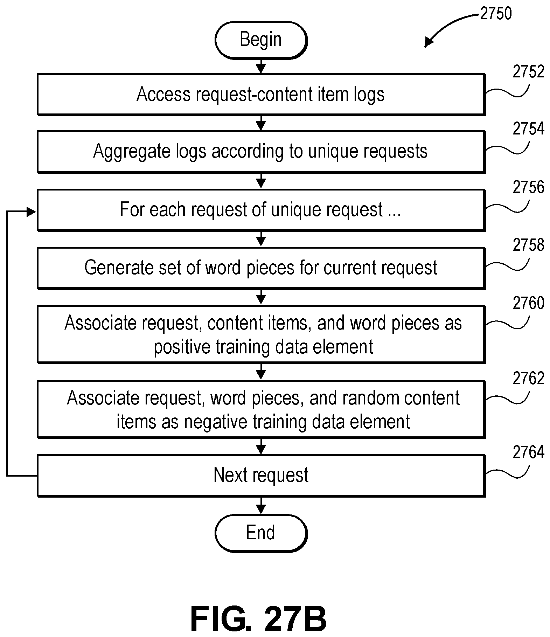

As indicated above, a trained embedding vector generator is used to generate embedding vectors into a content item embedding space for word pieces. FIG. 26 illustrates an exemplary routine 2600 for training a machine learning model to generate embedding vectors into a content item embedding space for a text-based request, in accordance with aspects of the disclosed subject matter. Beginning at block 2602, a set of training data is generated, comprising both positive training tuples and negative training tuples. Each training tuple comprises a text-based request, a representative embedding vector generated from word pieces of the text-based request, a centroid embedding vector projecting the text-based request (using the representative embedding vector) to a location in the content item embedding space, and a distance measure to identify content items that are viewed as falling within the neighborhood area of the centroid. Regarding the generation of these training tuples, reference is made to FIGS. 27A and 27B.

FIG. 27A demonstrates a flow diagram illustrating an exemplary routine 2700 for generating training data for training a machine learning model to generate an embedding vector for a text-based query from a representative embedding vector generated from word pieces of the text-based query, and in accordance with aspects of the disclosed subject matter. At block 2702, a set of request/content item logs that are maintained by the hosting service are accessed. These request/content item logs include request/content item pairs corresponding to a text-based request by a subscriber and one or more content items with which the requesting subscriber interacted, indicative of a positive interaction on the part of the subscriber with the content items resulting from the request.

At block 2704, the request/content item logs are aggregated according to unique requests. In this aggregation, there may be (and will likely be) multiple content items associated with a unique, text-based request. Each of these content items represents a positive relationship to the text-based request.

At block 2706, an iteration loop is begun to iterate through and process the unique requests of the request/content item logs, to generate training data for training a machine learning model to generate embedding vectors for text-based requests into the content item embedding space. Thus, at block 2708 and with regard to a currently iterated request (with corresponding content items), a set of word pieces for the text-based request is generated. As suggested above, these word pieces may correspond to parts of the words, or, in the alternative, correspond to morphemes. At block 2710, embedding vectors are generated for each of the word pieces. According to aspects of the disclosed subject matter, the embedding vectors generated from the word pieces are embedding vectors into a text-based/word-pieces embedding space, not the content item embedding space.

At block 2712, a representative embedding vector (into the text-based/word-pieces embedding space) is generated for the request from the embedding vectors of the word pieces. Typically, though not exclusively, the word pieces embedding vectors are averaged together to form the representative embedding vector. Weighting for word pieces that are viewed as more important, e.g., root portions of word pieces, post-fixes that indicate activity, etc., may be given more weight when forming the resulting representative embedding vector.

With the representative embedding vector generated for the request, at block 2714, the content items associated with the currently iterated text-based request are projected (logically) into the multi-dimensional content item embedding space. At block 2716, the projected content items are clustered to identify a type of "neighborhood" in which a content item positively represents the text-based request. At block 2718, a centroid for the cluster is identified, along with dimensional information of the cluster.

At block 2720, the text-based request, the representative embedding vector, a centroid embedding vector of the cluster's centroid, and the cluster's dimensional data are stored as a positive training data element for training the machine learning model. Since negative training elements are also needed, at block 2722, an embedding vector in the content item space that points outside of the cluster is used to replace the centroid embedding vector and saved as a negative training element.

Regarding blocks 2716-2720, while these blocks describe the identification of a centroid of a cluster, and using the representative embedding vector, the centroid, and some measure of the cluster's dimensions as a positive training data element, in alternative implementations, each image projected in the image-based embedding space within the generated cluster is paired with the representative embedding vector and the cluster's dimensional data is stored as a positive training data element for training the machine learning model. In still further alternative implementations, a simple, predefined distance measure from the centroid may be used, rather than cluster dimensions.

At block 2724, if there are additional unique requests to process in the iteration, the routine 2700 returns to block 2706 to process the next unique, text-based request from the request/content item logs. Alternatively, if there are no more requests to process in the iteration, routine 2700 terminates, having generated both positive and negative training data/tuples.

As those skilled in the art will appreciate, there are often numerous ways to generate training data to train a machine learning model. In this regard, FIG. 27B demonstrates another flow diagram illustrating an alternative exemplary routine 2750 for generating training data for training a machine learning model to generate an embedding vector for a text-based query from word pieces of the text-based query, all in accordance with various aspects of the disclosed subject matter.

Beginning at block 2752, a set of request/content item logs that are maintained by the hosting service are accessed. As indicated above, these request/content item logs include request/content item pairs corresponding to a text-based request by a subscriber and one or more content items with which the requesting subscriber interacted, where the one or more content items are viewed as being indicative of a positive interaction on the part of the subscriber resulting from the request. At block 2754, the request/content item logs are aggregated according to unique requests among all the requests, and further combined with the content items of each instance of a request. Of course, in this aggregation, there may be (and will likely be) multiple content items associated with a unique, text-based request. As mentioned, each of these content items represents a positive relationship to the text-based request.

At block 2756, an iteration loop is begun to iterate through and process the unique requests of the request/content item logs, to generate training data for training a machine learning model to generate embedding vectors for text-based requests into the content item embedding space. Thus, at block 2758 and with regard to a currently iterated text-based request (with corresponding content items), a set of word pieces for the text-based request is generated. As suggested above, these word pieces may correspond to parts of the words (terms of the text-based request) or, in alternative implementations, correspond to morphemes of the text terms of the text-based request.

At block 2760, the currently processed request, the content items that are associated with the currently processed request, and the word pieces are stored as a positive training element. As an alternative to generating a single training element that is associated with multiple content items, multiple positive training elements may be generated from the request and word pieces, each of the multiple positive training elements being associated with one of the content items of the multiple content items associated with the currently processed request along with the request and set of word pieces.

At block 2762, the currently processed request, a set of randomly selected content items, and the word pieces are stored as a negative training element. Touching on the alternative mentioned in regard to block 2760, multiple negative training elements may be generated, with each negative training element being associated with a single, randomly-selected content item.

At block 2764, if there are additional unique requests to process in the iteration, the routine 2750 returns to block 2756 to process the next unique, text-based request from the request/content item logs. Alternatively, if there are no more requests to process in the iteration, routine 2750 terminates, having generated both positive and negative training data/tuples.

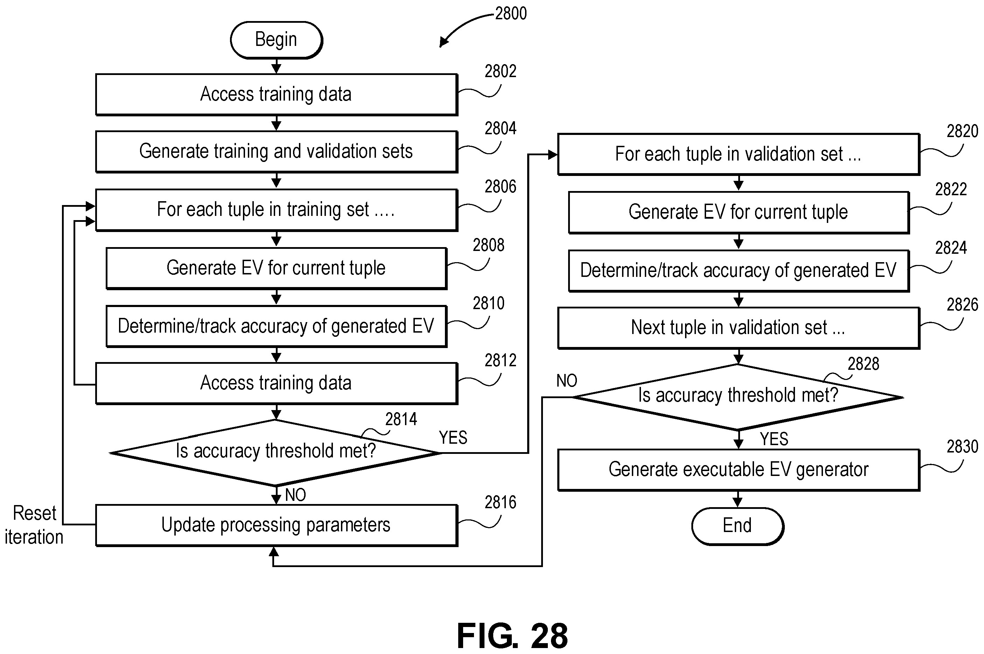

Returning to routine 2600, after generating positive and negative training tuples from the request/content item logs, at block 2604, a machine learning model, such as a deep neural network and/or a convolutional neural network, is trained as an embedding vector generator to generate embedding vectors into a content item embedding space for text-based requests according to the word pieces of the requests. This training of the embedding vector generator is made according to the positive and negative training tuples, i.e., the training data, as may have been generated in routine 2700. A generalized routine for training a machine learning model is set forth below in regard to routine 2800 of FIG. 28.

After training an embedding vector generator that generates embedding vectors into a content item embedding space for text-based requests, optional steps may be taken. More particularly, at block 2606, an iteration loop may be carried out to iterate through the unique text-based requests of the request/content item logs in order to pre-generate and cache the results. Thus, at block 2608 and with regard to a currently iterated text-based request, word pieces for the request are generated. At block 2610, embedding vectors (into a text-based embedding space) are generated for the word pieces. At block 2612, the word pieces are aggregated to form a representative embedding vector (into the text-based embedding space) for the request. At block 2614, a request embedding vector is generated that projects the representative embedding vector of the request into the content item embedding space. At block 2616, the request and the request embedding vector are stored in the text request-embedding vector cache.

At block 2618, if there are any additional unique requests to process, the iteration returns to block 2606 for further processing. Alternatively, if there are no more unique requests to process and cache, the routine 2600 terminates.

Turning now to FIG. 28, FIG. 28 is a flow diagram illustrating an exemplary, generalized routine 2800 for training a machine learning model to generate content item embedding vectors for word pieces, in accordance with aspects of the disclosed subject matter. As mentioned above, the training is based on the training of tuples of a word piece, an embedding vector, and a distance measure, such as those generated in routine 2700 of FIG. 27A.

Beginning at block 2802, the training data (comprising both positive and negative training tuples) is accessed. At block 2804, training and validation sets are generated from the training data. These training and validation sets comprise a training tuple randomly selected from the training data, while retaining whether a given training tuple is a positive or negative training tuple.

As those skilled in the art will appreciate, the purpose of both training and validation sets is to carry out training phases of a machine learning model (in this instance, an embedding vector generator) by a first phase of repeatedly training the machine learning model with the training set until an accuracy threshold is met, and a second phase of validating the training of the machine learning model with the validation set to validate the accuracy of the training phase. Multiple iterations of training and validation may, and frequently do occur. Typically, though not exclusively, the training and validation sets include about the same number of training tuples. Additionally, as those skilled in the art will appreciate, a sufficient number of training tuples should be contained within each set to ensure proper training and validation, since using too few may result in a high level of accuracy among the training and validation sets, but a low level of overall accuracy in practice.

With the training and validation sets established, at block 2806, an iteration loop is begun to iterate through the training tuples of the training set. At block 2808, a content item embedding vector is generated by a machine learning model for the word piece of the currently iterated tuple. At block 2810, the accuracy of the embedding vector for the word piece of the currently iterated tuple is determined based on the centroid embedding vector of the word piece of the currently iterated tuple, the distance measure. For example, if the content item embedding vector generated for the currently iterated tuple is within the distance measure of the embedding vector of the tuple, the tracking would view this as an accurate embedding vector generation. On the other hand, if the embedding vector generated for the currently iterated tuple is outside of the distance measure of the centroid embedding vector of the tuple, the tracking would view this as an inaccurate embedding vector generation.

After determining and tracking the accuracy of the machine learning model on the currently iterated tuple, at block 2812 if there are additional tuples in the training set to be processed, the routine 2800 returns to block 2806 to select and process the next tuple, as set forth above. Alternatively, if there are no additional tuples in the training set to be processed, the routine 2800 proceeds to decision block 2814.

At decision block 2814, a determination is made as to whether a predetermined accuracy threshold is met by the current training state of the machine learning model in processing the tuples of the training set. This determination is made according to the tracking information through processing the tuples of the training data. If the in-training machine learning model has not at least achieved this predetermined accuracy threshold, the routine 2800 proceeds to block 2816.

At block 2816, the processing parameters that affect the various processing layers of the in-training machine learning model, including but not limited to the convolutions, aggregations, formulations, and/or hyperparameters of the various layers, are updated, and the routine 2800 returns to block 2806, thereby resetting the iteration process on the training data in order to iteratively continue the training of the in-training machine learning model.

With reference again to decision block 2814, if the predetermined accuracy threshold has been met by the in-training machine learning model, routine 2800 proceeds to block 2820. At block 2820, an iteration loop is begun to process the tuples of the validation set, much like the processing of the tuples of the training set.

At block 2822, an embedding vector (that projects into the content item embedding space) is generated by the machine learning model for the currently iterated tuple of the validation set. At block 2824, the accuracy of the in-training machine learning model is determined and tracked. More particularly, if the embedding vector generated for the currently iterated tuple (of the validation set) is within the distance measure of the embedding vector of the tuple, the tracking would view this as an accurate embedding vector generation. On the other hand, if the embedding vector generated for the currently iterated tuple is outside of the distance measure of the centroid embedding vector of the tuple, the tracking would view this as an inaccurate embedding vector generation.

At block 2826, if there are additional tuples in the validation set to be processed, the routine 2800 returns to block 2820 to select and process the next tuple of the validation set, as described forth above. Alternatively, if there are no additional tuples to be processed, the routine 2800 proceeds to decision block 2828.

At decision block 2828, a determination is made as to whether a predetermined accuracy threshold, which may or may not be the same predetermined accuracy threshold as used in decision block 2814, is met by the machine learning model in processing the tuples of the validation set. This determination is made according to the tracking information aggregated in processing the tuples of the validation set. If the in-training machine learning model has not at least achieved this predetermined accuracy threshold, then routine 2800 proceeds to block 2816.

As set forth above, at block 2816, the processing parameters of the in-training machine learning model, including but not limited to the convolutions, aggregations, formulations, and/or hyperparameters, are updated and the routine 2800 returns to block 2806, resetting the iteration process in order to restart the iterations with the training tuples of the training set.

In the alternative, at decision block 2828, if the accuracy threshold has been met (or exceeded), it is considered that the machine learning model has been accurately trained and the routine 2800 proceeds to block 2830. At block 2830, an executable embedding vector generator is generated from the now-trained machine learning model.

As those skilled in the art will appreciate, the in-training version of the machine learning model will include elements that allow its various levels, processing variables and/or hyperparameters to be updated. In contrast, an executable embedding vector generator is generated such that those features that allow the in-training machine learning model to be updated and "trained" are removed without modifying the trained functionality of the now-trained machine learning model. Thereafter, the routine 2800 terminates.

In accordance with additional aspects and implementations of the disclosed subject matter, a computer-executed method is set forth for providing content items to a subscriber of an online hosting service. A corpus of content items is maintained by the hosting service. In maintaining this corpus of content items, each content item is associated with an embedding vector that projects the associated content item into a content item embedding space. A text-based request for content from the corpus of content items is received from a subscriber of the hosting service, and the text-based request includes one or more text-based terms. A set of word pieces is generated from the one or more text-based terms. In some implementations, the set of word pieces includes at least two word pieces generated from at least one text-based term. An embedding vector is obtained for each word piece of the set of word pieces. Regarding the embedding vectors, each embedding vector for each word piece projects a corresponding word piece into the content item embedding space. With the embedding vectors obtained, the embedding vectors of the word pieces of the set of word pieces are combined to form a representative embedding vector for the set of word pieces. A set of content items of the corpus of content items is then determined according to or based on a projection of the representative embedding vector for the set of word pieces into the content item embedding space. At least one content item is selected from the set of content items of the corpus of content items and returned in response to the text-based request.

In accordance with additional aspects and implementations of the disclosed subject matter, computer-executable instructions, embodied on computer-readable media, a method of a hosting service is presented that responds to a text-based request with one or more content items. A corpus of content items is maintained by the hosting service. In maintaining this corpus of content items, each content item is associated with an embedding vector that projects the associated content item into a content item embedding space. A text-based request for content from the corpus of content items is received, and the text-based request includes one or more text-based terms. A set of word pieces is generated from the one or more text-based terms. In some but not all implementations, the set of word pieces includes at least two word pieces generated from at least one text-based term. An embedding vector is obtained for each word piece of the set of word pieces. Regarding the embedding vectors, each embedding vector for each word piece projects a corresponding word piece into the content item embedding space. With the embedding vectors obtained, the embedding vectors of the word pieces of the set of word pieces are combined to form a representative embedding vector for the set of word pieces. A set of content items of the corpus of content items is then determined according to or based on a projection of the representative embedding vector for the set of word pieces into the content item embedding space. At least one content item is selected from the set of content items of the corpus of content items and returned in response to the text-based request.

According to additional aspects of the disclosed subject matter, a computer system that provides one or more content items in response to a request is presented. In execution, the computer system is configured to, at least, maintain an embedding vector associated with each content item of a corpus of content items, each embedding vector suitable to project the associated content item into a content item embedding space. A text-based request for content items of the corpus of content items is received. The request comprises one or more text-based terms and a set of word pieces is generated from the one or more text-based terms. As discussed herein, the set of word pieces includes at least two word pieces generated from at least one text-based term of the received request. An embedding vector is obtained for each word piece of the set of word pieces, such that each embedding vector for each word piece projects a corresponding word piece into the content item embedding space. The embedding vectors of the word pieces of the set of word pieces are combined to form a representative embedding vector for the set of word pieces. A set of content items of the corpus of content items is then determined based on and/or according to a projection of the representative embedding vector for the set of word pieces into the content item embedding space. At least one content item from the set of content items of the corpus of content items is selected and returned to the subscriber in response to the request.

Regarding routines 600, 900, 1000, 1900, 2000, 2050, 2300, 2500, 2600, 2700, 2750 and 2800 described above, as well as other routines and/or processes described or suggested herein, while these routines/processes are expressed in regard to discrete steps, these steps should be viewed as being logical in nature and may or may not correspond to any specific, actual and/or discrete execution steps of a given implementation. Also, the order in which these steps are presented in the various routines and processes, unless otherwise indicated, should not be construed as the only or best order in which the steps may be carried out. Moreover, in some instances, some of these steps may be combined and/or omitted.

Optimizations of routines may be carried out by those skilled in the art without modification of the logical process of these routines and processes. Those skilled in the art will recognize that the logical presentation of steps is sufficiently instructive to carry out aspects of the claimed subject matter irrespective of any specific development or coding language in which the logical instructions/steps are encoded. Additionally, while some of these routines and processes may be expressed in the context of recursive routines, those skilled in the art will appreciate that such recursive routines may be readily implemented as non-recursive calls without actual modification of the functionality or result of the logical processing. Accordingly, the particular use of programming and/or implementation techniques and tools to implement a specific functionality should not be construed as limiting upon the disclosed subject matter.

Of course, while these routines and/or processes include various novel features of the disclosed subject matter, other steps (not listed) may also be included and carried out in the execution of the subject matter set forth in these routines, some of which have been suggested above. Those skilled in the art will appreciate that the logical steps of these routines may be combined or be comprised of multiple steps. Steps of the above-described routines may be carried out in parallel or in series. Often, but not exclusively, the functionality of the various routines is embodied in software (e.g., applications, system services, libraries, and the like) that is executed on one or more processors of computing devices, such as the computer system described in FIG. 23 below. Additionally, in various implementations, all or some of the various routines may also be embodied in executable hardware modules including, but not limited to, systems on chips (SoC's), codecs, specially designed processors and/or logic circuits, and the like.

As suggested above, these routines and/or processes are typically embodied within executable code segments and/or modules comprising routines, functions, looping structures, selectors and switches such as if-then and if-then-else statements, assignments, arithmetic computations, and the like that, in execution, configure a computing device to operate in accordance with the routines/processes. However, the exact implementation in executable statement of each of the routines is based on various implementation configurations and decisions, including programming languages, compilers, target processors, operating environments, and the linking or binding operation. Those skilled in the art will readily appreciate that the logical steps identified in these routines may be implemented in any number of ways and, thus, the logical descriptions set forth above are sufficiently enabling to achieve similar results.

While many novel aspects of the disclosed subject matter are expressed in executable instructions embodied within applications (also referred to as computer programs), apps (small, generally single or narrow purposed applications), and/or methods, these aspects may also be embodied as computer-executable instructions stored by computer-readable media, also referred to as computer readable storage media, which (for purposes of this disclosure) are articles of manufacture. As those skilled in the art will recognize, computer-readable media can host, store and/or reproduce computer-executable instructions and data for later retrieval and/or execution. When the computer-executable instructions that are hosted or stored on the computer-readable storage devices are executed by a processor of a computing device, the execution thereof causes, configures and/or adapts the executing computing device to carry out various steps, methods and/or functionality, including those steps, methods, and routines described above in regard to the various illustrated routines and/or processes. Examples of computer-readable media include but are not limited to: optical storage media such as Blu-ray discs, digital video discs (DVDs), compact discs (CDs), optical disc cartridges, and the like; magnetic storage media including hard disk drives, floppy disks, magnetic tape, and the like; memory storage devices such as random-access memory (RAM), read-only memory (ROM), memory cards, thumb drives, and the like; cloud storage (i.e., an online storage service); and the like. While computer-readable media may reproduce and/or cause to deliver the computer-executable instructions and data to a computing device for execution by one or more processors via various transmission means and mediums, including carrier waves and/or propagated signals, for purposes of this disclosure computer-readable media expressly excludes carrier waves and/or propagated signals.

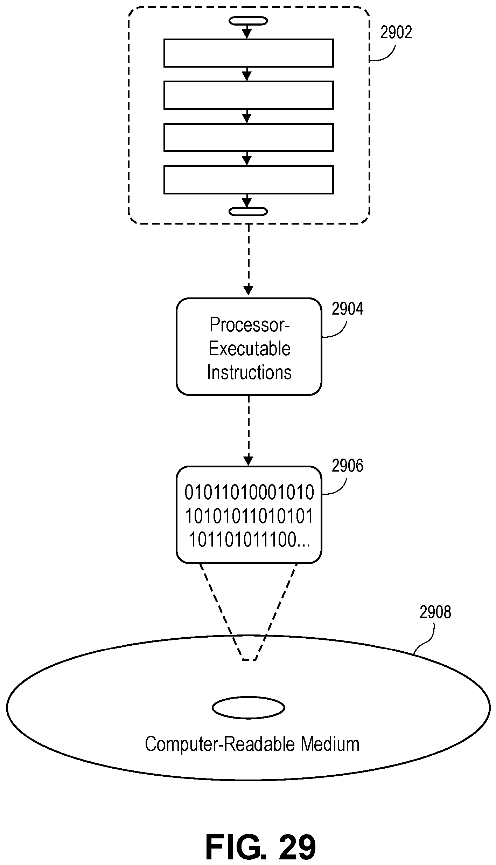

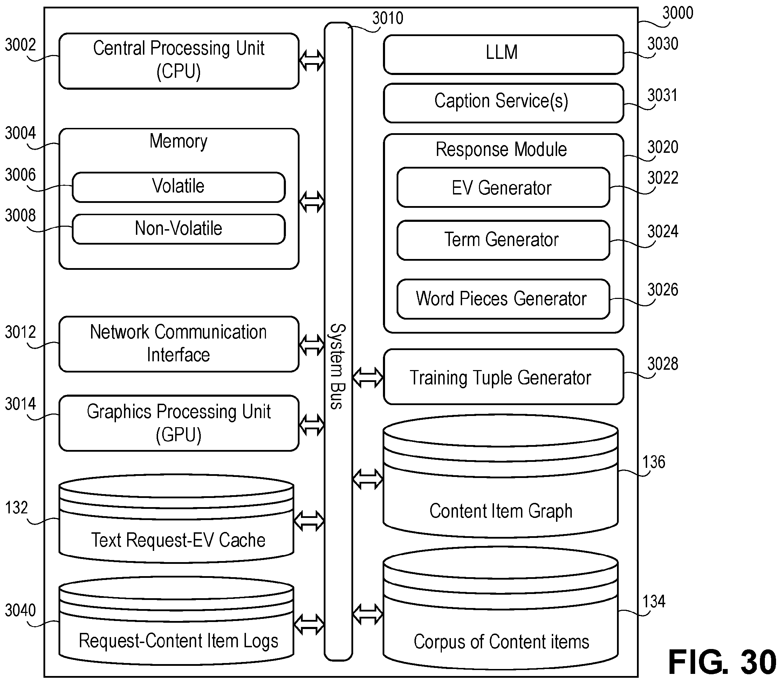

Regarding computer-readable media, FIG. 29 is a block diagram illustrating an exemplary computer-readable medium 2908 encoded with instructions for responding to a request for recommended content, formed in accordance with aspects of the disclosed subject matter. More particularly, the illustrated implementation comprises a computer-readable medium 2908 (e.g., a CD-R, DVD-R or a platter of a hard disk drive), on which is encoded computer-readable data 2906. This computer-readable data 2906 in turn comprises a set of processor-executable instructions 2904 configured to operate according to one or more of the principles set forth herein. In one such implementation 2902, the processor-executable instructions 2904 may be configured to perform a method, such as at least some of exemplary routines 600, 900, 1000, 1900, 2000, 2050, 2300, 2500, 2600, 2700, 2750 and 2800, for example. In another such implementation, the processor-executable instructions 2904 may be configured to implement a system on a computing system or device, such as at least some of the exemplary, executable components of computer system 3000, as discussed in FIG. 30 below. Many such computer-readable media may be devised, by those of ordinary skill in the art, which are configured to operate in accordance with the techniques presented herein.

Turning to FIG. 30, FIG. 30 is a block diagram of a computer system suitably configured to implement aspects of a hosting service, especially regarding responding to a text-based request for content items, in accordance with aspects of the disclosed subject matter. The computer system 3000 typically includes one or more central processing units (or CPUs), such as CPU 3002, and further includes at least one memory 3004. The CPU 3002 and memory 3004, as well as other components of the computing system, are typically interconnected by way of a system bus 3010.

As will be appreciated by those skilled in the art, the memory 3004 typically (but not always) comprises both volatile memory 3006 and non-volatile memory 3008. Volatile memory 3006 retains or stores information so long as the memory is supplied with power. In contrast, non-volatile memory 3008 can store (or persist) information even when a power supply is not available. In general, RAM and CPU cache memory are examples of volatile memory 3006 whereas ROM, solid-state memory devices, memory storage devices, and/or memory cards are examples of non-volatile memory 3008.

As will be further appreciated by those skilled in the art, the CPU 3002 executes instructions retrieved from the memory 3004 from computer-readable media, such as computer-readable medium 2908 of FIG. 29, and/or other executable components, in carrying out the various functions of the disclosed subject matter. The CPU 3002 may be comprised of any of several available processors, such as single-processor, multi-processor, single-core units, and multi-core units, which are well known in the art.

Further still, the illustrated computer system 3000 typically also includes a network communication interface 3012 for interconnecting this computing system with other devices, computers and/or services over a computer network, such as network 108 of FIG. 1. The network communication interface 3012, sometimes referred to as a network interface card or NIC, communicates over a network using one or more communication protocols via a physical/tangible (e.g., wired, optical fiber, etc.) connection, a wireless connection such as WiFi or Bluetooth communication protocols, NFC, or a combination thereof. As will be readily appreciated by those skilled in the art, a network communication interface, such as network communication interface 3012, is typically comprised of hardware and/or firmware components (and may also include or comprise executable software components) that transmit and receive digital and/or analog signals over a transmission medium (i.e., the network 108).

The illustrated computer system 3000 also frequently, though not exclusively, includes a graphics processing unit (GPU) 3014. As those skilled in the art will appreciate, a GPU is a specialized processing circuit designed to rapidly manipulate and alter memory. Initially designed to accelerate the creation of images in a frame buffer for output to a display, due to their ability to manipulate and process large quantities of memory, GPUs are advantageously applied to training machine learning models and/or neural networks that manipulate large amounts of data, including LLMs and/or the generation of embedding vectors of text terms of an n-gram. One or more GPUs, such as GPU 3014, are often viewed as essential processing components of a computing system when conducting machine learning techniques. Also, and according to various implementations, while GPUs are often included in computing systems and available for processing or implementing machine learning models, multiple GPUs are also often deployed as online GPU services or farms and machine learning processing farms.

The illustrated computer system may also include an LLM 3030, a caption service 3031, and/or a caption data store 3036. As discussed herein, the captions service(s) 3031 may process content items and generate content item captions for each content item and/or generate a session item for a session of content items. Captions, such as content item captions and/or session captions may be stored in and/or accessed from the captions data store 3036. The LLM 3030 may process content item captions and/or session captions that are included in, or referenced by an LLM input and generate narrative descriptions of the sessions and/or indicate content item identifiers. Those narrative descriptions may be provided as a text-based request that is used to determine recommended content items, as discussed herein.

Also included in the illustrated computer system 3000 is a response module 3020. As operationally described above in regard to routine 2300 of FIG. 23, the response module 3020 is a logical, executable component of the computer system 3000 that, in execution, is configured to receive a text-based request for content items, generate a set of word pieces from the request, generate a representative embedding vector for the word pieces, identify a set of content items from a corpus of content items according to the representative embedding vector, and return at least some of the content items as a response of recommended content items. The identified content items may be determined according to a distance measure of the representative embedding vector, as projected in a content item embedding space, to content items of the corpus of content items projected into the content item embedding space. Additionally, the identified content items may be determined according to a random-walk process of the content items represented in a content item graph.

In responding to a text-based request from a subscriber, the response module 3020 of the hosting service operating on the computer system 3000 utilizes term generator 3024 that conducts a lexical analysis of a received request and generates a set of text-based terms. The response module 3020 further utilizes a word pieces generator 3026 to generate a set of word pieces for the text-based terms of the request.

In identifying content items for the request, the response module 3020 utilizes a trained, executable embedding vector generator 3022 that generates, or obtains a request embedding vector for a set of word pieces of the text-based terms of a text-based request. As described in routine 2300 above, the response module 3020 utilizes a term generator 3024 that obtains a set of text-based terms from the received request, and further utilizes a word pieces generator 3026 to generate a set of word pieces from the set of text-based terms.

In addition to the above, the illustrated computer system 3000 also includes a training tuple generator 3028 that generates training tuples from request/content item logs 3040 (also referred to as request/user interaction logs) of the hosting service implemented on the computer system 3000.

Regarding the various components of the exemplary computer system 3000, those skilled in the art will appreciate that many of these components may be implemented as executable software modules stored in the memory of the computing device, as hardware modules and/or components (including SoCs - system on a chip), or a combination of the two. Indeed, components may be implemented according to various executable implementations including, but not limited to, executable software modules that carry out one or more logical elements of the processes described in this document, or as hardware and/or firmware components that include executable logic to carry out the one or more logical elements of the processes described in this document. Examples of these executable hardware components include, by way of illustration and not limitation, ROM (read-only memory) devices, programmable logic array (PLA) devices, PROM (programmable read-only memory) devices, EPROM (erasable PROM) devices, and the like, each of which may be encoded with instructions and/or logic which, in execution, carry out the functions described herein.

For purposes of clarity and by way of definition, the term "exemplary," as used in this document, should be interpreted as serving as an illustration or example of something, and it should not be interpreted as an ideal or leading illustration of that thing. Stylistically, when a word or term is followed by "(s)," the meaning should be interpreted as indicating the singular or the plural form of the word or term, depending on whether there is one instance of the term/item or whether there is one or multiple instances of the term/item. For example, the term "subscriber(s)" should be interpreted as one or more subscribers. Moreover, the use of the combination "and/or" with multiple items should be viewed as meaning either or both items.

While various novel aspects of the disclosed subject matter have been described, it should be appreciated that these aspects are exemplary and should not be construed as limiting. Variations and alterations to the various aspects may be made without departing from the scope of the disclosed subject matter.

The following items provide aspects of the present disclosure:

Item 1. A computing system, comprising:

one or more processors; and
a memory storing program instructions that, when executed by the one or more processors, cause the one or more processors to at least:

determine a long-term objective for recommending content to subscribers of an online service;
identify a first subscriber interaction associated with a subscriber that corresponds to the long-term objective, wherein the first subscriber interaction includes a first content item with which the subscriber interacted;
identify a first sequence of subscriber engagements preceding the first subscriber interaction, wherein the first sequence of subscriber engagements includes a sequence of content items with which the subscriber engaged;
retrieve a plurality of candidate content items corresponding to the sequence of content items;
determine, for each content item of the sequence of content items, a respective similarity measure between the first content item and a respective content item of the sequence of content items, wherein the similarity measures represent a relevance of the respective content items to the first subscriber interaction;
determine, based at least in part on the respective similarity measures, a plurality of weights for the plurality of candidate content items;
provide the plurality of weights to a recommendation system; and
determine, based at least in part on the plurality of weights and using the recommendation system, at least one recommended content item from the plurality of candidate content items.

Item 2. The computing system of item 1, wherein the long-term objective includes a cumulative engagement of a subscriber over a period of time.

Item 3. The computing system of item 2, wherein the cumulative engagement is a function of a depth of session and a number of sessions.

Item 4. The computing system of any one of items 1 to 3, wherein the respective similarity measures include a cosine similarity.

Item 5. The computing system of any one of items 1 to 4, wherein the first sequence of subscriber engagements includes engagements with content items across a plurality of subscriber sessions.

Item 6. A computer-implemented method, comprising:

determining a long-term objective for recommending content to subscribers of an online service;
determining a mapping between a plurality of content items and the long-term objective, wherein determining the mapping between the plurality of content items and the long-term objective includes determining a plurality of mappings between a plurality of interim metrics; and
generating, using at least the mapping between the plurality of content items and the long-term objective, a recommendation system configured to determine content items from a corpus of content items that are responsive to a request for content items and are configured to encourage the long-term objective.

Item 7. The computer-implemented method of item 6, wherein the plurality of interim metrics includes at least one of:

a plurality of parameters associated with an aggregation of subscriber sessions; or
a plurality of features associated with individual subscriber sessions.

Item 8. The computer-implemented method of item 6 or 7, wherein determining the plurality of mappings between the plurality of interim metrics includes:
using a plurality of trained models and each of the plurality of trained models is configured to predict a respective first interim metric of the plurality of interim metrics based at least in part on an input of a respective second interim metric of the plurality of interim metrics.

Item 9. The computer-implemented method of item 8, wherein the plurality of trained models includes:

a first trained model configured to predict the long-term objective based at least in part on a first input of the plurality of parameters associated with the aggregation of subscriber sessions;
a second trained model configured to predict the plurality of parameters associated with the aggregation of subscriber sessions based at least in part on a second input of the plurality of features associated with individual subscriber sessions; and
a third trained model configured to predict the plurality of features based at least in part on a third input of content items.

Item 10. The computer-implemented method of item 8 or 9, wherein the plurality of parameters associated with the aggregation of subscriber sessions includes at least one of:

a frequency of session initiation over a period of time; or
a depth of session associated with the aggregation of subscriber sessions.

Item 11. The computer-implemented method of any one of items 8 to 10, wherein the plurality of features associated with individual subscriber sessions includes at least one of:

a depth of session associated with the individual subscriber sessions;
a plurality of actions performed by a subscriber within each individual subscriber session; or
an entropy associated with the individual subscriber sessions.

Item 12. The computer-implemented method of any one of items 6 to 11, wherein the recommendation system includes a multi-stage recommendation system and at least one stage of the multi-stage recommendation system is configured to determine content items based at least in part on the long-term objective.

Item 13. The computer-implemented method of any one of items 6 to 12, wherein determining the mapping between the plurality of content items and the long-term objective includes:

identifying a subscriber interaction associated with a subscriber that corresponds to the long-term objective, wherein the subscriber interaction includes a first content item with which the subscriber interacted;
identifying a first sequence of subscriber engagements preceding the subscriber interaction, wherein the first sequence of subscriber engagements includes a sequence of content items with which the subscriber engaged;

retrieving a plurality of candidate content items corresponding to the sequence of content items;

determining, for each content item of the sequence of content items, a respective similarity measure between the first content item and a respective content item of the sequence of content items, wherein the similarity measures represent a relevance of the respective content items to the subscriber interaction;

determining, based at least in part on the respective similarity measures, a plurality of weights for the plurality of candidate content items;

providing the plurality of weights to the recommendation system; and

determining, based at least in part on the plurality of weights and using the recommendation system, at least one of a recommended content item from the plurality of candidate content items or a ranking of the plurality of candidate content items.

Item 14. The computer-implemented method of any one of items 6 to 13, further comprising:

identifying a first sequence of subscriber engagements, wherein the first sequence of subscriber engagements includes a sequence of content items with which a subscriber engaged;

retrieving a plurality of candidate content items;

processing the sequence of content items to produce, for each first respective content item of the sequence of content items, a first respective content item caption that is descriptive of the first respective content item;

processing the plurality of candidate content items to produce, for each second respective content item of the plurality of candidate content items, a second respective content item caption that is descriptive of the second respective content item; and

determining, with a large language model and based at least in part on at least a portion of the first respective content item captions and at least a portion of the second respective content item captions, at least one content item of the plurality of candidate content items as a recommended content item for the subscriber.

Item 15. The computer-implemented method of item 14, wherein the first sequence of subscriber engagements includes engagements with content items across a plurality of subscriber sessions.

Item 16. The computer-implemented method of any one of items 6 to 15, further comprising:

receiving, from a client device associated with a subscriber, a request for content items; and

determining, using the content recommendation system, at least one content item from the corpus of content items that is responsive to the request for content items and is configured to encourage the long-term objective, wherein:

determining the at least one content item based at least in part on probabilities associated with transitions between subscriber states of the subscriber; and

the probabilities are based at least in part on a current subscriber state, a subscriber history, and a subscriber context.

Item 17. A computer-implemented method, comprising:

receiving, from a client device associated with a subscriber of an online service, a request for content;

determining, using a content recommendation system, a responsive content item from a corpus of content items that are responsive to the request for content, wherein:

the content recommendation system is configured to identify recommended content from the corpus of content items based at least in part on a long-term objective and is generated based at least in part on a mapping between a plurality of content items and the long-term objective; and

the mapping between a plurality of content items and the long-term objective is determined based at least in part on at least one of:

a plurality of alignment scores generated based at least in part on a subscriber interaction and a first sequence of subscriber engagements preceding the subscriber interaction; or

a first caption associated with a second sequence of subscriber engagements and a second caption associated with a plurality of candidate content items; and

providing the recommended content item to the client device.

Item 18. The computer-implemented method of item 17, wherein the recommended content item is determined using a large language model to process the first caption and the second caption.

Item 19. The computer-implemented method of item 17 or 18, wherein:

determining the plurality of alignment scores includes:
determining a plurality of similarity measures between the subscriber interaction and each of the first sequence of subscriber engagements as the plurality of alignment scores; and
determining the recommended content item includes:

determining, based at least in part on a plurality of similarity measures, a plurality of weights for a plurality of candidate content items; and
determining the recommended content item based at least in part on the plurality of weights.

Item 20. The computer-implemented method of item 19, wherein:

the alignment scores are determining utilizing a query, key, and value vector technique;
the subscriber interaction is assigned to be a query;
the first sequence of subscriber engagements are assigned as keys; and the plurality of candidate content items are assigned as values.

**Claims**

1. A computing system, comprising:

one or more processors; and
a memory storing program instructions that, when executed by the one or more processors, cause the one or more processors to at least:

determine a long-term objective for recommending content to subscribers of an online service;
identify a first subscriber interaction associated with a subscriber that corresponds to the long-term objective, wherein the first subscriber interaction includes a first content item with which the subscriber interacted;
identify a first sequence of subscriber engagements preceding the first subscriber interaction, wherein the first sequence of subscriber engagements includes a sequence of content items with which the subscriber engaged;
retrieve a plurality of candidate content items corresponding to the sequence of content items;
determine, for each content item of the sequence of content items, a respective similarity measure between the first content item and a respective content item of the sequence of content items, wherein the similarity measures represent a relevance of the respective content items to the first subscriber interaction;
determine, based at least in part on the respective similarity measures, a plurality of weights for the plurality of candidate content items;
provide the plurality of weights to a recommendation system; and
determine, based at least in part on the plurality of weights and using the recommendation system, at least one recommended content item from the plurality of candidate content items.

2. The computing system of claim 1, wherein the long-term objective includes a cumulative engagement of a subscriber over a period of time, the cumulative engagement optionally being a function of a depth of session and a number of sessions; and/or

wherein the respective similarity measures include a cosine similarity; and/or
wherein the first sequence of subscriber engagements includes engagements with content items across a plurality of subscriber sessions.

3. The computing system of claim 1 or 2, wherein the recommendation system is configured to determine content items from a corpus of content items that are responsive to a request for content items and are configured to encourage the long-term objective; and

wherein the recommendation system includes a multi-stage recommendation system and at least one stage of the multi-stage recommendation system is configured to determine content items based at least in part on the long-term objective; and

wherein, optionally, the plurality of weights is used to modify a utility function associated with one or more stages of recommendation system, and/or is used as rewards in applying a reinforcement learning technique to further train and/or fine-tune recommendation system; and

wherein, optionally, the plurality of weights represents a mapping between the plurality of candidate content items and the long-term objective.

4. A computer-implemented method, comprising:

determining a long-term objective for recommending content to subscribers of an online service;
determining a mapping between a plurality of content items and the long-term objective, wherein determining the mapping between the plurality of content items and the long-term objective includes determining a plurality of mappings between a plurality of interim metrics; and
generating, using at least the mapping between the plurality of content items and the long-term objective, a recommendation system configured to determine content items from a corpus of content items that are responsive to a request for content items and are configured to encourage the long-term objective.

5. The computer-implemented method of claim 4, wherein the plurality of interim metrics includes at least one of:

a plurality of parameters associated with an aggregation of subscriber sessions; or
a plurality of features associated with individual subscriber sessions.

6. The computer-implemented method of claim 4 or 5, wherein determining the plurality of mappings between the plurality of interim metrics includes:

using a plurality of trained models and each of the plurality of trained models is configured to predict a respective first interim metric of the plurality of interim metrics based at least in part on an input of a respective second interim metric of the plurality of interim metrics,
wherein, optionally, the plurality of trained models includes:

a first trained model configured to predict the long-term objective based at least in part on a first input of the plurality of parameters associated with the aggregation of subscriber sessions;
a second trained model configured to predict the plurality of parameters associated with the aggregation of subscriber sessions based at least in part on a second input of the plurality of features associated with individual subscriber sessions; and
a third trained model configured to predict the plurality of features based at least in part on a third input of content items.

7. The computer-implemented method of claim 5 or 6, wherein the plurality of parameters associated with the aggregation of subscriber sessions includes at least one of:

a frequency of session initiation over a period of time; or
a depth of session associated with the aggregation of subscriber sessions; and/or
wherein the plurality of features associated with individual subscriber sessions includes at least one of:

a depth of session associated with the individual subscriber sessions;
a plurality of actions performed by a subscriber within each individual subscriber session; or
an entropy associated with the individual subscriber sessions.

8. The computer-implemented method of any one of claims 4 to 7, wherein the recommendation system includes a multi-stage recommendation system and at least one stage of the multi-stage recommendation system is configured to determine content items based at least in part on the long-term objective.

9. The computer-implemented method of any one of claims 4 to 8, wherein determining the mapping between the plurality of content items and the long-term objective includes:

identifying a subscriber interaction associated with a subscriber that corresponds to the long-term objective, wherein the subscriber interaction includes a first content item with which the subscriber interacted;

identifying a first sequence of subscriber engagements preceding the subscriber interaction, wherein the first sequence of subscriber engagements includes a sequence of content items with which the subscriber engaged;

retrieving a plurality of candidate content items corresponding to the sequence of content items;

determining, for each content item of the sequence of content items, a respective similarity measure between the first content item and a respective content item of the sequence of content items, wherein the similarity measures represent a relevance of the respective content items to the subscriber interaction;

determining, based at least in part on the respective similarity measures, a plurality of weights for the plurality of candidate content items;

providing the plurality of weights to the recommendation system; and

determining, based at least in part on the plurality of weights and using the recommendation system, at least one of a recommended content item from the plurality of candidate content items or a ranking of the plurality of candidate content items.

10. The computer-implemented method of any one of claims 4 to 9, further comprising:

identifying a first sequence of subscriber engagements, wherein the first sequence of subscriber engagements includes a sequence of content items with which a subscriber engaged;

retrieving a plurality of candidate content items;

processing the sequence of content items to produce, for each first respective content item of the sequence of content items, a first respective content item caption that is descriptive of the first respective content item;

processing the plurality of candidate content items to produce, for each second respective content item of the plurality of candidate content items, a second respective content item caption that is descriptive of the second respective content item; and

determining, with a large language model and based at least in part on at least a portion of the first respective content item captions and at least a portion of the second respective content item captions, at least one content item of the plurality of candidate content items as a recommended content item for the subscriber,

wherein, optionally, the first sequence of subscriber engagements includes engagements with content items across a plurality of subscriber sessions.

11. The computer-implemented method of any one of claims 4 to 10, further comprising:

receiving, from a client device associated with a subscriber, a request for content items; and

determining, using the content recommendation system, at least one content item from the corpus of content items that is responsive to the request for content items and is configured to encourage the long-term objective, wherein:

determining the at least one content item based at least in part on probabilities associated with transitions between subscriber states of the subscriber; and

the probabilities are based at least in part on a current subscriber state, a subscriber history, and a subscriber context.

12. A computer-implemented method, comprising:

receiving, from a client device associated with a subscriber of an online service, a request for content;

determining, using a content recommendation system, a responsive content item from a corpus of content items that are responsive to the request for content, wherein:

the content recommendation system is configured to identify recommended content from the corpus of content items based at least in part on a long-term objective and is generated based at least in part on a mapping between a plurality of content items and the long-term objective; and

the mapping between a plurality of content items and the long-term objective is determined based at least in part on at least one of:

a plurality of alignment scores generated based at least in part on a subscriber interaction and a first sequence of subscriber engagements preceding the subscriber interaction; or

a first caption associated with a second sequence of subscriber engagements and a second caption associated with a plurality of candidate content items; and

provided the recommended content item to the client device,
wherein, optionally, the recommended content item is determined using a large language model to process the first caption and the second caption.

13. The computer-implemented method of claim 12, wherein:

determining the plurality of alignment scores includes:
determining a plurality of similarity measures between the subscriber interaction and each of the first sequence of subscriber engagements as the plurality of alignment scores; and
determining the recommended content item includes:

determining, based at least in part on a plurality of similarity measures, a plurality of weights for a plurality of candidate content items; and
determining the recommended content item based at least in part on the plurality of weights.

14. The computer-implemented method of claim 12 or 13, wherein:

the alignment scores are determined utilizing a query, key, and value vector technique;
the subscriber interaction is assigned to be a query;
the first sequence of subscriber engagements are assigned as keys; and
the plurality of candidate content items are assigned as values.

15. A computer program product comprising computer-readable instructions that, when loaded and run on a computer, cause the computer to perform the method according to any one of claims 4 to 14.

**FIG. 1**

FIG. 2

EP 4 657 283 A1

FIG. 3A

EP 4 657 283 A1

CORPUS

334

PROCESSOR 318

MEMORY 319

HOSTING SERVICE 330

(5) GENERATE RECOMMENDED CONTENT ITEMS AND SEQUENCE — 315

321(1)  321(2)  321(N)

COMPUTING RESOURCE(S) 321

333

RECOMMENDED CONTENT ITEMS IN SEQUENCE

333-1

333-2

333-Y

301

NETWORK 308

(6) SEND RECOMMENDED CONTENT ITEMS IN SEQUENCE — 316

(7) PRESENT RECOMMENDED CONTENT ITEMS IN SEQUENCE — 317

300

**FIG. 3B**

**FIG. 4A**

(2) DETERMINE SESSION CONTEXT —412
(3) GENERATE SESSION CAPTION —413
BASED ON SESSION CONTENT ITEMS
(4) DETERMINE SESSION TEXT BASED —414
DESCRIPTIONS
(5) DETERMINE RECOMMENDED CONTENT —415
ITEMS FROM SESSION TEXT BASED
DESCRIPTIONS

PROCESSOR 418
MEMORY 419
HOSTING SERVICE 430

CORPUS
434

421(1) 421(2) 421(N)
COMPUTING RESOURCE(S)
421

403
SESSION CONTENT ITEMS
403-1
403-2
403-X

401

NETWORK
408

411
(1) DETERMINE/
SELECT SESSION
CONTENT ITEMS

400

CORPUS

434

PROCESSOR 418

MEMORY 419

HOSTING SERVICE 430

421(1) 421(2) 421(N)

COMPUTING RESOURCE(S) 421

416

(6) SEND RECOMMENDED CONTENT ITEMS

NETWORK 408

401

433

RECOMMENDED CONTENT ITEMS

433-1

433-2

433-Y

417

(7) PRESENT RECOMMENDED CONTENT ITEMS

400

FIG. 4B

EP 4 657 283 A1

500

577 CONTENT ITEM CORPUS

501 SESSION CONTENT ITEMS AND SEQUENCE

502 CORPUS REDUCTION

504 CONTENT ITEM EMBEDDINGS

506 CAPTION SERVICE(S)

507-A TEXT CAPTION OF EACH CONTENT ITEM IN REDUCED CORPUS

507-B TEXT CAPTION OF EACH CONTENT ITEM IN USER CONTENT ITEM SEQUENCE

507-C USER DATA

507-D CONTENT ITEM SEQUENCE

507 LLM INPUT

508 LLM (E.G., CHAT GPT)

510 RECOMMENDED NEXT CONTENT ITEM FROM REDUCED CORPUS AND SEQUENCE

FIG. 5

RECOMMENDED CONTENT ITEMS
AND SEQUENCE PROCESS
600

↓

RECEIVE SESSION CONTENT ITEMS, SEQUENCE, AND USER DATA
602

GENERATE/OBTAIN SESSION
CONTENT ITEM CAPTIONS
604

OBTAIN CONTEXTUAL METADATA
FOR EACH CONTENT ITEM OF
SESSION CONTENT ITEMS
606

DETERMINE
REDUCED CORPUS
608

GENERATE LLM INPUT
612

PROVIDE LLM INPUT TO LLM
614

RECEIVE RECOMMENDED CONTENT ITEM
IDENTIFIERS FROM REDUCED CORPUS
AND SEQUENCE
616

OBTAIN RECOMMENDED CONTENT ITEMS
FROM CORPUS
618

SEND RECOMMENDED CONTENT ITEMS
FOR PRESENTATION IN DETERMINED
SEQUENCE
620

GENERATE/OBTAIN
CAPTION FOR
EACH CONTENT ITEM
OF REDUCED CORPUS
610

OBTAIN CONTEXTUAL
METADATA FOR
EACH CONTENT ITEM
OF REDUCED CORPUS
611

# FIG. 6

EP 4 657 283 A1

**SESSION CONTENT ITEMS 705**

**CORPUS OF CONTENT ITEMS**

CONTENT ITEM ID:
0001
0002
0003
⋮
9999

734

**CONTEXTUAL META DATA SERVICE 713**

**CAPTION SERVICE** 706

**REDUCED CORPUS** 778

707-A

704-1 — 0013: MODERN BATHROOM WITH WHITE WALK-IN SHOWER — 707-1
704-2 — 0714: MID-CENTURY MODERN BATHROOM WITH LIVING WALL AND STONE TUB — 707-2
704-3 — 9123: MEDITERRANEAN MINIMALIST BATHROOM WITH TREE AND STONE TUB — 707-3
704-4 — 8761: MODERN MINIMALIST BATHROOM WITH GLASS SHOWER AND RAISED TUB — 707-4   707-N
704-5 — 0921: MODERN MINIMALIST BATHROOM WITH WINDOW AND RAISED TUB — 707-5
704-N — 1678: MID-CENTURY MODERN BATHROOM WITH GLASS WALK-IN SHOWER AND NATURAL WOOD COUNTER

**CAPTION SERVICE** 706

**RECOMMENDED CONTENT ITEM SEQUENCE**

**REDUCED CORPUS CONTENT ITEM CAPTIONS**
6357 : XXXX
6794 : XXXX
⋮
9799 : XXXX
707-B

**LLM INPUT** 711

**LLM** 708

**RECOMMENDED CONTENT ITEM IDENTIFIERS:**
9799, 6357, 8417
709

714-1   714-2   714-3

**CORPUS** 734

710-1   710-2   710-3   710

9799   6357   8417

**FIG. 7**

700

50

**FIG. 8**

RECOMMENDED CONTENT ITEM(S) PROCESS
900

DETERMINE SESSION CONTEXT
902

DETERMINE SESSION CONTENT
ITEMS
904

SESSION TEXT CAPTIONS PROCESS
(FIG. 10)
1000

SESSION CONTEXT
PROMPT/INSTRUCTIONS
SESSION CAPTION
RESPONSE STRUCTURE
SYSTEM RULES

GENERATE LLM INPUT
908

PROVIDE LLM INPUT TO LLM
910

RECEIVE LLM OUTPUT
912

• SUMMARY
• DESCRIPTORS

USER
PREFERENCE

DETERMINE CONTENT ITEMS
FROM CORPUS OF CONTENT
ITEMS BASED ON DESCRIPTORS
914

GENERATE AND PRESENT
SESSION OUTPUT
916

# FIG. 9

SESSION CAPTION PROCESS
1000

DETERMINE CAPTION SERVICE(S)
1002

DEFINE POSSIBLE RESULT CAPTIONS
FOR EACH CAPTION SERVICE
1003

PROCESS CONTENT ITEMS WITH EACH CAPTION
SERVICE TO GENERATE SERVICE TEXT CAPTIONS
FOR CONTENT ITEMS
1004

COMBINE EACH SERVICE CAPTION
TO GENERATE SESSION CAPTION
1006

RETURN SESSION CAPTION
1008

# FIG. 10

**FIG. 11**

LLM INPUT

SESSION CONTEXT ⌐1201

SESSION CONTEXT
DESCRIPTION
•
•
•
⌐1202

PROMPT ⌐1203

INSTRUCTIONS
•
•
•
⌐1204

SESSION CAPTION
•
•
•
⌐1205

CONTEXTUAL
METADATA
⌐1208

RESPONSE STRUCTURE
•
•
•
⌐1206

1211

RULES
•
•
•
⌐1207

# FIG. 12

LLM OUTPUT                                                      <u>1309</u>
{
"response": [
{
"type":"taste_preference_summary", ⟋1301
"title":"Eclectic Mediterranean Retreat", ⟋1302
"subtitle":" "                                    1303-1

"description" : "Your taste preference is a fusion of
Mid-Century Modern, Mediterranean, and Coastal
influences, creating an eclectic and vibrant space
inspired by sun-drenched coastal regions.

"description_detail": "You gravitate towards unique
Mediterranean-inspired décor and love blending
Mid-Century Modern elements with coastal accents.
Your bathroom exudes warmth and personality, reflecting
your adventurous spirit and love for natural beauty."

"primary_style_names" : ["Mid-Century Modern",
"Mediterranean", "Coastal"]                        1303-2
}
]                    1304
}

# FIG. 13

1400

Ideas for 1420
## Bathroom Idea 1421
YOUR STYLE: ECLECTIC MEDITERRANEAN RETREAT

1420-1    1420-2    1420-3

1420-4

1420-5    1422    1420-6

WHAT YOUR TASTE PREFERENCE SAYS ABOUT YOU:
YOU GRAVITATE TOWARDS UNIQUE MEDITERRANEAN-INSPIRED DÉCOR
AND LOVE BLENDING MID-CENTURY MODERN ELEMENTS WITH COASTAL
ACCENTS. YOUR BATHROOM EXUDES WARMTH AND PERSONALITY,
REFLECTING YOUR ADVENTUROUS SPIRIT AND LOVE FOR NATURAL BEAUTY.

# FIG. 14

**FIG. 15A**

1551-1

SESSION 1

1562-1

1562-2

1562-3

1562-4

1562-5

1562-N

1551-2

SESSION 2

1564-1

1564-2

1564-3

1564-4

1564-5

1564-N

1551-3

SESSION 3

1566-1

1566-2

1566-3

1566-4

1566-5

1566-N

1551-N

SESSION N

1568-1

1568-2

1568-3

1568-4

1568-5

1568-N

**FIG. 15B**

**FIG. 15C**

**FIG. 16**

FIG. 17

EP 4 657 283 A1

EP 4 657 283 A1

1810

1800

ALIGNMENT SCORE
DETERMINATION
ENGINE

1820

ALIGNMENT
SCORES

1802

SUBSCRIBER HISTORY
INFORMATION

1804

SUBSCRIBER INTERACTIONS

1806

SEQUENCES OF SUBSCRIBER
ENGAGEMENTS

**FIG. 18A**

**FIG. 18B**

1900

```
                          ┌─────────┐
                          │  BEGIN  │
                          └─────────┘
                               │
                               ▼
┌──────────────────────────────────────────────────────┐  1902
│         DETERMINE LONG-TERM OBJECTIVE                  │
└──────────────────────────────────────────────────────┘
                               │
                               ▼
┌──────────────────────────────────────────────────────┐  1904
│     GENERATE ONE OR MORE INTERIM MAPPINGS TO          │
│   GENERATE MAPPING BETWEEN CONTENT ITEMS AND          │
│              LONG-TERM OBJECTIVE                        │
└──────────────────────────────────────────────────────┘
                               │
                               ▼
┌──────────────────────────────────────────────────────┐  1906
│   OPTIMIZE AND/OR FINE-TUNE RECOMMENDATION SYSTEM     │
│                 BASED ON MAPPING                       │
└──────────────────────────────────────────────────────┘
                               │
                               ▼
┌──────────────────────────────────────────────────────┐  1908
│          RECEIVE REQUEST FOR CONTENT ITEMS            │
└──────────────────────────────────────────────────────┘
                               │
                               ▼
┌──────────────────────────────────────────────────────┐  1910
│  DETERMINE RECOMMENDED CONTENT ITEMS USING OPTIMIZED  │
│  RECOMMENDATION SYSTEM TO ENCOURAGE LONG-TERM         │
│                   OBJECTIVE                            │
└──────────────────────────────────────────────────────┘
                               │
                               ▼
┌──────────────────────────────────────────────────────┐  1912
│          RETURN RECOMMENDED CONTENT ITEMS            │
└──────────────────────────────────────────────────────┘
                               │
                               ▼
                         ┌───────────┐
                         │ COMPLETE  │
                         └───────────┘
```

# FIG. 19

_2000_

BEGIN

OBTAIN CANDIDATE CONTENT ITEMS FOR SUBSCRIBER ⟶ 2002

OBTAIN SUBSCRIBER HISTORY INFORMATION ⟶ 2004

DETERMINE ALIGNMENT SCORES FOR CANDIDATE CONTENT ITEMS ⟶ 2006

DETERMINE WEIGHTS FOR CANDIDATE CONTENT ITEMS BASED ON ALIGNMENT SCORES ⟶ 2008

PROVIDE WEIGHTS TO RECOMMENDATION SYSTEM FOR DETERMINATION OF RECOMMENDED CONTENT ITEMS ⟶ 2010

COMPLETE

# FIG. 20A

BEGIN

OBTAIN CANDIDATE CONTENT ITEMS FOR SUBSCRIPTION ⟶ 2052

OBTAIN SUBSCRIBER HISTORY INFORMATION THAT INCLUDES SEQUENCES OF SUBSCRIBER ENGAGEMENTS ⟶ 2054

PROCESS CANDIDATE CONTENT ITEMS AND SEQUENCE OF USER ENGAGEMENTS USING CAPTION SERVICE ⟶ 2056

GENERATE LLM INPUT BASED ON CAPTIONS GENERATED BY CAPTION SERVICE ⟶ 2058

PROCESS LLM INPUT USING LLM TO DETERMINE RECOMMENDED CONTENT ITEMS ⟶ 2060

COMPLETE

2050

# FIG. 20B

"Dog" 2102

"Walking a dog" 2104

"Walking" 2106

"Cat" 2108

2100

Text Content Embedding Space

2112 2114 2116 2118

2110

Image Content Embedding Space

**FIG. 21**

EP 4 657 283 A1

2204 "Walking a dog"

2202 "Dog"

2216

2214

2218

2212

2206 "Walking"

2210

2208 "Cat"

Image Content Embedding Space
With text content embeddings

**FIG. 22**

2300

Begin

Maintain a corpus of content items — 2302

Receive text-based request for content items — 2304

Determine potential topic through semantic analysis — 2306

Generate terms from request by lexical analysis — 2308

Generate set of word pieces from additional analysis of terms — 2310

Obtain embedding vectors for each word piece of set — 2312

Determine weighting of word pieces — 2314

Combine embedding vectors of word pieces to generate representative embedding vector — 2316

Identify set of content items according to representative embedding vector (FIG. 18) — 2318

Select x content items of set of content items — 2320

Return selected x content items — 2322

End

**FIG. 23**

2400

FIG. 24

2500

Begin

Project representative embedding vector into content item embedding space

2502

Identify *k* nearest neighbors to projected representative embedding vector in the content item embedding space

2504

Identify closest content item to projected representative embedding vector in the content item embedding space

2506

Conduct random-walk selection of *n* content items related to closest content item in content graph

2508

Combine *k* content items and *n* content items into related content item list for representative embedding vector

2510

Return related content item list

2512

End

# FIG. 25

2600

Begin

Generate training data from request/interaction logs (FIG. 28)
2602

Train embedding vector generator using generated training data (FIG. 29)
2604

Optional

For each request of positive training data ...
2606

Generate word pieces for request
2608

Generate embedding vectors for word pieces
2610

Aggregate word pieces into representative embedding vector for request
2612

Generate a request content item embedding vector for the request via representative embedding vector
2614

Store request embedding vector with request in the request/embedding vector cache
2616

Additional requests to process?
2618

End

## FIG. 26

2700

Begin

Access request-content item logs — 2702

Aggregate logs according to unique requests — 2704

For each request of unique request ... — 2706

Generate set of word pieces for current request — 2708

Generate embedding vectors (into text embedding space) for word pieces — 2710

Generate representative embedding vector for current request from embedding vectors of word pieces — 2712

Project content items of current request into embedding space (content item embedding space) — 2714

Cluster projected content items — 2716

Determine embedding vector of cluster centroid and dimension of cluster — 2718

Associate request, representative embedding vector, centroid embedding vector, and cluster dimension as positive training data element — 2720

Randomly select random centroid to create a negative training data element — 2722

Next request — 2724

End

# FIG. 27A

2750

```
                    ┌─────────────┐
                    │    Begin    │
                    └──────┬──────┘
                           ▼
        ┌──────────────────────────────────────┐   2752
        │     Access request-content item logs  │
        └──────────────────┬───────────────────┘
                           ▼
        ┌──────────────────────────────────────┐   2754
        │  Aggregate logs according to unique requests │
        └──────────────────┬───────────────────┘
                           ▼
        ┌──────────────────────────────────────┐   2756
        │     For each request of unique request ... │
        └──────────────────┬───────────────────┘
                           ▼
        ┌──────────────────────────────────────┐   2758
        │  Generate set of word pieces for current request │
        └──────────────────┬───────────────────┘
                           ▼
        ┌──────────────────────────────────────┐   2760
        │ Associate request, content items, and word pieces as │
        │        positive training data element │
        └──────────────────┬───────────────────┘
                           ▼
        ┌──────────────────────────────────────┐   2762
        │ Associate request, word pieces, and random content │
        │      items as negative training data element │
        └──────────────────┬───────────────────┘
                           ▼
        ┌──────────────────────────────────────┐   2764
        │              Next request             │
        └──────────────────┬───────────────────┘
                           ▼
                    ┌─────────────┐
                    │     End     │
                    └─────────────┘
```

# FIG. 27B

**FIG. 28**

2902

2904

Processor-
Executable
Instructions

2906

010110100010101
01010110101010
101101011100...

2908

Computer-Readable Medium

# FIG. 29

FIG. 30

Europäisches
Patentamt

European
Patent Office

Office européen
des brevets

# EUROPEAN SEARCH REPORT

**Application Number**

EP 25 17 9904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/171580 A1 (HIRSCH RONALD [US] ET AL) 15 June 2017 (2017-06-15) * paragraphs [0011], [0049] - [0053], [0067], [0100], [0138], [0139], [0174], [0186], [0254] - [0259]; figure 3 * | 1-15 | INV. G06F16/9035 |

-----

TECHNICAL FIELDS SEARCHED (IPC)

G06F

The present search report has been drawn up for all claims

| Place of search | Date of completion of the search | Examiner |
|---|---|---|
| The Hague | 17 September 2025 | Hackelbusch, Richard |

EPO FORM 1503 03.82 (P04C01)

## ANNEX TO THE EUROPEAN SEARCH REPORT
## ON EUROPEAN PATENT APPLICATION NO.

EP 25 17 9904

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2025

| Patent document cited in search report | Publication date | Patent family member(s) | Publication date |
|---|---|---|---|
| US 2017171580 A1 | 15-06-2017 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 49998423
- US 273939
- US 166415
- US 10118418